# EUROPÄISCHE PATENTSCHRIFT

(11) **EP 3 404 570 B1**
(45) Veröffentlichungstag und Bekanntmachung des Hinweises auf die Patenterteilung: **04.08.2021**
(21) Anmeldenummer: 18172571.4
(22) Anmeldetag: 16.05.2018
(51) Int. Cl.: G06F 21/31

(54) **VERFAHREN UND SYSTEM ZUR VERHALTENSBASIERTEN AUTHENTIFIZIERUNG**
METHOD AND SYSTEM FOR BEHAVIORAL AUTHENTICATION
PROCÉDÉ ET SYSTÈME D'AUTHENTIFICATION COMPORTEMENTALE

(30) Priorität: 16.05.2017 DE 102017208234
(43) Veröffentlichungstag der Anmeldung: 21.11.2018
(73) Patentinhaber: Bundesdruckerei GmbH, 10969 Berlin (DE)
(72) Erfinder: PAESCHKE, DR. Manfred, 16348 Wandlitz (DE); SCHNJAKIN, Dr. Maxim, 10245 Berlin (DE)
(74) Vertreter: Richardt Patentanwälte PartG mbB

(56) Entgegenhaltungen:
- WO-A1-2015/042456
- US-A1- 2014 289 833
- Arman Boehm ET AL: "SAFE: Secure Authentication with Face and Eyes", IEEE PRISMS 2013, 27. Juni 2013 (2013-06-27), XP055126132, Atlantic City DOI: 10.1109/PRISMS.2013.6927175 Gefunden im Internet: URL:http://www2.berkeley.intel-research.ne t/~hling/research/safeI3e.pdf [gefunden am 2014-07-01]

## Beschreibung

Die Erfindung betrifft ein Verfahren und ein System zur verhaltensbasierten Authentifizierung eines Nutzers mittels eines mobilen, tragbaren ersten Kommunikationssystems gegenüber einem zweiten Kommunikationssystem.

Mobile, tragbare Kommunikationssysteme sind fest im Alltag des Menschen integriert und nicht mehr wegzudenken. Um Zugriff auf ein solches System zu erlangen, muss sich ein Nutzer üblicherweise über eine persönliche Identifikationsnummer (PIN), ein Passwort oder gegebenenfalls einen Fingerabdruck authentifizieren. Angesichts der Vielzahl an PIN-gesicherten Geräten und Anwendungen, welche Nutzer alltäglich verwenden, und der damit verbundenen Vielzahl zu merkenden PINs kommt es leicht vor, dass ein Nutzer eine PIN vergisst. Passwörter, die frei wählbar sind, werden oft so gewählt, dass sie kurz und leicht zu merken sind, was jedoch den Nachteil hat, dass sie schnell zu erraten sind und somit nur ein geringes Maß an Sicherheit bieten. Passwörter, welche ein hohes Maß an Sicherheit bieten, sind demgegenüber oft lang und komplex, was es für den Nutzer schwierig macht, sie sich zu merken. Fingerabdrucksensoren haben den Nachteil, dass der Nutzer extra einen bestimmten Finger auf diesen platzieren muss. Hält er das mobile, tragbare Kommunikationssystem in der falschen Hand, kann der Fingerabdrucksensor den Nutzer oftmals bereits nicht mehr erkennen. Ferner gibt es zahlreiche Situationen, in denen ein Fingerabdrucksensor nicht richtig funktioniert, wie etwa falls der Nutzer schmutzige oder feuchte Finger hat, ganz zu schweigen davon, wenn der Nutzer Handschuhe trägt.

Verfahren zur Nutzerauthentifizierung mittels einem ersten Kommunikationssystem gegenüber einem zweiten Kommunikationssystem kommen überall dort zum Einsatz, wo ein Schlüssel, eine Schlüsselkarte oder ein ähnlicher Token zur Authentifizierung bzw. zur Zutrittskontrolle verwendet wird. Eine Bankkarte stellt beispielsweise ein erstes Kommunikationssystem dar, während ein zweites Kommunikationssystem in Form eines Bankautomaten bereitgestellt wird. Der Nutzer muss sich gegenüber dem Bankautomaten authentifizieren, indem er seine Bankkarte mit dem Automaten verbindet und seine PIN eingibt. Ist ein unberechtigter Nutzer im Besitz der Karte und kennt die PIN, so hat der unberechtigte Nutzer vollen Zugriff auf das Konto des Besitzers der Karte. Zum Erlangen eines solchen unberechtigten Zugriffs genügt es daher bereits, dass der unberechtigte Nutzer die PIN bei der Eingabe ausspäht und die Karte in seinen Besitz bringt.

Des Weiteren sind aus dem Stand der Technik Zugangskontrollen bekannt, bei denen sich ein Nutzer authentifizieren muss, um Einlass zu einem durch die Zugangskontrolle geschützten Bereich zu erlangen. Beispielsweise gibt der Nutzer eine PIN in ein dafür vorgesehenes Eingabemittel ein. Bei erfolgreicher Authentifizierung steuert die Zugangskontrolleinrichtung eine Tür oder ein Verriegelungsmittel an, um dem Nutzer den Zugang zu dem geschützten Bereich zu ermöglichen. Zum Erlangen eines unberechtigten Zugangs genügt es in diesem Fall bereits, dass ein unberechtigte Nutzer die PIN bei der Eingabe ausspäht.

Der Artikel "SAFE: Secure Authentication with Face and Eyes" von Arman Boehm et al., IEEE PRISMS 2013, Atlantic City, 27. Juni 2013 beschreibt ein Gesichtserkennungssystem, das eine Sicherheits-Challenge beinhaltet. Die Gesichtserkennungsmethode verwendet eine Blickerfassung zur Eingabe eines Geheimnisses. Während der Authentifizierung muss der Nutzer nicht nur sein Gesicht zeigen, sondern zudem auf ein geheimes Symbol blicken, welches sich über den Bildschirm bewegt.

Die WO 2015/042456 A1 beschreibt Vorrichtungen, Verfahren und nichttransitorische computerlesbare Medien zum Implementieren eines Multi-Faktor-Authentifizierungssystems. Das System verwendet drei Nutzeridentifikatoren. Nachdem ein erster Nutzeridentifikator verifiziert wurde, erhält das System einen zweiten Nutzeridentifikator von dem Nutzer. Wenn der zweite Nutzeridentifikator empfangen wird, erfasst das System automatisch einen dritten Nutzeridentifikator und verifiziert den zweiten und dritten Nutzeridentifikator gleichzeitig. Der zweite und dritte Nutzeridentifikator sind miteinander korreliert, und die Korrelation dieser zwei Identifikatoren wird ebenfalls verifiziert.

Die US 2014/0289833 A1 beschreibt ein Verfahren zur Durchführung fortgeschrittener Authentifizierungstechniken und zugehöriger Anwendungen. Das Verfahren umfasst: Empfangen einer Richtlinie, die einen Satz von akzeptablen Authentifizierungsfähigkeiten identifiziert, Bestimmen eines Satzes von ClientAuthentifizierungsfähigkeiten, und Filtern des Satzes akzeptabler Authentifizierungsfähigkeiten basierend auf dem bestimmten Satz von Clientauthentifizierungsfähigkeiten, um zu einem gefilterten Satz von einer oder mehreren Authentifizierungsfähigkeiten zum Authentifizieren eines Benutzers des Clients zu gelangen.

Der Erfindung liegt demgegenüber die Aufgabe zugrunde, ein verbessertes Verfahren zur Authentifizierung eines Nutzers zu ermöglichen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Die Erfindung schlägt ein Verfahren und ein System zur verhaltensbasierten Authentifikation eines Nutzers vor, welche eine Authentifizierung ohne PIN oder Passwort ermöglichen. Die Grundlage der Authentifizierung ist ein individuelles intrinsisches Verhalten des Nutzers, welches durch eine natürliche Verhaltensweise des Nutzers definiert ist. Die verhaltensbasierte Authentifikation ermöglicht es dem Nutzer dadurch Zugriff auf das zweite Kommunikationssystem zu erlangen, dass er sich so verhält wie er es gewohnt ist. Der Nutzer muss sich daher kein Passwort, keine PIN, keine spezielle Geste oder ähnliche Authentifizierungsmittel merken.

Bei einer verhaltensbasierten Authentifizierung eines Nutzers wird zwischen zwei Typen von Nutzern unterschieden. Einerseits ist der in dem System registrierte Nutzer derjenige Nutzer, den das System erkennen soll. Andererseits ist der aktuelle Nutzer derjenige Nutzer, der das System aktuell bedienen bzw. benutzen möchte, wofür er sich authentifizieren muss. Kann der aktuelle Nutzer mit dem in dem System registrierten Nutzer durch den Authentifizierungsprozess identifiziert werden, so wird dem aktuellen Nutzer der Zugriff auf das System oder Zutritt zu dem System gewährt. Stimmt der aktuelle Nutzer nicht mit dem in dem System registrierten Nutzer überein, so identifiziert das System den aktuellen Nutzer als eine andere, nicht nutzungsberechtigte Person und verweigert den Zugriff oder Zutritt. Im Folgenden wird mit "der Nutzer" der aktuelle Nutzer des Systems bezeichnet. Ist der in dem System registrierte Nutzer gemeint, ist dies explizit als "der registrierte Nutzer" gekennzeichnet.

Das erste Kommunikationssystem umfasst ferner eine erste Schnittstelle, um mit dem zweiten Kommunikationssystem zu kommunizieren. Das zweite Kommunikationssystem umfasst eine zweite Schnittstelle, um mit dem ersten Kommunikationssystem zu kommunizieren. Das erste Kommunikationssystem umfasst ferner einen ersten Sensor, welcher dazu konfiguriert ist, Daten zu erfassen, wobei die Daten verhaltensbasierte Daten des Nutzers umfassen. Das zweite Kommunikationssystem umfasst ferner einen zweiten Sensor, welcher dazu konfiguriert ist, Daten des Nutzers zu erfassen.

Ein mobiles, tragbares erstes Kommunikationssystem kann ein einzelnes eigenständiges Gerät oder mehrere mechanisch und/oder kommunikativ miteinander verbundene Geräte umfasst. Ein solches mobiles, tragbares Kommunikationssystem kann zum Beispiel umfassen: ein Smartphone, ein Tablet, einen Personal Digital Assistant, einen Pager, Smart-Glasses, eine Smartwatch, ein Navigationsgerät, einen Activity Tracker, ein Gerät zur Erfassung medizinischer Daten, insbesondere physiologischer Daten wie ein Pulsmessgerät oder ein Blutdruckmessgerät. Die verhaltensbasierte Authentifizierung lässt sich von allen mobilen und tragbaren Geräten und Systemen ausführen, die in der Lage sind, elektronisch Daten zu verarbeiten und mindestens einen Sensor zur Erfassung einer grobmotorischen Bewegung aufweisen.

Das zweite Kommunikationssystem umfasst ferner ein Klassifikationsmodul zur Authentifizierung des Nutzers auf der Grundlage eines Zwischenergebnisses, welches von dem ersten Kommunikationssystem an das zweite Kommunikationssystem gesendet wird.

Das zweite Kommunikationssystem kann als Computer, als Server, als Rechenzentrum oder als geeignete Anlage zur Datenverarbeitung ausgebildet sein. Über eine dritte Schnittstelle ist das zweite Kommunikationssystem mit einer Vorrichtung kommunikativ verbunden. Die Vorrichtung kann als Schließmechanismus, als Fahrzeug, als Aufbewahrungsmittel oder als Vorrichtung, die einer Authentifizierung bedarf, ausgebildet sein.

In einer Ausführungsform ist das zweite Kommunikationssystem als Steuereinheit einer Tür ausgebildet. Die Tür wird durch die Steuereinheit nur dann angesteuert, wenn sich ein Nutzer erfolgreich authentifiziert hat. In einer weiteren Ausführungsform umfasst das zweite Kommunikationsgerät eine Kontrollsteuerung eines Flugzeuges. Das Flugzeug lässt sich nur dann starten, wenn eine flugberechtigte Person sich gegenüber dem Flugzeug erfolgreich authentifizieren konnte. Informationen über die berechtigten Personen sind dabei in einem Speicher des Flugzeugs gespeichert.

In einer weiteren Ausführungsform tauschen das erste und das zweite Kommunikationssystem Identifikationsdaten untereinander aus, um die Effizienz der Kommunikation zu steigern bzw. um die Geschwindigkeit der Datenverarbeitung zu steigern. Identifikationsdaten des ersten Kommunikationssystems ermöglichen beispielsweise eine Identifikation des ersten Kommunikationssystems und damit eine Zuordnung des ersten Kommunikationssystem zu einem registrierten Nutzer. Aus den Identifikationsdaten kann das zweite Kommunikationssystem somit ableiten, für welchen Nutzer das erste Zwischenergebnis der verhaltensbasierten Authentifizierung von dem ersten Kommunikationssystem bereitgestellt wird.

Das Verfahren zur Authentifizierung eines aktuellen Nutzers eines ersten Kommunikationssystems gegenüber einem zweiten Kommunikationssystem mittels einer verhaltensbasierten Authentifizierung umfasst das Empfangen eines ersten Zwischenergebnisses der verhaltensbasierten Authentifizierung von dem ersten Kommunikationssystem durch das zweite Kommunikationssystem über die erste Schnittstelle und die zweite Schnittstelle, wobei das erste Zwischenergebnis durch das erste Kommunikationssystem, unter Verwendung der durch das erste Kommunikationssystem erfassten verhaltensbasierten Daten, generiert wurde. Das Verfahren umfasst ferner ein Generieren eines Klassifikationsergebnisses durch das zweite Kommunikationssystem aus dem ersten Zwischenergebnis und einem zweiten Zwischenergebnis, welches durch das zweite Kommunikationssystem unter Verwendung der durch das zweite Kommunikationssystem erfassten Daten generiert wurde. Das Verfahren umfasst ferner ein Auswerten des Klassifikationsergebnisses gemäß einem vorgegebenen Prüfungskriterium durch das zweite Kommunikationssystem. Das Verfahren umfasst ferner ein Ansteuern der Vorrichtung mittels eines Steuersignals durch das zweite Kommunikationssystem über die dritte Schnittstelle in Abhängigkeit davon, ob das Klassifikationsergebnis das Prüfungskriterium erfüllt. Erfüllt das Klassifikationsergebnis das Prüfungskriterium so hat sich der Nutzer erfolgreich authentifiziert.

Durch das Verwenden zweier Kommunikationssysteme ergibt sich in vorteilhafter Weise eine Erhöhung der Sicherheit für das Verfahren. Das erste Kommunikationssystem wird in der Regel von dem Nutzer mitgeführt. Da sich der Nutzer gegenüber dem zweiten Kommunikationssystem über sein Verhalten authentifiziert, existieren keine Passwörter oder PINs, welche ein Spion ausspähen könnte. Das zweite Kommunikationssystem kann durch höheren Sicherheitsmaßnahmen geschützt werden, da es in der Regel unbeweglich ist. Beispielsweise könnte Wachpersonal und/oder ein Kamerasystem das zweite Kommunikationssystem vor einer Manipulation schützen. Das zweite Kommunikationssystem stellt durch eine gegenüber dem ersten Kommunikationssystem eigenständige Sensorik und sein eigenes Klassifikationsmodul ferner eine von dem ersten Kommunikationssystem unabhängige Prüfinstanz dar.

Durch das Auswerten der von dem ersten und/oder zweiten Kommunikationssystem erfassten Daten durch das zweite Kommunikationssystem ergibt sich in vorteilhafter Weise eine erhöhte Sicherheit des Authentifikationsverfahrens. Da das erste Kommunikationssystem ständig von dem Nutzer mitgeführt wird, ist das erste Kommunikationssystem einem erhöhten Risiko der Manipulation, insbesondere der Manipulation der Datenverarbeitung des Klassifikationsmoduls, ausgesetzt. Das zweite Kommunikationssystem hingegen kann einen erhöhten Schutz gegenüber der Manipulation aufweisen, da es nicht mobil und nicht tragbar ausgebildet sein muss. Dadurch ist das zweite Kommunikationssystem leichter zu schützen oder zu überwachen, zum Beispiel durch eine Überwachungsanlage oder Wachpersonal.

Das zweite Kommunikationssystem umfasst nach einer Ausführungsform ein Sicherheitsmodul, über welches das erste Kommunikationssystem mit dem zweiten Kommunikationssystem kommuniziert. Die Kommunikation über das Sicherheitsmodul ist eine kryptographisch gesicherte Kommunikation, wobei die dafür notwendigen Daten in einem kryptographisch geschützten Speicherbereich des Sicherheitsmoduls gespeichert sein können.

Die Sicherheit des Authentifikationsverfahrens ist deshalb erhöht, da die Manipulation der Datenverarbeitung des zweiten Kommunikationssystems schwieriger ist als die Manipulation der Datenverarbeitung des ersten Kommunikationssystems.

Die erste Schnittstelle, die zweite Schnittstelle und/oder die dritte Schnittstelle umfassen eine Drahtloskommunikationsschnittstelle. Das erste Kommunikationssystem und das zweite Kommunikationssystem sind mittels der ersten und zweiten Schnittstelle in der Lage über eine Drahtloskommunikation, wie zum Beispiel Radiofrequenzidentifikation (RFID), Nahfeldkommunikation (NFC), WLAN, Bluetooth oder Funk, miteinander zu kommunizieren. Die dritte Schnittstelle kann ferner als eine nicht drahtlose Schnittstelle ausgebildet sein. Die dritte Schnittstelle kann neben den oben genannten Drahtloskommunikationsvarianten beispielsweise eine Schnittstelle für ein Kabel oder eine Leiterbahn umfassen. Ist das zweite Kommunikationssystem in der Vorrichtung integriert oder umgekehrt, so kann eine Leiterbahn besonders vorteilhaft sein, da sie platzsparend und weniger fehleranfällig als ein Kabel ist.

Nach Ausführungsformen der Erfindung umfasst das erste Zwischenergebnis die durch das erste Kommunikationssystem erfassten Daten. Die Auswertung der erfassten Daten für die Generierung des Klassifikationsergebnisses erfolgt durch das zweite Kommunikationssystem. Nach einer weiteren Ausführungsform umfasst das erste Zwischenergebnis ausschließlich die durch das erste Kommunikationssystem erfassten Daten.

In einer weiteren Ausführungsform der Erfindung umfasst das erste Zwischenergebnis einen ersten Wert für eine Wahrscheinlichkeit, dass der aktuelle Nutzer ein in dem ersten Kommunikationssystem registrierter Nutzer ist. Ferner umfasst gemäß einer Ausführungsform das zweite Zwischenergebnis einen zweiten Wert für eine Wahrscheinlichkeit, dass der aktuelle Nutzer ein in dem zweiten Kommunikationssystem registrierter Nutzer ist.

In einer weiteren Ausführungsform der Erfindung umfasst das Generieren des Klassifikationsergebnisses ein Bilden eines Mittelwertes aus dem ersten Zwischenergebnis und dem zweiten Zwischenergebnis.

Durch das Bilden eines Mittelwertes aus dem ersten Zwischenergebnis und dem zweiten Zwischenergebnis vereinfacht sich die Datenverarbeitung, welche das Generieren des Klassifikationsergebnisses umfasst.

In einer weiteren Ausführungsform sind bei der Bildung des Mittelwerts das erste Zwischenergebnis und das zweite Zwischenergebnis jeweils mit einem Gewichtungsfaktor versehen.

Durch das Versehen des ersten Zwischenergebnisses und des zweiten Zwischenergebnisses mit einem Gewichtungsfaktor ergibt sich in vorteilhafter Weise eine erhöhte Sicherheit des Authentifikationsverfahrens. Durch die Gewichtung kann das erste Zwischenergebnis und das zweite Zwischenergebnis an die Sicherheitsbestimmungen der entsprechenden Ausführungsform angepasst werden. Ist beispielsweise das zweite Kommunikationssystem durch ein Kamerasystem gesichert, wird vom Wachpersonal geschützt und/oder befindet sich auf gesichertem Gelände kann dem zweiten Zwischenergebnis ein höheres Gewicht zugewiesen werden, da dem zweiten Kommunikationssystem eine höhere Sicherheit zugeordnet ist als dem ersten Kommunikationssystem.

In einer weiteren Ausführungsform kommunizieren das erste Kommunikationssystem und das zweite Kommunikationssystem über eine kryptografisch gesicherte Drahtlosverbindung. Die kryptografische Sicherung kann das Verwenden eines asymmetrischen Verschlüsselungsverfahrens, eines symmetrischen Verschlüsselungsverfahrens, eines hybriden Verschlüsselungsverfahrens und/oder das Austauschen von Zertifikaten umfassen.

Durch das Verwenden einer kryptografisch gesicherten Drahtlosverbindung ergibt sich in vorteilhafter Weise eine erhöhte Sicherheit des gesamten Authentifizierungsverfahrens.

In einer weiteren Ausführungsform umfasst das Verfahren das Senden eines Authentifizierungssignals an das erste Kommunikationssystem durch das zweite Kommunikationssystem aufgrund einer erfolgreichen oder nicht erfolgreichen Authentifizierung.

Ist die Authentifizierung nicht erfolgreich wird nach Ausführungsformen der Grund des Misserfolges ermittelt. Liegt eine fehlerhafte Authentifizierung vor, beispielsweise aufgrund einer abgebrochenen Kommunikationsverbindung zwischen dem ersten und zweiten Kommunikationssystem, so versucht das zweite Kommunikationssystem das Problem zu beheben, zum Beispiel indem es die Verbindung wiederherstellt. Ist der Misserfolg allerdings darauf zurückzuführen, dass das Klassifikationsergebnis das Prüfungsergebnis nicht erfüllt hat, zum Beispiel weil eine unberechtigte Person versucht hat sich zu authentifizieren, so kann das Wachpersonal verständigt, ein Alarm ausgelöst und/oder das zweite Kommunikationssystem gesperrt werden.

Durch das Senden eines Authentifizierungssignals ergibt sich in vorteilhafter Weise, dass das Klassifikationsmodul des ersten Kommunikationssystems aufgrund einer erfolgreichen Authentifizierung gegenüber dem zweiten Kommunikationssystem trainiert werden kann. Das erste Kommunikationssystem speichert die erfassten Daten, um diese für einen Vergleich mit neuen Daten eines nächsten Authentifizierungsversuchs zu verwenden. Dazu muss das erste Kommunikationssystem jedoch die Information eines Erfolges der Authentifizierung erhalten, aus welcher sich ergibt, dass die erfassten Daten auch tatsächlich dem registrierten Nutzer zuzuordnen sind.

In einer weiteren Ausführungsform weisen das erste Kommunikationssystem und das zweite Kommunikationssystem jeweils einen Prozessor und einen internen Speicher auf. Ferner weist das erste Kommunikationssystem und/oder das zweite Kommunikationssystem ein Grobmotorikklassifikationsmodul auf. Eine grobmotorische Bewegung des aktuellen Nutzers wird durch den ersten und/oder zweiten Sensor als Daten erfasst. Das Grobmotorikklassifikationsmodul ist zu Erkennung eines generischen grobmotorischen Bewegungsmusters mithilfe von Trainingsdatensätzen und einer Nutzerkohorte trainiert, wobei das Grobmotorikklassifikationsmodul durch den Prozessor des ersten und/oder zweiten Kommunikationssystems ausgeführt wird.

Viele mobile, tragbare Kommunikationssysteme, wie Smartphones, sind heute ohnehin mit Sensoren ausgestattet, welche eine Lage des Geräts im Raum erfassen können, wodurch sich zum Beispiel die Anzeige auf dem Bildschirm in die richtige Position relativ zur räumlichen Orientierung des Geräts drehen kann. Ein solcher Sensor ist üblicherweise ein Beschleunigungssensor, ein Gyroskop oder eine Kombination aus beiden. Es ist nicht nur möglich, mit diesem Sensor die Raumlage des mobilen, tragbaren Kommunikationssystems, sondern auch eine grobmotorische Bewegung des Nutzers zu erfassen, wodurch der Sensor als Bewegungssensor verwendet werden kann.

Eine grobmotorische Bewegung bezeichnet dabei alle Bewegungsfertigkeiten, die ein Mensch mit seinen Gliedmaßen, seinem Rumpf und seinem Kopf erlernen kann. Dabei werden Hauptmuskelgruppen beansprucht. Fertigkeiten der Grobmotorik sind zum Beispiel Gehen, Joggen, Rennen, Hüpfen, Fahrradfahren oder Autofahren. Auch das Bewegen des Armes, um eine Verrichtung, wie beispielsweise ein Heben eines Glases zum Trinken oder Essen, auszuführen, kann ebenso wie eine Armbewegung, um ein Mobiltelefon aus der Tasche zu ziehen, als grobmotorische Bewegung aufgefasst werden. Demgegenüber gilt ein Greifen einer Tasse als feinmotorische Bewegung, da die Bewegung zum Greifen mit den Fingern ausgeführt wird und feinere Muskelgruppen beansprucht. Dabei kann eine grobmotorische Bewegung insbesondere auch eine Hüftbewegung des Nutzers umfassen.

Ein jeder Mensch führt diese grobmotorischen Bewegungen auf seine eigene Art und Weise aus. Somit kann einem bestimmten Nutzer eines mobilen, tragbaren Kommunikationssystems ein ganz bestimmtes, charakteristisches grobmotorisches Bewegungsprofil zugeordnet werden. Anhand dieses Bewegungsprofils ist der Nutzer identifizierbar. Die durch den Bewegungssensor erfassten Daten werden einem solchen Bewegungsprofil zugeordnet. Das mobile, tragbare erste Kommunikationssystem ist ferner mit einem Klassifikationsmodul ausgestattet, welches dazu trainiert ist, das Bewegungsmuster des Nutzers zu erkennen.

Trainieren umfasst in diesem Kontext, dass das Klassifikationsmodul durch Auswertung von Trainingsdatensätzen einerseits die Fähigkeit erlangt generische und andererseits nutzerindividuelle Bewegungsmuster zu erkennen. Ein Training zum Erkennen eines generischen Bewegungsmusters umfasst beispielsweise eine Auswertung mehrerer Trainingsdatensätze einer Nutzerkohorte, wobei jeder der Trainingsdatensätze jeweils einem der Nutzer der Nutzerkohorte zugeordnet ist und Daten zu einer für alle Nutzer der Nutzerkohorte identischen Bewegungsart umfasst. Durch die Auswertung wird ein für die identische Bewegungsart aller Nutzer gemeinsames generisches Bewegungsmuster identifiziert und zum zukünftigen Erkennen extrahiert. Ein Training zum Erkennen eines nutzerindividuellen Bewegungsmusters umfasst beispielsweise eine Auswertung von Bewegungsdaten eines individuellen Nutzers, wobei die Bewegungsdaten Daten zu einer bestimmten Bewegungsart umfassen. Durch die Auswertung wird ein für die entsprechende Bewegungsart nutzerindividuelles Bewegungsmuster identifiziert und zum zukünftigen Erkennen nutzerindividueller Bewegungsmuster extrahiert. Diese Auswertung erfolgt unter Verwendung eines generischen Bewegungsmusters für die bestimmte Bewegungsart, welche zuvor ebenfalls trainiert wurde.

Beispielhaft könnte ein mobiles, tragbares erstes Kommunikationssystem ein Smartphone und eine Smartwatch umfassen, wobei das Smartphone einen Sensor zur Erfassung der grobmotorischen Bewegung des Gehens aufweist und die Smartwatch den Puls und den Blutdruck des Nutzers misst. Anhand eines Vergleichs der Daten des Nutzers und des registrierten Nutzers kann ein Nutzer als der registrierte Nutzer identifiziert werden oder nicht. Ein solches mobiles, tragbares Kommunikationssystem weist zur Ausführung der verhaltensbasierten Authentifizierung eines Nutzers mindestens einen Sensor zur Erfassung von Daten einer grobmotorischen Bewegung des Nutzers, ein Grobmotorikklassifikationsmodul, ein Betriebssystem, einen Prozessor und einen internen Speicher auf. Der Sensor zur Erfassung der Daten ist dazu konzipiert, eine grobmotorische Bewegung des Nutzers zu erfassen. Das Grobmotorikklassifikationsmodul ist für die Klassifikation der Daten konfiguriert, auf das Erkennen der grobmotorischen Bewegungen des Nutzers trainiert, implementiert ein Maschinenlernverfahren und wird durch den Prozessor des mobilen, tragbaren Kommunikationssystems ausgeführt, wobei das Betriebssystem dazu in der Lage ist, den Zugriff auf das mobile, tragbare Kommunikationssystem aufgrund des Erfolgs der Authentifizierung zu steuern.

Das durch das Grobmotorikklassifikationsmodul implementierte Maschinenlernverfahren bezeichnet ein Verfahren, mit dem das Grobmotorikklassifikationsmodul in der Lage ist, sich an den Nutzer des mobilen, tragbaren Kommunikationssystems anzupassen. Anpassen bezeichnet in diesem Sinne das Justieren und gegebenenfalls Neukonfigurieren von Klassifikationsparametern, anhand derer der Nutzer korrekt identifiziert werden kann. Das Maschinenlernverfahren ist nicht beschränkt auf einen bestimmten Algorithmus. Gemäß Ausführungsformen der Erfindung ist das Maschinenlernverfahren ein speziell für das maschinelle Lernen entwickelte Algorithmus, wie zum Beispiel, ohne darauf beschränkt zu sein, eine dichtenbasierte multidimensionale Ausreißererkennung (Englisch: "local outlieyer detection"), ein Random-Forrest-Algorithmus, ein neuronales Netz, eine Support-Vektor-Maschine, ein Naive-Bayes-Klassifikator oder eine Rückkopplung ähnlich der Rückkopplung eines linearen oder nichtlinearen Reglers.

Die verhaltensbasierte Authentifizierung weist dabei die folgenden Schritte auf:
a) Wiederholtes Ausführen der folgenden Schritte:
   i. Erfassen der Daten durch den ersten und/oder zweiten Sensor, wobei die Daten die Bewegungsdaten der grobmotorischen Bewegung des aktuellen Nutzers sind,
   ii. Eingabe der Daten in das Grobmotorikklassifikationsmodul,
   iii. Generieren mindestens eines ersten Konfidenzwertes durch das Grobmotorikklassifikationsmodul,
   iv. Speichern des mindestens einen ersten Konfidenzwertes in dem Speicher des ersten und/oder zweiten Kommunikationssystems,
b) Zugreifen auf den Speicher des ersten und/oder zweiten Kommunikationssystems, um mindestens einen der gespeicherten ersten Konfidenzwerte aus dem Speicher auszulesen.

Durch das wiederholte Ausführen der Schritte in a) werden kontinuierlich Konfidenzwerte generiert und in dem Speicher des ersten und/oder zweiten Kommunikationssystems gespeichert. In einem zweiten Abschnitt der verhaltensbasierten Authentifizierung reagiert beispielsweise das zweite Kommunikationssystem auf eine Authentifizierungsanfrage des ersten Kommunikationssystems oder das erste Kommunikationssystem reagiert auf eine Authentifizierungsanfrage des zweiten Kommunikationssystems. Auf die Authentifizierungsanfrage hin greift der Prozessor des ersten und/oder zweiten Kommunikationssystems auf den Speicher zu und liest mindestens einen ersten Konfidenzwert aus. Der mindestens eine erste Konfidenzwert wird dann verwendet, um ein Klassifikationsergebnis zu generieren. Dieses wird durch das zweite Kommunikationssystem gegen ein bestimmtes, vordefiniertes Prüfungskriterium geprüft. Erfüllt das Klassifikationsergebnis das Prüfungskriterium, so wird gemäß einer Ausführungsform der Erfindung ein Signal erzeugt, wobei das Signal die Information eines Erfolges der Authentifizierung des Nutzers umfasst. Wird das Prüfungskriterium durch das Klassifikationsergebnis nicht erfüllt, so wird dem Nutzer kein Zugriff auf das zweite Kommunikationssystem gewährt.

In einer Ausführungsform umfasst das zweite Kommunikationssystem eine Steuereinheit eines Schließmechanismus. Eine Authentifizierung eines Nutzers ist nur dann erforderlich, sollte der Nutzer den Schließmechanismus öffnen wollen. Alternativ kann ein Schließmechanismus grundsätzlich geöffnet sein, solange erfolgreich authentifizierte Nutzer zugreifen. Erst bei einer nicht-erfolgreichen Authentifizierung wird der Schließmechanismus angesteuert und verschließt eine Vorrichtung.

In einer weiteren Ausführungsform umfasst das zweite Kommunikationssystem ein Steuermodul eines Computers. Der Nutzer authentifiziert sich nicht nur bei einem Anmelde-Prozess, sondern das zweite Kommunikationssystem erfasst weiterhin Daten des Nutzers, beispielsweise über sein Tippverhalten an einer Tastatur, und authentifiziert ihn im Hintergrund in regelmäßigen Abständen neu. Verlässt der Nutzer den Computer, ohne sich abzumelden und ein unberechtigter Nutzer versucht das zweite Kommunikationssystem zu nutzen, so registriert das zweite Kommunikationssystem eine Änderung des Verhaltens und sperrt sich.

Gemäß einer Ausführungsform der Erfindung werden die Daten durch den mindestens einen Sensor, insbesondere des ersten Kommunikationssystems, als Datenstrom (Stream) erfasst.

Durch die Erfassung der Daten als Stream ergibt sich vorteilhafterweise eine maximal sensible Einteilung der Konfidenzwerte pro Zeiteinheit. Es werden kontinuierlich Daten erfasst, welche kontinuierlich zu ersten Konfidenzwerten verarbeitet werden. Kontinuierlich bedeutet in diesem Zusammenhang, dass die Daten so oft erfasst werden, wie es der Takt des Prozessors und/oder des Sensors lassen. Durch die kontinuierlich zur Verfügung stehenden Konfidenzwerte kann jederzeit ein Klassifikationsergebnis aus den zeitnah generierten Konfidenzwerten generiert werden. Das erste und/oder zweite Kommunikationssystem muss dabei nicht erst warten bis ein vorbestimmtes Messintervall abgelaufen und aktuelle Daten verarbeitet wurden. Ferner werden, sofern sich der Nutzer bewegt, kontinuierlich neue, erste Konfidenzwerte generiert, sodass bei einer Authentifizierungsanfrage aktuelle erste Konfidenzwerte zur Verfügung stehen.

In einer weiteren Ausführungsform umfasst das erste Kommunikationssystem und/oder das zweite Kommunikationssystem ein Anwendungsverhaltensklassifikationsmodul. Das Anwendungsverhaltensklassifikationsmodul wird von dem Prozessor des ersten Kommunikationssystems und/oder des zweiten Kommunikationssystems ausgeführt. Die verhaltensbasierte Authentifizierung umfasst ferner:
a) wiederholtes Ausführen der folgenden Schritte:
   i. Erfassen von Daten als Anwendungsdaten, wobei die Anwendungsdaten ein Anwendungsnutzungsverhalten des aktuellen Nutzers umfassen,
   ii. Eingabe der Anwendungsdaten in das Anwendungsverhaltensklassifikationsmodul,
   iii. Generieren mindestens eines zweiten Konfidenzwertes durch das Anwendungsverhaltensklassifikationsmodul,
   iv. Speichern des mindestens einen zweiten Konfidenzwertes im Speicher des ersten Kommunikationssystems und/oder des zweiten Kommunikationssystems,
b) Zugreifen auf den Speicher des ersten Kommunikationssystems und/oder des zweiten Kommunikationssystems, um mindestens einen der gespeicherten zweiten Konfidenzwerte aus dem Speicher auszulesen. Für die Generierung des Klassifikationsergebnisses wird der mindestens eine zweite Konfidenzwert verwendet.

Die Anwendungsdaten können beispielsweise die folgenden Datentypen umfassen:
- Positionsdaten des ersten Kommunikationssystems
- Anwendungsnutzungsdaten des Nutzers
- biometrische Daten des Nutzers
- Verbindungsdaten des ersten Kommunikationssystems
- Kalender- und Uhrzeitdaten

Die Positionsdaten des ersten Kommunikationssystems werden durch ein Verfahren zur Positionsbestimmung durch einen Positionssensor des ersten Kommunikationssystems erfasst. Ein solches Verfahren kann zum Beispiel ein Erfassen eines GPS-Signals oder einer triangulierten Position aus WLAN-Verbindungsdaten oder Verbindungsdaten eines sonstigen Funknetzes umfassen, welches Funkzellen aufweist, wie etwa ein Mobilfunknetz.

Durch das Verwenden der Positionsdaten zur verhaltensbasierten Authentifikation des Nutzers ergibt sich in vorteilhafter Weise, dass ein regelmäßiger Aufenthaltsort des Nutzers (zum Beispiel Zuhause, bei der Arbeit oder an anderen Orten, die er regelmäßig aufsucht) erfasst wird. Ein unberechtigter Nutzer, insbesondere ein Dieb, der das mobile, tragbare erste Kommunikationssystem benutzt, wird sich in der Regel nicht an den Orten aufhalten, welche der registrierte Nutzer regelmäßig aufsucht. Dadurch ist das erste und/oder zweite Kommunikationssystem in der Lage zu erkennen, ob der Nutzer der registrierte Nutzer ist. Damit können die Positionsdaten zur Verbesserung der verhaltensbasierten Authentifikation beitragen.

Insbesondere die Erfassung der Positionsdaten über einen längeren Zeitraum hinweg steigert die Sicherheit des Systems, da der Dieb viele der regelmäßig aufgesuchten Orte des Nutzers kennen und sich zusätzlich über längere Zeit an diesen aufhalten muss, um sich erfolgreich gegenüber dem zweiten Kommunikationssystem authentifizieren zu können.

Die Anwendungsdaten umfassen ein Anwendungsnutzungsverhalten des Nutzers, wobei das Anwendungsnutzungsverhalten Informationen umfasst, welche beschreiben, wann welche Anwendungen von einem Nutzer auf dem ersten Kommunikationssystem gestartet und/oder ausgeführt werden. So kann zum Beispiel erfasst werden, wann bzw. wie oft der Nutzer unter Verwendung welcher Anwendung Radio hört und/oder welchen Radiosender er hört, Nachrichten liest oder seine Kamera bedient. Insbesondere im Alltag oft verwendete Anwendungen können ein nutzerspezifisches Anwendungsnutzungsprofil ergeben, anhand dessen der Nutzer identifiziert werden kann.

Durch das Miteinbeziehen des Anwendungsnutzungsverhaltens des Nutzers in das verhaltensbasierte Authentifizierungsverfahren steigt die Sicherheit des Verfahrens, da ein unberechtigter Nutzer, insbesondere ein Dieb, welcher das erste Kommunikationssystem gestohlen hat, auch das Anwendungsnutzungsverhalten des Nutzers imitieren müsste, um Zugriff auf das zweite Kommunikationssystem zu erlangen.

Die biometrischen Daten können durch einen Sensor zur Erfassung von biometrischen Daten erfasst werden. Dabei können die biometrischen Daten unter anderem die Maße des Gesichts, die Fingerform, die Ohrmuschelform, das Retina- oder Irismuster, der Fingerabdruck eines Fingers oder physiologische Daten, wie zum Beispiel der Blutdruck oder der Puls des Nutzers, insbesondere bei spezifischen Aktivitäten wie dem Laufen, oder das Gewicht sein. In einer Ausführungsform der Erfindung können die biometrischen Daten, insbesondere die Maße des Gesichts, das Iris- und/oder Retinamuster und die Ohrmuschelform, erfasst werden, wenn der Nutzer ohnehin sein erstes Kommunikationssystem benutzt und/oder sich authentifizieren möchte. In dem Moment, in dem der Nutzer sein erstes Kommunikationssystem benutzt und/oder er sich authentifizieren möchte, kann je nach ausgeführter Anwendung davon ausgegangen werden, dass der Nutzer auf dem Bildschirm des ersten Kommunikationssystems schaut. Dies ist beispielsweise kurz vor der Nutzung einer Chat- oder Nachrichtenanwendung der Fall. Da handelsübliche Smartphones und andere Systeme mit Kameras ausgestattet sind, welche auf der Seite des Bildschirms auf dem ersten Kommunikationssystem positioniert sind, ist es möglich, dass eine Hintergrundanwendung des ersten Kommunikationssystems ein Foto des Nutzers aufnimmt, während er das erste Kommunikationssystem benutzt. Dieses Foto kann ausgelesen und somit können die biometrischen Daten des Nutzers erfasst werden. Sollte der Nutzer auf das erste Kommunikationssystem zugreifen, wird ein Foto erstellt oder es werden ein oder mehrere zuletzt gespeicherten Fotos herangezogen und die biometrischen Daten, welche aus dem erstellten Foto bzw. den gespeicherten Fotos errechnet werden, zur nächsten Authentifizierung verwendet.

In einer weiteren Ausführungsform umfasst das erste und/oder zweite Kommunikationssystem einen Drucksensor oder einen optischen Sensor zur Erfassung eines Pulsschlages, mit dem der Puls und der Blutdruck des Nutzers bestimmt werden können.

Durch die Verwendung eines direkt am Körper getragenen biometrischen Sensors, insbesondere einem biometrischen Sensor einer Smartwatch, etwa einem Drucksensor oder optischen Sensor, ergibt sich in vorteilhafter Weise, dass die biometrischen Daten ähnlich wie die Daten einer grobmotorischen Bewegung kontinuierlich erfassbar sind, da der Nutzer eine Smartwatch während des regulären Gebrauchs an seinem Handgelenk trägt.

In einer weiteren Ausführungsform umfasst das erste und/oder zweite Kommunikationssystem einen Sensor zur Erfassung eines Fingerabdrucks des Nutzers. In vorteilhaften Ausführungsformen ist der Sensor an Stellen des ersten Kommunikationssystems positioniert, an denen der Nutzer mit seinen Fingerspitzen das erste Kommunikationssystem festhält und/oder zur Steuerung von Funktionen regelmäßig berührt. Durch die Verwendung eines Fingerabdrucksensors, insbesondere an einer Stelle, an der sich während des regulären Gebrauchs die Fingerspitzen des Nutzers befinden, ergibt sich in vorteilhafter Weise, dass der Fingerabdruck, welcher für jeden Menschen einzigartig ist, als Identifikationsmerkmal des Nutzers zur Authentizitätsprüfung des Nutzers beiträgt und somit die Sicherheit des Verfahrens erhöht.

Durch die Verwendung der biometrischen Daten des Nutzers zur verhaltensbasierten Authentifizierung des Nutzers ergibt sich in vorteilhafter Weise, dass die Daten, welche zur Authentifizierung herangezogen werden, höchstpersönlich vom Nutzer abhängig sind. Insbesondere biometrische Daten bieten eine hohe Fälschungssicherheit, wodurch die Sicherheit des Authentifizierungsverfahrens gesteigert wird.

Die Verbindungsdaten des ersten Kommunikationssystems mit anderen Kommunikationsgeräten und -systemen, wie zum Beispiel Computern, kommunikationsfähigen Haushaltsgeräten, können dazu verwendet werden, ein typisches Verbindungsmuster des Nutzers aufzuzeigen. So können zum Beispiel einzelne Geräte über WLAN, Bluetooth, RFID, NFC oder ein Kabel mit dem ersten Kommunikationssystem verbunden werden. So kann für den Nutzer ein Verbindungsprofil angelegt werden, welches Informationen über die regelmäßigen Verbindungen des ersten Kommunikationssystems mit weiteren Geräten enthält. In einer Ausführungsform umfasst das Verbindungsprofil eine Häufigkeit einer Verbindung mit dem zweiten Kommunikationssystem.

Beispielsweise kann ein Nutzer das erste Kommunikationssystem mit dem privaten WLAN einer Wohnung oder einem öffentlichen WLAN verbinden. In einer weiteren Ausführungsform der Erfindung verbindet der Nutzer das erste Kommunikationssystem mit Haushaltsgeräten und/oder einem Computer über das Internet oder ein Intranet, wodurch sich ein nutzerspezifisches Verbindungsprofil ergibt. Dieses Verbindungsprofil kann beispielsweise, ohne darauf beschränkt zu sein, eine Verbindung zu einer Waschmaschine, einem Trockner, einem Kühlschrank oder ähnlichen Haushaltsgeräten, sowie Geräten eines Smart-Home-Systems, wie etwa Beleuchtung, Alarmanlage, Klimaanlage, Heizung, Audioanlagen, Video- bzw. Fernsehanlagen, und/oder einem PC umfassen, welche der Nutzer Zuhause über das Internet, ein Intranet oder individuelle Funkverbindungen ansteuert.

Durch die Verwendung der Verbindungsdaten des Nutzers zur verhaltensbasierten Authentifizierung des Nutzers ergibt sich in vorteilhafter Weise, dass ein unberechtigter Nutzer die Geräte kennen und gegebenenfalls Zugriff auf die Geräte besitzen muss, mit denen der registrierte Nutzer normalerweise das erste Kommunikationssystem verbindet.

Durch die Verwendung der Verbindungsdaten zur verhaltensbasierten Authentifikation eines Nutzers ergibt sich in vorteilhafter Weise, dass der aktuelle Nutzer, welcher zum Beispiel eine Smartwatch trägt, sich über das Tragen der Smartwatch authentifizieren kann. Somit fungiert die Smartwatch als eine Art Schlüssel, welche den Zugriff auf das zweite Kommunikationssystem freigibt. Ein Dieb, welcher das erste Kommunikationssystem gestohlen hat, müsste also auch die Smartwatch in seinen Besitz bringen, um Zugriff auf das zweite Kommunikationssystem zu erlangen.

Kalender- und/oder Uhrzeitdaten können durch eine im ersten und/oder zweiten Kommunikationssystem implementierte Uhr oder eine externe Uhr, deren Signal durch einen Sensor, insbesondere ein Funksignal durch einen Funksensor, des ersten und/oder zweiten Kommunikationssystems empfangen wird, erfasst werden. In einer weiteren Ausführungsform der Erfindung werden die Verbindungsdaten des ersten Kommunikationssystems mit anderen Geräten und/oder die Positionsdaten des ersten Kommunikationssystems mit den Kalender- und/oder Uhrzeitdaten korreliert.

Durch die Verwendung der Kalender- und/oder Uhrzeitdaten zur verhaltensbasierten Authentifizierung des Nutzers ergibt sich in vorteilhafter Weise, dass insbesondere durch die Kombination mit den vorherigen Anwendungen ein zeitspezifisches Anwendungsverhalten des Nutzers erstellt werden kann. So kann zum Beispiel erkannt werden, dass sich von Montag bis Freitag der Nutzer auf dem Weg zur Arbeit befindet und dabei einen bestimmten Radiosender hört und am Wochenende einen Spaziergang unternimmt und dabei ausgewählte Musik über eine Musikanwendung abspielt oder, dass der Nutzer jeden Abend zu einer festen Uhrzeit, beispielsweise um 20 Uhr, die Nachrichten über sein erstes Kommunikationssystem liest. Die Verwendung der Kalender- und/oder Uhrzeitdaten haben somit eine erhöhte Sicherheit des Verfahrens zufolge, indem sie zu einem zeitlich strukturierten Anwendungsnutzungsprofil des Nutzers beitragen, welches gegenüber einem zeitlich unstrukturierten Anwendungsnutzungsprofil schwerer zu imitieren ist.

In einer weiteren Ausführungsform wird der Abstand zwischen zwei oder mehreren Kommunikationsgeräten eines ersten Kommunikationssystems aufgrund der Signalstärke des Signals der Drahtlosverbindung zwischen den Geräten ermittelt. Ein solches Drahtlosverbindungssignal kann beispielsweise ein Bluetoothsignal, ein WLAN-Signal oder ein Funksignal sein. Der aus dem Drahtlosverbindungssignal ermittelte Abstand zwischen den Geräten kann gemäß dieser Ausführungsform als Teil der Anwendungsdaten erfasst werden und zur verhaltensbasierten Authentifizierung des Nutzers verwendet werden.

Das Erfassen des Abstandes zweier Geräte eines ersten Kommunikationssystems als Teil der Anwendungsdaten und das Verwenden des Abstandes zur verhaltensbasierten Authentifizierung des Nutzers ermöglichen die Erhöhung der Sicherheit des Verfahrens zur verhaltensbasierten Authentifizierung, da ein weiterer Parameter durch einen unberechtigten Nutzer gefälscht bzw. nachgeahmt werden müsste, um Zugriff auf das zweite Kommunikationssystem zu erlangen.

Nach Ausführungsformen der Erfindung wird der sich zeitlich variierende Abstand dazu verwendet, um ein grobmotorisches Bewegungsmuster des Nutzers zu erkennen.

Um die Anwendungsdaten zur verhaltensbasierten Authentifizierung des Nutzers zu verwenden, werden folgende Schritte ausgeführt:
- Erfassen der Anwendungsdaten,
- Eingabe der Anwendungsdaten in das Anwendungsverhaltensklassifikationsmodul,
- Generieren mindestens eines zweiten Konfidenzwertes durch das Anwendungsverhaltensklassifikationsmodul,
- Speichern des mindestens einen zweiten Konfidenzwertes in dem Speicher des ersten und/oder zweiten Kommunikationssystems.

Bei dem Generieren des Klassifikationsergebnisses wird nicht nur der mindestens eine erste Konfidenzwert, welcher auf den Daten des Sensors zur Erfassung grobmotorischer Bewegung beruht, verwendet, sondern auch der mindestens eine zweite Konfidenzwert, welcher sich aus den Anwendungsdaten des Nutzers ergibt.

In einer weiteren Ausführungsform der Erfindung umfasst das erste Kommunikationssystem und/oder das zweite Kommunikationssystem ein Feinmotorikklassifikationsmodul, welches dazu ausgebildet ist, eine feinmotorische Bewegung des Nutzers zu erfassen und einen Sensor zur Erfassung einer feinmotorischen Bewegung in Form von feinmotorischen Daten. Das Feinmotorikklassifikationsmodul ist für eine Klassifikation von Daten konfiguriert und auf ein Erkennen einer feinmotorischen Bewegung eines registrierten Nutzers trainiert, wobei das Feinmotorikklassifikationsmodul von dem Prozessor des ersten Kommunikationssystems und/oder des zweiten Kommunikationssystems ausgeführt wird. Die verhaltensbasierte Authentifizierung umfasst ferner:
a) Wiederholtes Ausführen der folgenden Schritte:
   i. Erfassen der Daten als feinmotorische Daten durch einen Sensor, wobei die feinmotorischen Daten die Bewegungsdaten einer feinmotorischen Bewegung des aktuellen Nutzers sind,
   ii. Eingabe der feinmotorischen Daten in das Feinmotorikklassifikationsmodul,
   iii. Generieren mindestens eines dritten Konfidenzwertes durch das Feinmotorikklassifikationsmodul,
   iv. Speichern des mindestens einen dritten Konfidenzwertes in dem Speicher des Kommunikationssystems,
b) Zugreifen auf den Speicher des ersten und/oder zweiten Kommunikationssystems, um mindestens einen der gespeicherten dritten Konfidenzwerte aus dem Speicher auszulesen.

Für die Generierung des Klassifikationsergebnisses wird auch der mindestens eine dritte Konfidenzwert verwendet.

Eine feinmotorische Bewegung ist eine Bewegung feiner Muskelgruppen, wie beispielsweise der Muskulatur der Finger. Feinmotorik bezeichnet gezielte und koordinierte Bewegung, beispielsweise von Hand- und/oder Fingermuskulatur, aber auch den Muskeln des Mundes, der Augen und des Gesichtes. Die feinmotorische Bewegung, welche durch einen feinmotorischen Sensor des mobilen, tragbaren ersten Kommunikationssystems und/oder des zweiten Kommunikationssystems erfasst wird, kann etwa eine bestimmte Bewegung der Finger umfassen.

Nach Ausführungsformen der Erfindung werden durch den Sensor zur Erfassung einer feinmotorischen Bewegung die Eingabegeschwindigkeit, der Eingabetakt und/oder die Eingabegenauigkeit des Nutzers erfasst, während er eine Eingabe in das erste und/oder zweite Kommunikationssystem tätigt. Eine solche Eingabe kann beispielsweise, ohne darauf beschränkt zu sein, das Tippen von Wörtern bzw. Wischen von Wörtern, das heißt einem zu tippen analogen Eingabeverfahren, bei welchem der oder die Finger bei Auswahl von Buchstaben den Kontakt zur Bildschirmoberfläche jedoch beibehält, auf einer virtuellen Tastatur, das Nachfahren von auf dem Bildschirm gezeigten geometrischen Figuren oder eine andere Bewegung, mit der der Nutzer eine Eingabe tätigt, umfassen. Ferner können feinmotorische Bewegungen Änderungen der Ausrichtung, wie etwa des Neigungswinkels des ersten Kommunikationssystems während der Nutzung umfassen.

Ein Sensor zur Erfassung einer feinmotorischen Bewegung kann beispielsweise als optisches System oder als ein Touchpad bzw. ein Touchscreen, insbesondere, jedoch ohne darauf beschränkt zu sein, ein resistiver Touchscreen, ein oberflächenkapazitiver Touchscreen, ein projiziert kapazitiver Touchscreen oder ein induktiver Touchscreen ausgebildet sein.

Beim Prüfen des Klassifikationsergebnisses gegen das Prüfungskriterium wird nicht nur der mindestens eine erste Konfidenzwert, welcher auf den Daten des Sensors zur Erfassung einer grobmotorischen Bewegung beruht, verwendet, sondern auch der mindestens eine dritte Konfidenzwert, welcher sich aus den feinmotorischen Daten des Nutzers ergibt. Durch das Verwenden einer feinmotorischen Bewegung eines Nutzers erhöht sich die Sicherheit der verhaltensbasierten Authentifizierung, da weitere Parameter nötig sind, um den Nutzer zu authentifizieren.

In einer weiteren Ausführungsform der Erfindung wird nach einem fehlgeschlagenen Authentifizierungsversuch der Nutzer dazu aufgefordert, eine Eingabe in das erste und/oder zweite Kommunikationssystem zu tätigen, um eine feinmotorische Bewegung des Nutzers erfassen zu können. Die Eingabe kann dabei beispielsweise ein Nachmalen einer bestimmten Figur auf den Bildschirm oder die Eingabe eines vordefinierten Wortes bzw. die Eingabe mehrerer Wörter umfassen. Die Wörter und/oder Muster können durch das System oder den Nutzer vordefiniert oder zufällig ausgewählt sein. Beispielsweise werden die entsprechenden Wörter und/oder Muster auf einem Bildschirm angezeigt.

Durch das Authentifizieren mittels einer feinmotorischen Bewegung im Falle einer fehlgeschlagenen Authentifizierung ergibt sich vorteilhafter Weise für den Nutzer die Möglichkeit sich trotz einer fehlgeschlagenen Authentifizierung zu authentifizieren ohne dabei auf eine PIN oder ein Passwort zurückgreifen zu müssen.

Aufgrund der Ähnlichkeit der Verarbeitungsstruktur der verschiedenen Daten gelten die folgenden Ausführungen für die grobmotorischen Daten, die feinmotorischen Daten und die Anwendungsdaten, das Grobmotorik-, Anwendungsverhaltens- und Feinmotorikklassifikationsmodul sowie den mindestens einen ersten, zweiten und dritten Konfidenzwert gleichermaßen. Ferner bezeichnet "Daten" im Folgenden die Daten des Sensors zur Erfassung einer grobmotorischen Bewegung, die Anwendungsdaten und/oder die Daten des Sensors zur Erfassung einer feinmotorischen Bewegung. Sind nur die Daten des Sensors zur Erfassung einer grobmotorischen Bewegung, die Anwendungsdaten oder die Daten einer feinmotorischen Bewegung gemeint, so ist dies explizit angegeben.

Ferner sind gemäß einer weiteren Ausführungsform das Grobmotorikklassifikationsmodul und/oder das Anwendungsverhaltensklassifikationsmodul und/oder das Feinmotorikklassifikationsmodul als ein Klassifikationsmodul ausgebildet, welches in der Lage ist, die Daten zu verarbeiten. Beispielsweise sind gemäß einer weiteren Ausführungsform das Grobmotorikklassifikationsmodul und/oder das Anwendungsverhaltensklassifikationsmodul und/oder das Feinmotorikklassifikationsmodul von ein und demselben Anwendungsprogramm umfasst, welche zu einer Ausführung der verhaltensbasierten Authentifizierung konfiguriert sind.

Das bzw. die Klassifikationsmodule, das heißt das Grobmotorikklassifikationsmodul und/oder das Anwendungsverhaltensklassifikationsmodul und/oder das Feinmotorikklassifikationsmodul, generieren nach Ausführungsformen der Erfindung ein gemeinsames Klassifikationsergebnis unter Verwendung von Konfidenzwerten, welche von dem oder den Klassifikationsmodulen jeweils für klassifikationsmodulspezifische Daten ermittelt wurden.

In einer weiteren Ausführungsform der Erfindung wird bei nicht erfolgreicher Prüfung des Klassifikationsergebnisses gegen das Prüfungskriterium ein Signal von dem zweiten Kommunikationssystem an das erste Kommunikationssystem oder an einen Operator des zweiten Kommunikationssystems gesendet, welches die Information der fehlgeschlagenen Authentifizierung umfasst. Ein solches Signal kann gemäß einer Ausführungsform der Erfindung auf die Information der fehlgeschlagenen Authentifizierung beschränkt sein. Gemäß weiterer Ausführungsformen kann das Signal die Information des Grundes des Fehlschlagens der Authentifizierung enthalten. Ein solcher Grund kann nach weiteren Ausführungsformen der Erfindung beispielsweise das Alter des aktuellen Konfidenzwertes, das Klassifikationsergebnis selbst oder einen anders gearteten Grund des Fehlschlagens umfassen. In einer Ausführungsform der Erfindung kann das Prüfungskriterium umfassen, dass der Konfidenzwert nicht älter als einige Minuten, einige Stunden, einen Tag oder eine Woche ist. In einer weiteren Ausführungsform der Erfindung kann das Prüfungskriterium umfassen, dass das Klassifikationsergebnis einen bestimmten Schwellenwert erreichen muss.

Durch das Senden eines Signals bei fehlgeschlagener Authentifizierung ergibt sich vorteilhafterweise, dass der Nutzer und/oder der Operator des zweiten Kommunikationssystems darüber informiert wird, dass die Authentifizierung des Nutzers fehlgeschlagen ist und sich dieser gezielt so verhalten kann, dass er Zugriff auf das zweite Kommunikationssystem erlangen kann. Beispielsweise zeigt das Signal an, dass die Gangart des Nutzers nicht erkannt wurde. Der Nutzer bemerkt das Signal und beginnt auf und ab zu gehen, bis das Prüfungskriterium erfüllt ist. Ein solches Signal kann dem Nutzer beispielsweise mittels einer Anzeige des ersten und/oder zweiten Kommunikationssystems angezeigt werden, akustisch über einen Lautsprecher des ersten und/oder zweiten Kommunikationssystems mitgeteilt werden oder mittels eines Vibrationsmusters, erzeugt durch einen Vibrationsmechanismus des ersten Kommunikationssystems, signalisiert werden.

In einer weiteren Ausführungsform umfasst die verhaltensbasierte Authentifizierung ferner das Trainieren des Klassifikationsmoduls mit den Daten des aktuellen Nutzers, wobei das Klassifikationsmodul auf das nutzerspezifische Verhalten des aktuellen Nutzers unter der Voraussetzung trainiert wird, dass gemäß dem Klassifikationsergebnis der aktuelle Nutzer der in dem ersten Kommunikationssystem und/oder dem zweiten Kommunikationssystem registrierte Nutzer ist.

In einer weiteren Ausführungsform der Erfindung ist in dem Speicher des ersten Kommunikationssystems und/oder des zweiten Kommunikationssystems mindestens ein Muster in Form einer Musterfunktion und mindestens ein Vergleichsdatensatz gespeichert, wobei der Vergleichsdatensatz Werte für mindestens einen Vergleichsparameter umfasst, wobei durch das jeweilige Klassifikationsmodul die folgenden Schritte ausgeführt werden:
a) Vergleich der erfassten Daten mit der mindestens einen Musterfunktion,
b) Zuordnen der Daten zu dem der Musterfunktion zugeordneten Muster und Erhalten von mindestens einem dem Muster entsprechenden Klassifikationsparameter, falls die Daten dem mindestens einen Muster zugeordnet werden können.

Das Generieren des mindestens einen Konfidenzwertes umfasst ferner ein Errechnen eines Konfidenzwertes für jeden Klassifikationsparameter durch einen Vergleich des mindestens einen Klassifikationsparameters mit dem jeweiligen Vergleichsparameter des Vergleichsdatensatzes. Ferner umfasst das Trainieren ein Hinzufügen der erfassten Daten zu dem Vergleichsdatensatz.

Die Vergleichsparameter werden erneut aus dem nun modifizierten Vergleichsdatensatz errechnet, um eine nächste Authentifizierung des Nutzers mit aktuellen Vergleichsparametern durchführen zu können. Durch das Hinzufügen der Daten zu dem entsprechenden Vergleichsdatensatz im Falle einer erfolgreichen Authentifizierung des Nutzers ergibt sich in vorteilhafter Weise ein rückgekoppeltes Trainieren des Klassifikationsmoduls. Der Vergleichsdatensatz und somit die Vergleichsparameter passen sich dem Verhalten des Nutzers an, wodurch das Verfahren gegenüber geringfügigen Verhaltensänderungen resistent wird bzw. sich diesem anpasst. Eine solche Verhaltensänderung kann beispielsweise durch eine Verletzung des Nutzers hervorgerufen werden, welche die Gangart oder das Schreibverhalten beeinflusst. Ein weiteres Beispiel für eine Verhaltensänderung stellt der dauerhafte Wechsel zu einem anderen Radiosender mittels einer Radioanwendung dar. Gefällt dem Nutzer beispielsweise das gesendete Programm seines bisher gehörten Senders nicht mehr, so sucht er sich einen neuen. Bei solchen und ähnlichen Verhaltensänderungen kann sich der Nutzer aufgrund des Speicherns der Daten in dem Speicher des ersten und/oder zweiten Kommunikationssystems und des Hinzufügens der Daten zu dem entsprechenden Vergleichsdatensatz auch weiterhin erfolgreich authentifizieren.

In einer weiteren Ausführungsform der Erfindung werden die Daten, welche Teil des jeweiligen Vergleichsdatensatzes sind, aus dem Speicher des ersten und/oder zweiten Kommunikationssystems gelöscht, wenn die Daten älter als eine festgelegte Zeit sind. Die festgelegte Zeit kann beispielsweise Tage, Wochen, Monate oder Jahre betragen. Wird durch das Löschen der Daten der Vergleichsdatensatz vollständig gelöscht, so wird gemäß einer weiteren Ausführungsform der Erfindung ein Signal erzeugt, welches dem Nutzer signalisiert, dass eine Authentifizierung über den gelöschten Vergleichsdatensatz nicht länger möglich ist, bis entsprechende Vergleichsdaten wieder vorhanden sind, das heißt ein neuer Vergleichsdatensatz generiert wurde. Vergleichsdaten für einen solchen neuen Vergleichsdatensatz können beispielsweise erfasst werden, indem sich der Nutzer nicht verhaltensbasiert authentifiziert, beispielsweise über eine PIN oder ein analoges Verfahren, und im Voraus oder im Nachhinein so verhält, dass neue Daten erfasst und in dem Speicher des ersten und/oder zweiten Kommunikationssystems gespeichert werden, womit die erfassten Daten einen neuen Vergleichsdatensatz bilden.

Durch das Löschen der Daten bei Erreichen eines festgelegten Alters der Daten ergibt sich in vorteilhafter Weise, dass sich der Vergleichsdatensatz und somit die Vergleichsparameter bei Verhaltensänderungen des Nutzers mit verändern können. Da sich das Verhalten des Nutzers, insbesondere über einen längeren Zeitraum von beispielsweise einem Jahr oder mehr, verändern kann, ist es für das Verfahren vorteilhaft, wenn sich die Vergleichsparameter mit dem Verhalten des Nutzers mitändern, d.h. möglicherweise veraltete Daten, welche nicht mehr das aktuelle Verhalten des Nutzers korrekt wiederzugeben vermögen, vorsorglich gelöscht werden. Das Löschen von Daten eines bestimmten Alters bewirkt somit, dass das Verhalten des Nutzers in der Vergangenheit, welches nicht notwendigerweise mit dem Verhalten des Nutzers in der Gegenwart übereinstimmen muss, keinen Einfluss auf die verhaltensbasierte Authentifizierung des Nutzers nimmt. Das Alter von Daten bemisst sich beispielsweise ab dem Zeitpunkt der Erfassung und/oder der Speicherung der Daten.

In einer weiteren Ausführungsform der Erfindung muss sich der Nutzer nach einer Erstinbetriebnahme des ersten Kommunikationssystems authentifizieren.

Eine Authentifikation nach einer Erstinbetriebnahme kann beispielsweise eine Eingabe eines Einmalpassworts bzw. einer Initialisierungs-PIN umfassen, welche einem berechtigten Nutzer beispielsweise im Zuge eines rechtmäßigen Erwerbs des ersten Kommunikationssystems zur Verfügung gestellt wird. Nach weiteren Ausführungsformen kann die Authentifikation nach einer Erstinbetriebnahme beispielsweise auch eine Eingabe bzw. ein Senden eines initialen Authentifizierungstokens in bzw. an das Kommunikationssystem umfassen. Das initiale Authentifizierungstoken kann beispielsweise von einem zentralen Authentifizierungsservice bereitgestellt werden, demgegenüber sich der Nutzer als berechtigter Nutzer authentifiziert hat.

Durch das Authentifizieren nach der Erstinbetriebnahme ergibt sich somit in vorteilhafter Weise, dass nur der berechtigte Nutzer das noch untrainierte System nutzen kann. Im Falle einer Erstinbetriebnahme erfolgt nach und/oder zusammen mit der zuvor genannten Authentifizierung des berechtigten Nutzers, falls diese erfolgreich ist, beispielsweise eine automatische Personalisierung des ersten Kommunikationssystems auf den berechtigten Nutzer. Im Zuge der Authentifizierung und/oder danach werden Daten für eine verhaltensbasierte Authentifizierung des berechtigten Nutzers erfasst und zu dem Vergleichsdatensatz hinzugefügt. Somit wird das Klassifikationsmodul auf den entsprechenden Nutzer trainiert, das heißt das erste Kommunikationssystem wird personalisiert. Schlägt die zuvor genannte Authentifizierung des berechtigten Nutzers fehl, so werden beispielsweise keine Daten erfasst oder erfasste Daten werden nicht zu dem Vergleichsdatensatz hinzugefügt.

In einer weiteren Ausführungsform der Erfindung muss der Nutzer das erste Kommunikationssystem nach der Erstinbetriebnahme personalisieren. Wird das erste Kommunikationssystem zum ersten Mal zur verhaltensbasierten Authentifizierung verwendet, sendet das erste Kommunikationssystem ein Signal an den Nutzer. Das Signal umfasst die Aufforderung zur Personalisierung des ersten Kommunikationssystems durch den Nutzer durch ein gezieltes bzw. nur vorgegebenes Verhalten, welches mindestens einen Vergleichsdatensatz generiert. Beispielsweise wird der Nutzer aufgefordert, mit dem ersten Kommunikationssystem zu laufen oder zu gehen.

Durch das Personalisieren des ersten Kommunikationssystems nach der Erstinbetriebnahme aufgrund eines entsprechenden Signals ergibt sich in vorteilhafter Weise, dass der Nutzer das Verfahren zur verhaltensbasierten Authentifizierung möglichst früh anwenden kann. Das Personalisieren nach der Erstinbetriebnahme umfasst dabei das Erfassen von Daten, um daraus den entsprechenden Vergleichsdatensatz aufzubauen.

In einer weiteren Ausführungsform wird das zweite Kommunikationssystem personalisiert, indem es einen Vergleichsdatensatz des Nutzers erfasst und/oder von dem ersten Kommunikationssystem in einem Initialisierungsprozess empfängt. Dieser Vergleichsdatensatz wird beispielsweise dem Nutzer und/oder den Identifikationsdaten des ersten Kommunikationssystems zugeordnet.

Nach einer Ausführungsform der Erfindung wird der mindestens eine zweite Konfidenzwert, welcher auf den Anwendungsdaten beruht, oder der mindestens eine dritte Konfidenzwert, welcher auf den feinmotorischen Daten beruht, nur dann bei der Generierung des Klassifikationsergebnisses verwendet, wenn in einem vorangegangenen Schritt das Grobmotorikklassifikationsmodul in den grobmotorischen Bewegungsdaten eine grobmotorische Bewegung des Nutzers erkannt hat. So werden beispielsweise Anwendungsnutzungsdaten eines Radios nur dann erfasst, wenn der Nutzer gerade am Gehen ist. In einer weiteren Ausführungsform der Erfindung kann ein Herausziehen des ersten Kommunikationssystems aus der Tasche erkannt werden, woraufhin beispielsweise ein Ausführen einer Nachrichtenanwendung als Teil des Anwendungsnutzungsprofils herangezogen wird.

Durch das Verwenden des mindestens einen zweiten Konfidenzwertes und/oder des mindestens einen dritten Konfidenzwertes in Kombination mit der erkannten grobmotorischen Bewegung des Nutzers ergibt sich in vorteilhafter Weise, dass die Klassifikation des Grobmotorikklassifikationsmoduls, welches die grobmotorischen Bewegungsdaten heranzieht, wesentlich genauer werden kann, da der mindestens eine zweite und/oder dritte Konfidenzwert auf Basis der Anwendungsdaten bzw. feinmotorischen Bewegungsdaten zur Verfeinerung des Klassifikationsergebnisses aufgrund des genaueren mindestens einen Konfidenzwertes der grobmotorischen Bewegungsdaten dienen kann.

In einer weiteren Ausführungsform der Erfindung werden die Konfidenzwerte, welche letztendlich aus den grob- und/oder feinmotorischen Daten und/oder den Anwendungsdaten resultieren, zu einem resultierenden Konfidenzwert zusammengefasst. Das Zusammenfassen kann beispielsweise, aber nicht zwangsweise, die Bildung eines Mittelwerts, eines Medians oder eines Modalwerts umfassen. Die Bildung des resultierenden Konfidenzwerts ermöglicht die Angabe der Wahrscheinlichkeit, mit der der aktuelle Nutzer der in dem ersten Kommunikationssystem oder der in dem zweiten Kommunikationssystem registrierte Nutzer ist.

Durch die Bildung eines resultierenden Konfidenzwertes und der Verwendung des resultierenden Konfidenzwertes zur verhaltensbasierten Authentifizierung des Nutzers kann sich in vorteilhafter Weise ergeben, dass nur ein einziger Zahlenwert nötig ist, um den Nutzer zu authentifizieren. Es werden keine Details bezüglich der Anwendungsnutzung oder der Person des Nutzers an das zweite Kommunikationssystem, welches der Authentifizierung bedarf, gesendet, um den Nutzer zu authentifizieren. Dies schützt insbesondere die Datensicherheit bzw. die Anonymität des Nutzers, da aus dem resultierenden Konfidenzwert nicht mehr nachvollziehbar ist, aus welchen Konfidenzwerten oder Klassifikationsparametern sich dieser im Detail zusammensetzt und welche Werte diese jeweils aufweisen.

In einer weiteren Ausführungsform der Erfindung sind die einzelnen Konfidenzwerte der Klassifikationsparameter bei der Auswertung mit jeweils einem Gewichtungsfaktor gewichtet. Die Gewichtungsfaktoren sind dabei dem jeweiligen Konfidenzwert zugeordnet.

Durch das Verwenden von Gewichtungsfaktoren für die jeweiligen Konfidenzwerte bei der Errechnung des resultierenden Konfidenzwertes kann sich in vorteilhafter Weise eine Erhöhung der Genauigkeit des resultierenden Konfidenzwertes bei einer Prüfung gegen ein Prüfungskriterium ergeben. Die einzelnen Konfidenzwerte, die aus unterschiedlichen Klassifikationsparametern resultieren, können nach Wichtigkeit und/oder Genauigkeit Ihrer Bestimmbarkeit gewichtet werden. Da sich jeder Nutzer unterschiedlich verhält, spielen auch die einzelnen Klassifikationsparameter unterschiedlich starke Rollen bei der verhaltensbasierten Authentifizierung des Nutzers. Ein erster Nutzer eines ersten Kommunikationssystems könnte beispielsweise regelmäßig eine Radioanwendung seines ersten Kommunikationssystems nutzen, während ein zweiter Nutzer eines zweiten ersten Kommunikationssystems niemals eine Radioanwendung nutzt. Durch die Möglichkeit des Gewichtens der einzelnen Konfidenzwerte kann dem Konfidenzwert für die Nutzung einer Radioanwendung für den Erstnutzer ein höherer Gewichtungsfaktor zugewiesen werden als dem zweiten Nutzer.

In einer weiteren Ausführungsform der Erfindung sind die Gewichtungsfaktoren der Konfidenzwerte durch das Prüfungskriterium vorgegeben. Durch das Vorgeben der Gewichtungsfaktoren durch das Prüfungskriterium ergibt sich in vorteilhafter Weise, dass unterschiedliche Konfidenzwerte individuell in Abhängigkeit davon gewichtet werden können, wie hoch der Sicherheitsgrad des Prüfungskriteriums ist. So können beispielsweise bei Prüfungskriterien, die einer sehr hohen Authentifizierungswahrscheinlichkeit bedürfen, alle Parameter miteinbezogen werden, wodurch alle Konfidenzwerte zu einem resultierenden Konfidenzwert ausgelesen werden. Demgegenüber werden bei einem Prüfungskriterium, welches einer niedrigen Sicherheitsstufe bedarf, nur einige oder ein einzelner Konfidenzwert bzw. Klassifikationsparameter zur Auswertung herangezogen.

In einer weiteren Ausführungsform der Erfindung sind die einzelnen Gewichtungsfaktoren der jeweiligen Konfidenzwerte fest vorgegeben. Fest vorgegeben meint in diesem Zusammenhang, dass die Gewichtungsfaktoren von vornerein bei der Erstinbetriebnahme des ersten und/oder zweiten Kommunikationssystems festgelegt werden und keine Änderung der Gewichtungsfaktoren während des bestimmungsmäßigen Betriebes des ersten und/oder zweiten Kommunikationssystems vorgegeben sind.

Durch das Vorgeben der Gewichtungsfaktoren für die Konfidenzwerte ergibt sich in vorteilhafter Weise ein reduzierter Rechenaufwand, welcher insbesondere für mobile, tragbare erste Kommunikationssysteme einen niedrigen Batterieverbrauch zufolge hat. Das mobile, tragbare Kommunikationssystem muss nicht überprüfen, welche Gewichtungsfaktoren für welchen Konfidenzwert festzulegen sind, sondern letztendlich nur in seinem Speicher die entsprechenden Konfidenzwerte auslesen, die bereits mit den Gewichtungsfaktoren verrechnet sind.

In einer weiteren Ausführungsform der Erfindung legt der Nutzer in einem Initiierungsprozess die Gewichtungsfaktoren der einzelnen Konfidenzwerte in dem ersten Kommunikationssystem selbst fest. Die festgelegten Gewichtungsfaktoren werden dann in einer Konfigurationsdatei in dem Speicher des ersten Kommunikationssystems gespeichert.

Die Gewichtungsfaktoren der einzelnen Konfidenzwerte in dem zweiten Kommunikationssystem werden nach einer weiteren Ausführungsform durch eine zentrale Instanz, beispielsweise den Hersteller des zweiten Kommunikationssystems, einen Dritthersteller oder einen Operator bzw. Eigentümer des zweiten Kommunikationssystems festgelegt.

Durch das Festlegen der Gewichtungsfaktoren durch den registrierten Nutzer selbst ergibt sich in vorteilhafter Weise, dass der registrierte Nutzer selbst bestimmen kann, wie weit sein Anwendungsverhalten bzw. sein Verhaltensmuster zur verhaltensbasierten Authentifizierung beitragen. Dies erhöht die Freiheit des registrierten Nutzers bei der Konfiguration des Systems, da der registrierte Nutzer selbst entscheiden kann, welche Klassifikationsparameter von seinem Verhaltensmuster umfasst werden. Zum Beispiel kann der registrierte Nutzer festlegen, dass das Verwenden der Radioanwendung nicht oder nur sehr schwach in die Generierung des Klassifikationsergebnisses miteingehen soll, da er die Radioanwendung üblicherweise nur unregelmäßig nutzt. Der gleiche Nutzer könnte hingegen die Konfidenzwerte der Positionsbestimmung stärker in die Generierung des Klassifikationsergebnisses miteinfließen lassen, da er einen sehr strukturierten Tagesablauf hat und sich mit hoher Regelmäßigkeit an bestimmten Orten aufhält.

In einer weiteren Ausführungsform der Erfindung sind auf dem ersten und/oder zweiten Kommunikationssystem mehrere Nutzer registriert und das Klassifikationsergebnis wird für jeden registrierten Nutzer generiert. Ein Nutzererkennungsmodul entscheidet dann, welcher Nutzer gerade aktiv ist und/oder sich authentifizieren möchte, wobei das Nutzererkennungsmodul ebenfalls von dem Prozessor des ersten und/oder zweiten Kommunikationssystems ausgeführt wird.

In einer weiteren Ausführungsform entscheidet das Nutzererkennungsmodul des zweiten Kommunikationssystems anhand von Identifikationsdaten, wie etwa einer von dem ersten Kommunikationssystem empfangenen Identifikationsnummer des registrierten Nutzers, welcher Nutzer sich zu authentifizieren versucht. Dabei ist die Identifikationsnummer des Nutzers in dem Speicher des zweiten Kommunikationssystems gespeichert.

In einer weiteren Ausführungsform der Erfindung wird die Identifikation des Nutzers durch das Nutzererkennungsmodul mittels eines Entscheidungsbaums getroffen.

Durch die Möglichkeit, mehrere Nutzer zu identifizieren, ergibt sich in vorteilhafter Weise, dass beispielsweise auch Dienstgeräte bzw. Dienstsysteme, die von einem Arbeitgeber an eine Mehrzahl von Mitarbeitern ausgegeben werden, wobei die Mehrzahl von Mitarbeitern, welche das jeweilige erste Kommunikationssystem abwechselnd benutzen, das Verfahren zur verhaltensbasierten Authentifizierung anwenden können.

In einer Ausführungsform ist das zweite Kommunikationssystem als Zutrittskontrollsystem für einen Bereich eines Unternehmens ausgebildet, welchen nur Personen betreten dürfen, welche sich als zutrittsberechtigte Personen authentifizieren. Die Möglichkeit, mehrere Nutzer zu identifizieren, ermöglicht eine Authentifizierung mehrerer Nutzer hintereinander in kurzen zeitlichen Abständen, woraufhin diese Personen in einem kurzen Zeitraum den Bereich betreten können, d.h. Wartezeiten vermieden bzw. minimiert werden. Nach einer weiteren Ausführungsform der Erfindung ist der Zutritt zu dem Bereich im Grundzustand offen. Eine erfolgreiche Authentifizierung gewährt einem Nutzer den Zutritt dadurch, dass ein Schließmechanismus nicht angesteuert wird. Schlägt jedoch eine Authentifizierung fehl, so wird der Schließmechanismus angesteuert und der Zutritt wird dem entsprechenden Nutzer verwehrt.

In einer weiteren Ausführungsform der Erfindung ist das Nutzererkennungsmodul so konfiguriert, dass es einen Wechsel des Nutzers anhand von grob- und/oder feinmotorischen Daten erkennt. Das Nutzererkennungsmodul generiert ein zweites Klassifikationsergebnis, welches angibt, welcher der registrierten Nutzer gerade der aktuelle Nutzer ist. Das zweite Klassifikationsergebnis wird dann gebildet, wenn das Nutzererkennungsmodul eine Bewegung erkennt, die typisch für einen Nutzerwechsel des ersten Kommunikationssystems ist. Eine typische Bewegung kann dabei das Ab- und Wiederanlegen einer Smartwatch, das Übergeben eines Mobiltelefons oder eine vergleichbare Bewegung umfassen.

Das Nutzererkennungsmodul ist konfiguriert, einen Nutzerwechsel anhand einer grob- und/oder feinmotorischen Bewegung zu erkennen. Dazu ist das Nutzererkennungsmodul beispielsweise auf ein Erkennen einer grob- und/oder feinmotorischen Bewegung des Ab- und Anlegens des ersten Kommunikationssystems konfiguriert. Ferner ist das Nutzererkennungsmodul auf ein Erkennen von nutzerspezifischen Bewegungsmustern in den Daten und/oder den feinmotorischen Daten trainiert, wobei das Nutzererkennungsmodul wiederholt die folgenden Schritte ausführt:
- Eingabe der Daten in das Nutzererkennungsmodul,
- Generieren eines zweiten Klassifikationsergebnisses durch das Nutzererkennungsmodul, ob ein Nutzerwechsel stattfindet oder das erste Kommunikationssystem ab- oder angelegt wurde,
- Speichern des zweiten Klassifikationsergebnisses in dem Speicher des ersten und/oder zweiten Kommunikationssystems.

Anschließend greift das Nutzererkennungsmodul auf den Speicher des ersten und/oder zweiten Kommunikationssystems zu, um mindestens eines der gespeichert zweiten Klassifikationsergebnisse aus dem Speicher auszulesen. Das mindestens eine zweite Klassifikationsergebnis wird ausgewertet, um zu überprüfen, ob ein Nutzerwechsel stattgefunden hat. Die bisherigen ersten, zweiten und/oder dritten Konfidenzwerte werden im Falle eines Nutzerwechsels verworfen, um sicherzustellen, dass bei einem Nutzerwechsel ein nicht authentifizierter Nutzer das erste Kommunikationssystem verwendet. Dieser nicht authentifizierte Nutzer muss sich dann neu authentifizieren.

In einer Ausführungsform ist das durch das Grobmotorikklassifikationsmodul implementierte Maschinenlernverfahren ein Random-Forest-Algorithmus, welcher eine Bewegung als eine dem Grobmotorikklassifikationsmodul bekannte Bewegung klassifiziert.

Durch das Implementieren des Maschinenlernverfahrens als Random-Forrest-Algorithmus ergibt sich in vorteilhafter Weise, dass die Parameter zur Klassifikation der grobmotorischen Bewegung in besonders effizienter Weise zu der Klassifikation beitragen und ferner, dass sich der Random-Forrest-Algorithmus aufgrund der festgelegten Anzahl der zur Verfügung stehenden Parameter besonders leicht implementieren lässt.

In einer weiteren Ausführungsform der Erfindung ist das Nutzererkennungsmodul so konfiguriert, dass es eine zumindest vorübergehende Beendigung der Nutzung des mobilen, tragbaren ersten Kommunikationssystems durch den aktuellen Nutzer anhand von grob- und/oder feinmotorischen Daten erkennt. Dazu ist das Nutzererkennungsmodul beispielsweise auf ein Erkennen einer grob- und/oder feinmotorischen Bewegung des Ablegens des ersten Kommunikationssystems konfiguriert. Wird eine solche Beendigung erkannt, werden beispielsweise die bisherigen Konfidenzwerte verworfen, um sicherzustellen, dass bei einem möglichen Nutzerwechsel ein nicht authentifizierter Nutzer das erste Kommunikationssystem verwendet. Dieser nicht authentifizierte Nutzer muss sich dann authentifizieren.

Im Weiteren werden Ausführungsformen der Erfindung mit Bezugnahme auf die Zeichnungen näher erläutert.

Es zeigen
- Figur 1: einen schematischen Aufbau eines beispielhaften ersten Kommunikationssystems zur verhaltensbasierten Authentifizierung eines Nutzers.
- Figur 2: einen schematischen Aufbau einer verhaltensbasierten Authentifizierung in einem Ablaufdiagramm.
- Figur 3a: Schritte der verhaltensbasierten Authentifizierung in einem Ablaufdiagramm.
- Figur 3b: Schritte eines Trainings eines Klassifikationsmoduls in einem Ablaufdiagramm.
- Figur 4: schematische Schritte der verhaltensbasierten Authentifizierung zur Verarbeitung von Daten.
- Figur 5: den schematischen Aufbau eines ersten Kommunikationssystems und eines zweiten Kommunikationssystems.
- Figur 6: eine Anwendung eines ersten und zweiten Kommunikationssystems zur verhaltensbasierten Authentifizierung gemäß einer Ausführungsform.
- Figur 7: das Generieren eines Klassifikationsergebnisses aus Konfidenzwerten.

Elemente der nachfolgenden Ausführungsformen, die einander entsprechen, werden mit denselben Bezugszeichen gekennzeichnet.

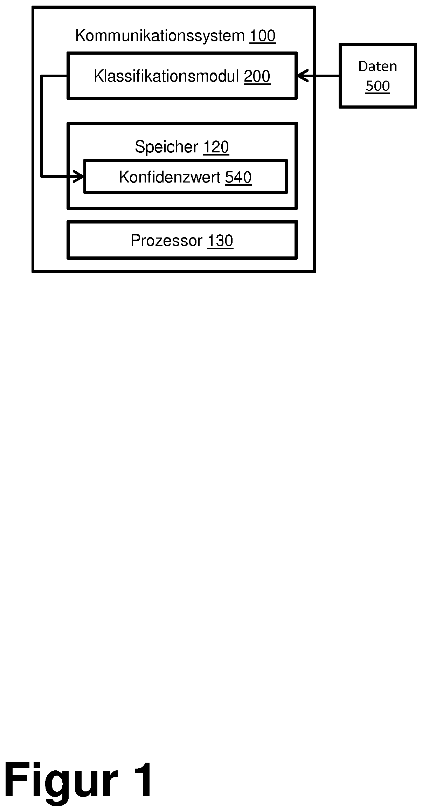

Figur 1 zeigt den schematischen Aufbau eines ersten Kommunikationssystems 100. Das Kommunikationssystem 100 umfasst ein Klassifikationsmodul 200, einen Speicher 120 sowie einen Prozessor 130. Daten 500 werden erfasst und in das Klassifikationsmodul 200 eingegeben. Das Erfassen der Daten 500 unterscheidet sich je nach Art der Daten 500. Grobmotorische Bewegungsdaten werden mittels eines Sensors zur Erfassung von grobmotorischen Bewegungen erfasst. Dieser kann beispielsweise als Gyroskop und/oder Beschleunigungssensor ausgebildet sein.

Feinmotorische Bewegungsdaten werden beispielsweise mittels einer Mensch-Maschine-Schnittstelle erfasst. Diese kann beispielsweise als Touchscreen und/oder Tastatur ausgebildet sein.

Anwendungsdaten werden mittels entsprechender Anwendungen und/oder geeigneten Sensoren erfasst. Beispielsweise kann das Anwendungsnutzungsverhalten selbst Daten 500 generieren, ferner können beispielsweise Fotos des Nutzers durch einen Charge-Coupled-Device erfasst und biometrische Daten des Nutzers extrahiert werden.

Je nach Datentyp werden die Daten 500 in ein entsprechendes Klassifikationsmodul 200 eingegeben. Bewegungsdaten einer grobmotorischen Bewegung werden in das Grobmotorikklassifikationsmodul eingegeben, Anwendungsdaten in das Anwendungsverhaltensklassifikationsmodul und feinmotorische Bewegungsdaten in das Feinmotorikklassifikationsmodul.

Das Klassifikationsmodul 200 generiert aus den Daten 500 mindestens einen Konfidenzwert 540. Dabei wird das Klassifikationsmodul 200 mittels des Prozessors 130 ausgeführt. Der Konfidenzwert 540 wird in dem Speicher 120 gespeichert und steht dort für einen Ausleseprozess bereit.

Das in Figur 1 dargestellte Kommunikationssystem 100 umfasst ein einzelnes Kommunikationsgerät. Nach Ausführungsformen kann das Kommunikationssystem 100 auch mehrere Geräte umfassen. Das Kommunikationssystem kann beispielsweise, ohne darauf beschränkt zu sein, eine beliebige Kombination aus einer Smart-Watch, Smart-Glasses, einem Smartphone, einem Handheld, einem Tablet, einem Personal Digital Assistant, einem Pager, einem Navigationsgerät, einem Activity Tracker oder einem Gerät zur Erfassung medizinischer Daten umfassen.

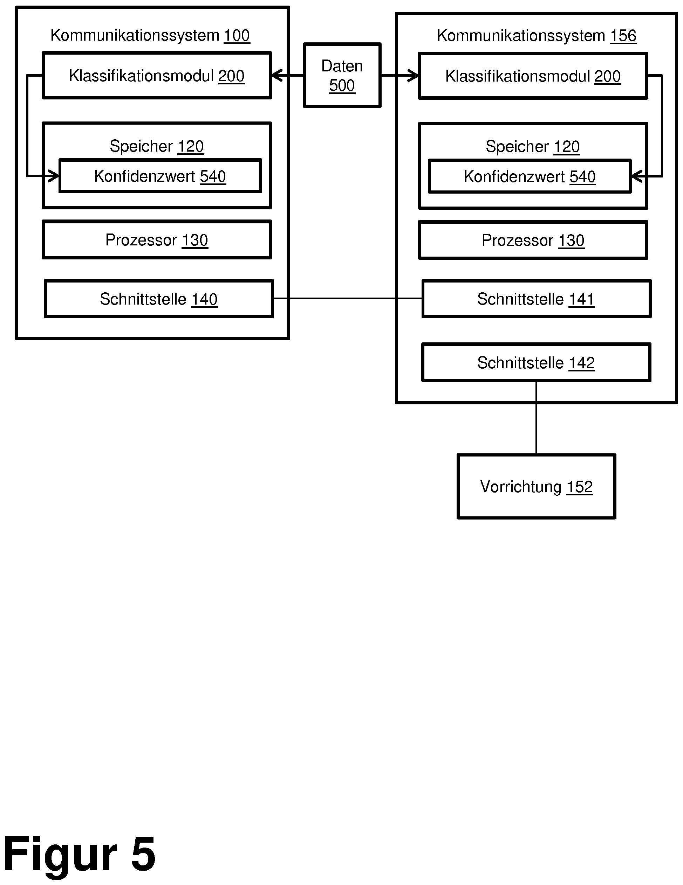

In weiteren Ausführungsformen werden die Daten 500 durch das erste Kommunikationssystem 100 erfasst, jedoch unverarbeitet an das zweite Kommunikationssystem 156 (vgl. Figur 5) gesendet. Das zweite Kommunikationssystem 156 umfasst gemäß dieser Ausführungsform das Klassifikationsmodul 200, um die Daten 500 zu verarbeiten sowie einen Speicher, um die Konfidenzwerte 540 zu speichern.

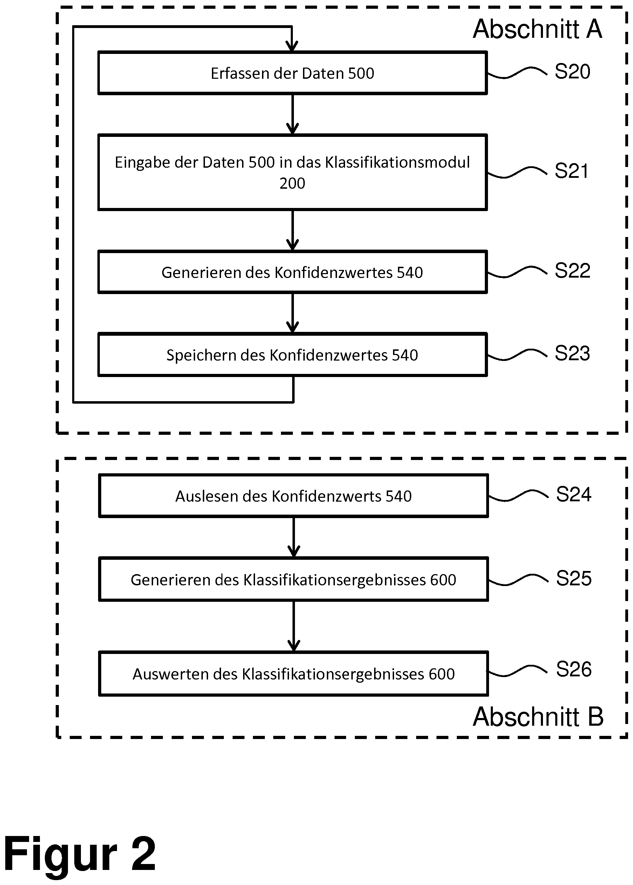

Figur 2 zeigt einen schematischen Ablauf einer verhaltensbasierten Authentifizierung in einem Ablaufdiagramm. Die verhaltensbasierte Authentifizierung kann in zwei Abschnitte unterteilt werden: Abschnitt A und Abschnitt B.

Abschnitt A wird wiederholt ausgeführt und dient im Wesentlichen einem Schaffen einer Entscheidungsgrundlage. In Schritt S20 werden die Daten 500 durch einen Sensor und/oder eine Anwendung erfasst. Das Erfassen der Daten 500 erfolgt durch das erste Kommunikationssystem 100 und gegebenenfalls zusätzlich durch das zweite Kommunikationssystem 156.

Auf das Erfassen der Daten 500 (S20) folgt eine Eingabe der Daten 500 in das Klassifikationsmodul 200 (S21). Die Daten 500 werden gemäß ihrem Datentyp in das entsprechende Klassifikationsmodul 200 eingegeben. Aus den Daten 500 generiert das Klassifikationsmodul 200 mindestens einen Konfidenzwert 540 (S22).

In weiteren Ausführungsformen umfasst das Generieren des Konfidenzwerts 540 (S22) ein Vergleichen der Daten 500 mit einem Vergleichsdatensatz. Der Vergleich wird beispielsweise hinsichtlich einer Mehrzahl von Vergleichsparametern durchgeführt, wodurch ein Konfidenzwert 540 für jeden Vergleichsparameter generiert wird. Nach Ausführungsformen der Erfindung werden die einzelnen Konfidenzwerte 540 der jeweiligen Vergleichsparameter zu einem resultierenden Konfidenzwert 540 zusammengefasst. Im Folgenden bezeichnet "der Konfidenzwert 540" gleichermaßen einen einzelnen Konfidenzwert eines einzelnen Vergleichsparameters, eine Mehrzahl von Konfidenzwerten einer Mehrzahl von Vergleichsparametern oder eine Mehrzahl der resultierenden Konfidenzwerte.

Der Konfidenzwert 540 wird schließlich in den Speicher des ersten Kommunikationssystems 100 bzw. in den Speicher des zweiten Kommunikationssystems 156 gespeichert S23. Nach Ausführungsformen laufen die Schritte S20, S21, S22 und S23 parallel zueinander ab, sodass kontinuierlich Daten 500 erfasst werden, welche kontinuierlich zu Konfidenzwerten 540 verarbeitet und gespeichert werden.

Abschnitt B wird initiiert, sobald sich der Nutzer authentifizieren möchte oder muss. Die Initiierung umfasst einen Aufbau eines, beispielsweise verschlüsselten, Drahtloskommunikationskanals über die erste Schnittstelle des ersten Kommunikationssystems 100 mit der zweiten Schnittstelle des zweiten Kommunikationssystems 156 oder umgekehrt. Ist der Kommunikationskanal aufgebaut wird der Konfidenzwert 540 aus dem Speicher des ersten Kommunikationssystems 100 ausgelesen S24 und als erstes Zwischenergebnis an das zweite Kommunikationssystem 156 gesendet.

Das zweite Kommunikationssystem 156 generiert das Klassifikationsergebnis 600 (S25) unter Verwendung des ersten Zwischenergebnisses und gegebenenfalls eines zweiten Zwischenergebnisses, welches mindestens einen Konfidenzwert umfasst, welcher aus Daten 500 generiert wurde, die mittels des zweiten Kommunikationssystems 156 erfasst wurden.

In einem letzten Schritt S26 wird das Klassifikationsergebnis 600 ausgewertet, wobei das Auswerten ein Prüfen umfasst, ob das Klassifikationsergebnis 600 ein vordefiniertes Prüfungskriterium erfüllt. Ist das Prüfungskriterium bei der Prüfung erfüllt, so ist der Nutzer identifiziert und die Vorrichtung wird gemäß dem Prüfungsergebnis angesteuert.

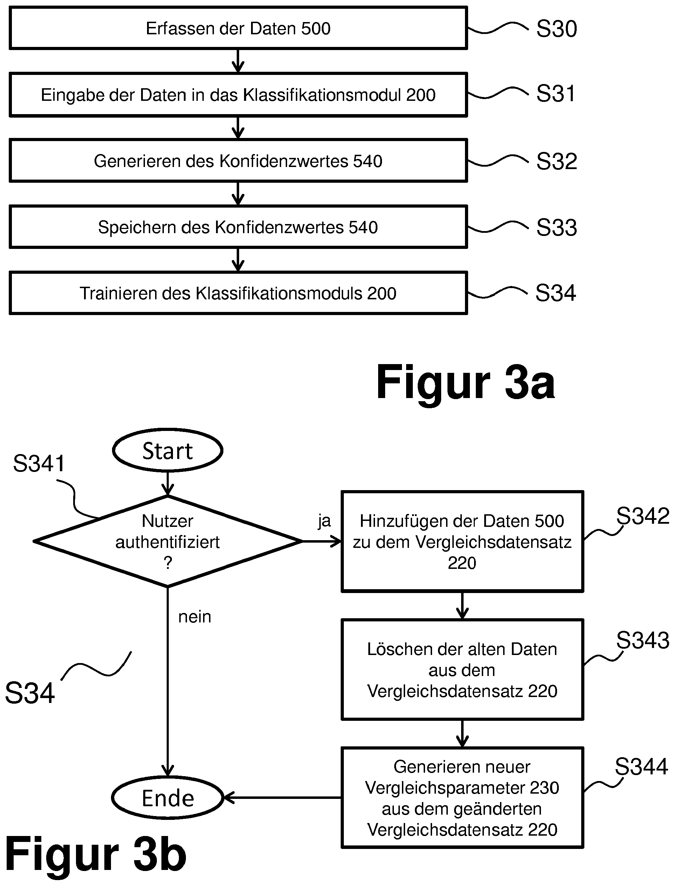

Figur 3a zeigt Schritte der verhaltensbasierten Authentifizierung gemäß einer Ausführungsform in einem Ablaufdiagramm. Im Wesentlichen erfolgt der Ablauf der Schritte S30, S31, S32 und S33 analog zu den Schritten S20, S21, S22 und S23 aus Figur 2. Gemäß dieser Ausführungsform jedoch erfolgt auf eine erfolgreiche Authentifizierung des Nutzers hin ein Trainieren des Klassifikationsmoduls 200 (S34).

Das Trainieren des Klassifikationsmoduls 200 umfasst ein Hinzufügen der in Schritt S30 erfassten Daten 500 zu dem Vergleichsdatensatz, welcher in Schritt S32 genutzt wurde, um den Konfidenzwert 540 zu generieren. Das Trainieren des Klassifikationsmoduls S34 ist detaillierter in Figur 3b dargestellt.

Figur 3b zeigt das Trainieren des Klassifikationsmoduls S34 als Ablaufdiagramm. Zunächst wird überprüft, ob sich der Nutzer erfolgreich authentifizieren konnte S341. Dazu wird gemäß einer Ausführungsform das Ergebnis der Auswertung des Klassifikationsergebnisses 600 (vgl. Figur 2, S26) von dem zweiten Kommunikationssystem 156 an das erste Kommunikationssystem 100 gesendet. Das Senden des Ergebnisses der Auswertung ist nicht nötig, falls das zu trainierende Klassifikationsmodul 200 von dem zweiten Kommunikationssystem umfasst wird.

Ist die Authentifizierung nicht erfolgreich und der Nutzer somit nicht authentifiziert, so findet kein weiteres Training des Klassifikationsmoduls 200 statt. Konnte der Nutzer authentifiziert werden, so werden zunächst die in S30 erfassten Daten 500 dem Vergleichsdatensatz 220 hinzugefügt S342.

Um das Hinzufügen der Daten 500 zu dem Vergleichsdatensatz 220 zu ermöglichen, weisen die Daten 500 und der Vergleichsdatensatz 220 gemäß einer Ausführungsform eine gleiche Struktur auf. Mit Struktur ist hier das Format der Daten gemeint. Beispielsweise umfassen sowohl die Daten 500 als auch der Vergleichsdatensatz 220 eine Mehrzahl von Werten in Form von Gleitkommazahlen oder ganzen Zahlen. Der Vergleichsdatensatz kann sich gemäß einer weiteren Ausführungsform aus einer Mehrzahl von Daten 500 zusammensetzen, welche zusammen einen Datensatz bilden. Dadurch umfasst der Vergleichsdatensatz 220 automatisch die gleiche Struktur wie die Daten 500, solange sich das Format der erfassten Daten 500 nicht ändert.

Wurden die Daten 500 dem Vergleichsdatensatz 220 hinzugefügt, so wird der Vergleichsdatensatz 220 nach Daten 500 durchsucht, welche ein vordefiniertes Alter erreicht haben. Die gefundenen Daten 500 werden gemäß einer weiteren Ausführungsform aus dem Vergleichsdatensatz 220 gelöscht (S343). Die Reihenfolge der Schritte S342 und S343 ist dabei austauschbar.

Da sich der Vergleichsdatensatz 220 durch das Hinzufügen von Daten 500 und gegebenenfalls durch das Löschen von Daten 500 geändert hat, werden Vergleichsparameter 230, welche zu dem Generieren des Konfidenzwertes 540 in Schritt S32 beitragen, neu berechnet, um bei einem zukünftigen Authentifizierungsversuch zur Verfügung zu stehen.

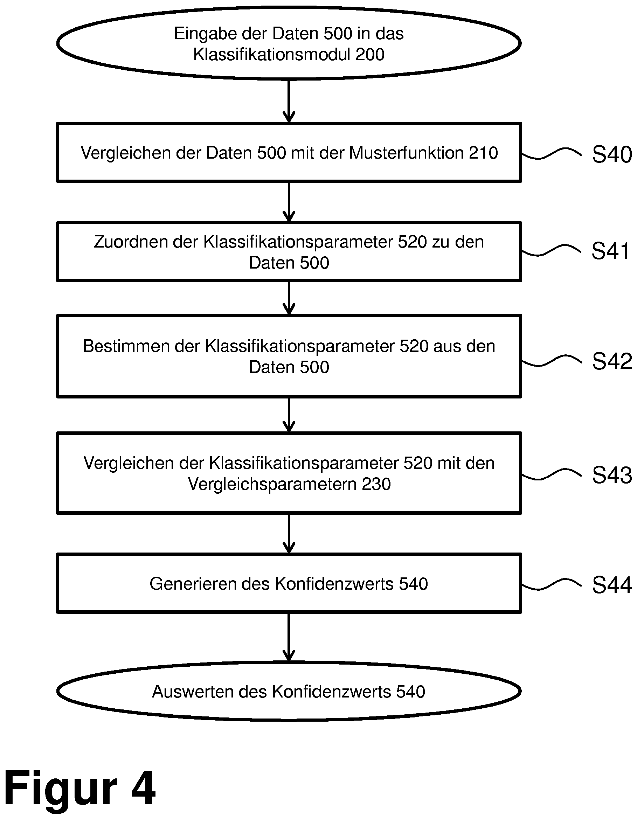

Figur 4 zeigt schematische Schritte der verhaltensbasierten Authentifizierung zur Verarbeitung von Daten gemäß einer Ausführungsform in einem Ablaufdiagramm. Insbesondere Teile des Schritts des Generierens des Konfidenzwerts 540 (vgl. Figur 2, S22 und Figur 3a, S32) sind hier dargestellt. Der Prozess startet mit der Eingabe der Daten 500 in das Klassifikationsmodul 200.

Die Daten 500 werden in Schritt S40 zunächst mit einer Musterfunktion 210 verglichen. Das Vergleichen umfasst ein Fitten der Daten 500 unter Verwendung der Musterfunktion 210. War der Fit erfolgreich, werden die Daten 500 Klassifikationsparametern 520 zugeordnet S41. Die Klassifikationsparameter 520 umfassen die Fitparameter des Fits aus S40. War der Fit nicht erfolgreich, so werden die Daten 500 verworfen und es wird kein Konfidenzwert 540 generiert. Ob ein Fit erfolgreich ist oder nicht hängt davon ab, ob die gefundenen Parameter ein vordefiniertes Fehlerkriterium erfüllten oder nicht. Das Fehlerkriterium kann beispielsweise erfüllt sein, wenn ein Fehlerschwellenwert durch die Fehler der Parameter unterschritten wurde oder wenn Parameter gefunden werden konnten, welche den Verlauf der Daten als Fit-Funktion gemäß der Musterfunktion repräsentieren. Die Klassifikationsparameter 520 umfassen gemäß einer weiteren Ausführungsform auch die Fehlerwerte der einzelnen Fitparameter.

Das Bestimmen, welche Parameter für das weitere Verfahren als Klassifikationsparameter verwendet werden bzw. welche Werte diese Klassifikationsparameter aufweisen, ist in Schritt S42 dargestellt. In Schritt S43 werden nun die bestimmten Klassifikationsparameter 520 mit Vergleichsparametern 230 verglichen. Die Vergleichsparameter 230 wurden gemäß einer Ausführungsform analog zu dem Trainingsprozess (dargestellt in Figur 3b) aus älteren Daten berechnet.

Die Differenz zwischen den jeweiligen Klassifikationsparametern 520 und den entsprechenden Vergleichsparametern 230 sagt aus, wie gut die Klassifikationsparameter 520 mit den Vergleichsparametern 230 übereinstimmen. Damit lassen sich die erfassten Daten 500 mit den Daten des Vergleichsdatensatzes vergleichen, was im übertragenen Sinne ein Vergleich des Verhaltens des Nutzers mit dem Nutzer, welcher den Vergleichsdatensatz generierte, also dem registrierten Nutzer, bedeutet.

Auf Basis des Vergleichs der Klassifikationsparameter 520 mit den Vergleichsparametern 230 lässt sich eine Aussage treffen, wie hoch die Wahrscheinlichkeit ist, dass der Nutzer und der registrierte Nutzer dieselbe Person sind. Diese Wahrscheinlichkeit wird durch den Konfidenzwert 540 ausgedrückt, welcher im Schritt S44 generiert wird. Schließlich wird der Konfidenzwert 540 gespeichert.

Figur 5 zeigt eine Ausführungsform der Erfindung, welche ein erstes Kommunikationssystem 100 und ein zweites Kommunikationssystem 156 umfasst. Die Kommunikationssysteme 100, 156 sind schematisch dargestellt.

Das erste Kommunikationssystem 100 umfasst ein Klassifikationsmodul 200, einen Speicher 120, einen Prozessor 130 sowie eine erste Schnittstelle 140. Das zweite Kommunikationssystem 156 umfasst ebenfalls einen Speicher 120, einen Prozessor 130, eine zweite Schnittstelle 141 sowie eine dritte Schnittstelle 142.

Das erste Kommunikationssystem ist dazu konfiguriert, über die erste Schnittstelle 140 mit dem zweiten Kommunikationssystem 156 zu kommunizieren, wobei das zweite Kommunikationssystem 156 dazu konfiguriert ist, über die zweite Schnittstelle 141 mit dem ersten Kommunikationssystem 100 zu kommunizieren. Ferner ist das zweite Kommunikationssystem 100 über die dritte Schnittstelle 142 mit einer Vorrichtung 152 kommunikativ verbunden.

Das erste Kommunikationssystem 100 und das zweite Kommunikationssystem 156 erfassen jeweils Daten 500 mittels geeigneter Sensoren oder Anwendungen. Die Daten 500 werden sodann in die Klassifikationsmodule 200 eingegeben, welche die Daten 500 zu Konfidenzwerten 540 verarbeiten. Die Konfidenzwerte 540 werden dann in den jeweiligen Speichern 120 gespeichert. Die Klassifikationsmodule 200 werden von den jeweiligen Prozessoren 130 ausgeführt.

Die Daten 500, die das erste Kommunikationssystem 100 erfasst, können andere Daten sein, als die, die durch das zweite Kommunikationssystem 156 erfasst werden. Beispielsweise, ohne darauf beschränkt zu sein, kann das erste Kommunikationssystem 100 eine grobmotorische Bewegung erfassen, während das zweite Kommunikationssystem biometrische Daten, zum Beispiel das Gewicht oder einen Fingerabdruck des Nutzers, erfasst.

Der Konfidenzwert 540, welcher in dem Speicher 120 des ersten Kommunikationssystems 100 gespeichert ist, wird für ein Ausführen des Verfahrens zur verhaltensbasierten Authentifizierung über die erste Schnittstelle 140 an das zweite Kommunikationssystem 156 gesendet. Unter Verwendung aller dem zweiten Kommunikationssystem 156 zur Verfügung stehenden Konfidenzwerte generiert das zweite Kommunikationssystem 156 das Klassifikationsergebnis 600.

In einer Ausführungsform umfasst das erste Kommunikationssystem 100 kein Klassifikationsmodul 200. Es erfasst die Daten 500 und sendet diese für die weitere Verarbeitung an das zweite Kommunikationssystem 156. In einer weiteren Ausführungsform erfasst das zweite Kommunikationssystem 156 keine Daten 500. Gemäß dieser Ausführungsform werden alle Daten 500 über die verhaltensbasierte Authentifizierung durch das erste Kommunikationssystem 100 erfasst.

Die erste Schnittstelle 140 und die zweite Schnittstelle 141 umfassen Drahtloskommunikationsschnittstellen. Das erste Kommunikationssystem 100 und das zweite Kommunikationssystem 156 können nach Ausführungsformen zum Beispiel über WLAN, RFID, NFC, Funk oder Bluetooth miteinander kommunizieren. Nach weiteren Ausführungsformen ist die Kommunikation zwischen dem ersten Kommunikationssystem 100 und dem zweiten Kommunikationssystem 156 eine kryptografisch gesicherte Kommunikation. Kryptografisch gesichert bedeutet in diesem Zusammenhang eine symmetrische oder asymmetrische Verschlüsselung und/oder eine Kommunikation auf Basis eines Austauschs von Zertifikaten.

Nach der Auswertung des Klassifikationsergebnisses steuert das zweite Kommunikationssystem 156 die Vorrichtung 152 über die dritte Schnittstelle 142 an. Die dritte Schnittstelle 142 kann nach Ausführungsformen eine Drahtloskommunikationsschnittstelle, analog zu der zweiten Schnittstelle 141, oder eine Alternative umfassen. Nach Ausführungsformen umfasst die dritte Schnittstelle eine kabelgebundene Schnittstelle oder eine Vorrichtung für einen Kontakt mit einer Leiterbahn.

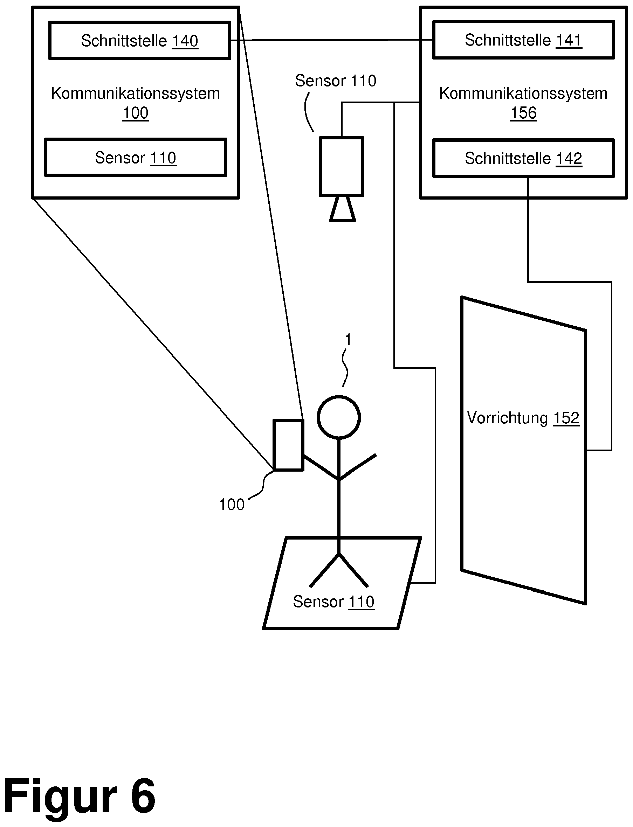

Die Vorrichtung 152 kann nach Ausführungsformen ein Schließmittel, ein Fahrzeug oder ein beliebiges System umfassen, welches einer Authentifizierung des Nutzers bedarf. Eine konkrete Ausführungsform der Erfindung ist in Figur 6 dargestellt.

Figur 6 zeigt eine Ausführungsform der Erfindung, wobei die Ausführungsform schematisch dargestellt ist. Das System zur Anwendung des Verfahrens der verhaltensbasierten Authentifizierung umfasst ein erstes Kommunikationssystem 100, welches von dem Nutzer 1 mitgeführt wird, und ein zweites Kommunikationssystem 156, welches kommunikativ mit einer Vorrichtung 152 verbunden ist.

Das erste Kommunikationssystem 100 umfasst neben den in Figur 5 beschriebenen Komponenten einen Sensor 110 und ist über die erste Schnittstelle 140 mit dem zweiten Kommunikationssystem 156 kommunikativ verbunden. Das zweite Kommunikationssystem 156 umfasst neben den in Figur 5 beschriebenen Komponenten zwei Sensoren 110 und ist über die zweite Schnittstelle 141 mit dem ersten Kommunikationssystem 100 kommunikativ verbunden sowie über die dritte Schnittstelle 142 mit der Vorrichtung 152 kommunikativ verbunden.

Die Vorrichtung 152 ist in dieser Ausführungsform als Tür ausgebildet, welche sich nur für berechtigte bzw. autorisierte Personen öffnet. Eine solche Tür könnte beispielsweise den Zugang zu einem sensiblen Bereich in einem Krankenhaus, einem Labor oder einem Bundesamt umfassen. Die Tür öffnet sich nur dann, wenn der Nutzer 1 sich gegenüber dem zweiten Kommunikationssystem 156 erfolgreich authentifiziert hat.

Zur Durchführung der verhaltensbasierten Authentifizierung werden in dieser Ausführungsform insgesamt drei Sensoren 110 verwendet. Andere Ausführungsformen umfassen eine beliebige Anzahl von Sensoren. Der von dem ersten Kommunikationssystem 100 umfasste Sensor 110 ist beispielsweise als Beschleunigungssensor ausgebildet und erfasst eine grobmotorische Bewegung des Nutzers 1. Der erste Sensor 110 des zweiten Kommunikationssystems ist als Kamera ausgebildet und ist so montiert, dass er das Gesicht des Nutzers 1 und dessen erfassen kann. Der zweite Sensor 110 des zweiten Kommunikationssystems 156 ist als Gewichtssensor in Form einer Platte im Boden eingelassen.

Während seiner alltäglichen Tätigkeit bewegt sich der Nutzer 1, wodurch der Beschleunigungssensor die Gangart des Nutzers 1 erfasst. Das erste Kommunikationssystem 100 generiert im Laufe des Tages immer wieder aus den grobmotorischen Bewegungsdaten Konfidenzwerte und speichert diese. Möchte der Nutzer 1 nun Zutritt zu dem hinter der Vorrichtung 152 befindlichen Bereich, so muss er sich authentifizieren. Dazu stellt er sich auf die Platte, welche als Gewichtssensor ausgebildet ist. Nachdem das erste Kommunikationssystem 100 und das zweite Kommunikationssystem 156 eine kommunikative Verbindung untereinander aufgebaut haben, sendet das erste Kommunikationssystem 100 die im Laufe des Tages gespeicherten Konfidenzwerte als erstes Zwischenergebnis an das zweite Kommunikationssystem 156. Das zweite Kommunikationssystem 156 erfasst das Gewicht des Nutzers 1 mittels des Gewichtssensors und eines oder mehrere der biometrischen Merkmale des Gesichts des Nutzers.

Die Konfidenzwerte der grobmotorischen Bewegungen, erfasst durch das erste Kommunikationssystem 100 und die Konfidenzwerte der Anwendungsdaten (biometrischen Daten), erfasst durch den Gewichtssensor und die Kamera, werden zusammen verwendet, um ein Klassifikationsergebnis zu generieren. Dieses Klassifikationsergebnis wird gegen ein Prüfungskriterium geprüft. Erfüllt das Klassifikationsergebnis das Prüfungskriterium steuert das zweite Kommunikationssystem 156 die Vorrichtung 152 an und die Tür öffnet sich. Erfüllt das Klassifikationsergebnis das Prüfungsergebnis nicht, beispielsweise weil nicht genügend biometrische Merkmale des Nutzers durch die Kamera erfasst wurden, so wird die Tür verriegelt. In einer weiteren Ausführungsform umfasst das zweite Kommunikationssystem einen Touchscreen, auf dem ein Wort und eine virtuelle Tastatur angezeigt werden. Der Nutzer muss das Wort eingeben, wodurch das zweite Kommunikationssystem Daten einer feinmotorischen Bewegung des Nutzers erfasst. Die feinmotorischen Bewegungsdaten werden ebenfalls verwendet, um ein Klassifikationsergebnis zu generieren oder die vorherige Generierung des Klassifikationsergebnisses wird wiederholt, wobei die feinmotorischen Bewegungsdaten die unvollständigen bzw. mangelhaften biometrischen Daten ersetzen.

Diese Ausführungsform eignet sich insbesondere als Zutrittskontrollsystem eines Zugangs, welcher einen hohen Personenverkehr aufweist. Nähert sich ein Nutzer dem Zugang, verbindet sich sein erstes Kommunikationssystem mit dem zweiten Kommunikationssystem. Während des Gehens erfassen die Kamera und der Gewichtssensor die biometrischen Daten des Nutzers und er kann, ohne selbst mit dem zweiten Kommunikationssystem aktiv interagieren zu müssen, den Zugang passieren. Schlägt jedoch die Authentifizierung fehl, so bietet der optionale Touchscreen eine zweite Möglichkeit für den Nutzer, den Zugang dennoch zu nutzen ohne ein Passwort kennen zu müssen, indem das zweite Kommunikationssystem die feinmotorische Bewegung des Nutzers als Grundlage einer Authentifizierung verwendet.

Hat beispielsweise ein Dieb dem eigentlichen Nutzer das erste Kommunikationssystem 100 entwendet und versucht nun Zutritt zu dem durch die Vorrichtung 152 gesperrten Bereich zu erlangen, so müsste der Dieb die Gangart des eigentlichen Nutzers nachahmen, sein Gewicht an das des eigentlichen Nutzers anpassen und ebenso sein Gesicht. Die Kriterien zu erfüllen ist für jedes dieser drei Kriterien schwierig, was die Sicherheit des Verfahrens, insbesondere durch Kombination der drei Kriterien, steigert, ohne dass sich der Nutzer 1 ein Passwort merken muss. Das Prüfungskriterium lautet gemäß einer Ausführungsform beispielsweise, dass alle drei Konfidenzwerte eine Übereinstimmung mit dem Vergleichsdatensatz von ≥ 90 % ergeben müssen. Durch die Variation dieser Schwelle kann die Sicherheit des gesamten Systems beispielsweise durch den Betreiber des Systems variiert werden.

Erfüllt gemäß einer weiteren Ausführungsform das Klassifikationsergebnis das Prüfungskriterium nicht und wird das Prüfungskriterium gar über einen zweiten unteren Schwellenwert hinaus unterschritten, so sendet das zweite Kommunikationssystem aufgrund einer nicht erfolgreichen Authentifizierung ein Signal, welches entsprechendes Wachpersonal informiert oder ähnliche Maßnahmen einleitet, die dem Verdacht eines nicht authentifizierten bzw. nicht autorisierten Zutrittsversuchs angemessen sind. Der zweite Schwellenwert liegt dabei so niedrig, dass sich das Verhalten des Nutzers in einem kurzen Zeitraum sehr stark ändern müsste, um in ein solches Klassifikationsergebnis zu resultieren. Da dieser Fall sehr selten eintritt, ist der Verdacht einer unberechtigten Nutzung des ersten Kommunikationssystems berechtigt.

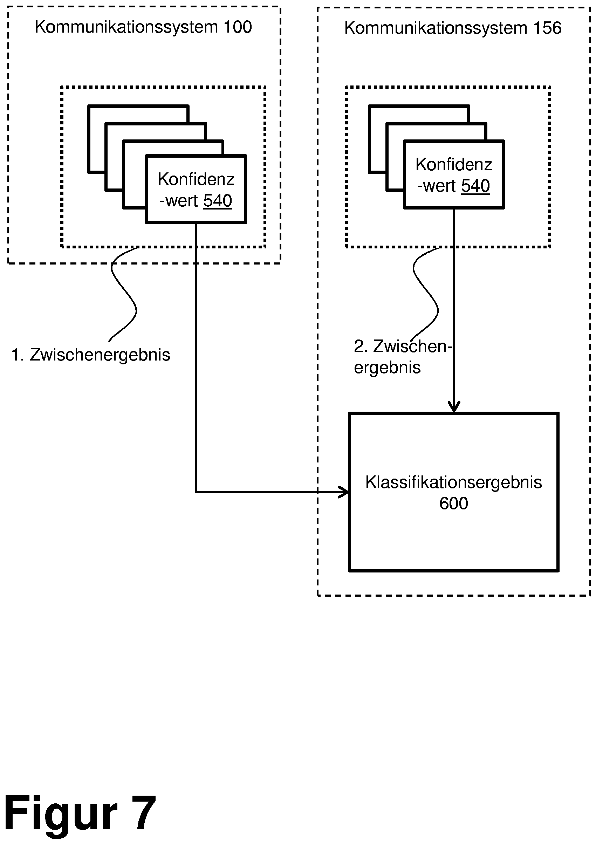

Figur 7 zeigt die schematische Zusammensetzung des Klassifikationsergebnisses 600 gemäß einer Ausführungsform der Erfindung.

Das erste Kommunikationssystem 100 erfasst Daten und generiert daraus eine erste Anzahl von Konfidenzwerten 540. Diese erste Anzahl von Konfidenzwerten 540 bildet zusammengenommen das erste Zwischenergebnis. Das zweite Kommunikationssystem 156 erfasst ebenfalls Daten, welche sich von den durch das erste Kommunikationssystem 100 erfassten Daten unterscheiden können. Die durch das zweite Kommunikationssystem 156 erfassten Daten generieren eine zweite Anzahl von Konfidenzwerten 540. Die erste Anzahl und die zweite Anzahl können einander gleichen oder unterschiedlich sein, was davon abhängt, wie und welche Daten von den Kommunikationssystemen erfasst werden. Die zweite Anzahl von Konfidenzwerten 540 bildet zusammengenommen das zweite Zwischenergebnis.

Das zweite Kommunikationssystem 156 empfängt das erste Zwischenergebnis von dem ersten Kommunikationssystem 100. Das erste Zwischenergebnis und das zweite Zwischenergebnis werden zusammen verwendet, um das Klassifikationsergebnis 600 zu generieren.

Nach Ausführungsformen der Erfindung umfasst das erste Zwischenergebnis die erfassten Daten des ersten Kommunikationssystems 100. Nach dem Senden des ersten Zwischenergebnisses an das zweite Kommunikationssystem 156 generiert das zweite Kommunikationssystem 156 aus den empfangenen Daten die erste Anzahl von Konfidenzwerten 540 und aus den selbst erfassten Daten die zweite Anzahl von Konfidenzwerten 540. Dann werden die erste Anzahl von Konfidenzwerten 540 und die zweite Anzahl von Konfidenzwerten 540 verwendet, um das Klassifikationsergebnis 600 zu generieren.

### Beispielhafte Ausführungsformen können Folgendes umfassen:

Ausführungsformen umfassen ein Verfahren zur Authentifizierung eines aktuellen Nutzers eines ersten Kommunikationssystems gegenüber einem zweiten Kommunikationssystem mittels einer verhaltensbasierten Authentifizierung, welche unter Verwendung des ersten Kommunikationssystems und des zweiten Kommunikationssystems durchgeführt wird. Das erste Kommunikationssystem ist ein von dem Nutzer mitgeführtes mobiles, tragbares Kommunikationssystem und umfasst eine erste Schnittstelle, welche dazu konfiguriert ist, mit dem zweiten Kommunikationssystem zu kommunizieren. Das erste Kommunikationssystem umfasst einen ersten Sensor, welcher dazu konfiguriert ist, Daten zu erfassen. Die Daten eines individuellen intrinsischen Verhaltens umfassen verhaltensbasierte Daten des Nutzers. Der erste Sensor ist als Bewegungssensor zur Erfassung von Bewegungen des ersten Kommunikationssystems dazu konfiguriert, als Daten Bewegungsdaten einer grobmotorischen Bewegung des aktuellen Nutzers des ersten Kommunikationssystems zu erfassen. Das zweite Kommunikationssystem umfasst eine zweite Schnittstelle und eine dritte Schnittstelle. Die zweite Schnittstelle ist dazu konfiguriert über die erste Schnittstelle mit dem ersten Kommunikationssystem zu kommunizieren. Die dritte Schnittstelle ist dazu konfiguriert, mit mindestens einer ansteuerbaren Vorrichtung zu kommunizieren. Das zweite Kommunikationssystem umfasst einen zweiten Sensor, welcher dazu konfiguriert ist, Daten des Nutzers zu erfassen. Das Verfahren umfasst:
- Empfangen eines ersten Zwischenergebnisses der verhaltensbasierten Authentifizierung von dem ersten Kommunikationssystem durch das zweite Kommunikationssystem über die erste Schnittstelle und die zweite Schnittstelle, wobei das erste Zwischenergebnis durch das erste Kommunikationssystem, unter Verwendung der durch das erste Kommunikationssystem erfassten verhaltensbasierten Daten, generiert wurde,
- Generieren eines Klassifikationsergebnisses durch das zweite Kommunikationssystem aus dem ersten Zwischenergebnis und einem zweiten Zwischenergebnis, welches durch das zweite Kommunikationssystem, unter Verwendung der durch das zweite Kommunikationssystem erfassten Daten, generiert wurde,
- Auswerten des Klassifikationsergebnisses gemäß einem vorgegebenen Prüfungskriterium durch das zweite Kommunikationssystem,
- Ansteuern der Vorrichtung mittels eines Steuersignals durch das zweite Kommunikationssystem über die dritte Schnittstelle in Abhängigkeit davon, ob das Klassifikationsergebnis das Prüfungskriterium erfüllt.

Der Nutzer ist authentifiziert, falls das Klassifikationsergebnis das Prüfungskriterium erfüllt.

Beispielsweise umfasst das erste Zwischenergebnis die durch das erste Kommunikationssystem erfassten Daten. Es erfolgt eine Auswertung der erfassten Daten für die Generierung des Klassifikationsergebnisses durch das zweite Kommunikationssystem.

Beispielsweise umfasst das erste Zwischenergebnis einen ersten Wert für eine Wahrscheinlichkeit, dass der aktuelle Nutzer ein in dem ersten Kommunikationssystem registrierter Nutzer ist. Das zweite Zwischenergebnis umfasst einen zweiten Wert für eine Wahrscheinlichkeit, dass der aktuelle Nutzer ein in dem zweiten Kommunikationssystem registrierter Nutzer ist.

Beispielsweise umfasst das Generieren des Klassifikationsergebnisses ein Bilden eines Mittelwertes aus dem ersten Zwischenergebnis und dem zweiten Zwischenergebnis.

Beispielsweise sind bei der Bildung des Mittelwertes das erste Zwischenergebnis und das zweite Zwischenergebnis mit jeweils einem Gewichtungsfaktor versehen.

Beispielsweise kommunizieren das erste Kommunikationssystem und das zweite Kommunikationssystem über eine kryptographisch gesicherte Drahtlosverbindung.

Beispielsweise umfasst das Verfahren ferner das Senden eines Authentifizierungssignals an das erste Kommunikationssystem durch das zweite Kommunikationssystem.

Beispielsweise weisen das erste Kommunikationssystem und das zweite Kommunikationssystem jeweils einen Prozessor und einen internen Speicher auf. Das erste Kommunikationssystem und/oder das zweite Kommunikationssystem weist ein Grobmotorikklassifikationsmodul auf. Das Grobmotorikklassifikationsmodul ist zur Erkennung eines generischen grobmotorischen Bewegungsmusters mit Hilfe von Trainingsdatensätzen einer Nutzerkohorte trainiert. Das Grobmotorikklassifikationsmodul wird durch den Prozessor des ersten und/oder zweiten Kommunikationssystems ausgeführt. Die verhaltensbasierte Authentifizierung weist die folgenden Schritte auf:
a) Wiederholtes Ausführen der folgenden Schritte:
   i. Erfassen der Daten durch den ersten und/oder zweiten Sensor, wobei die Daten die Bewegungsdaten der grobmotorischen Bewegung des aktuellen Nutzers sind,
   ii. Eingabe der Daten in das Grobmotorikklassifikationsmodul,
   iii. Generieren mindestens eines ersten Konfidenzwertes durch das Grobmotorikklassifikationsmodul,
   iv. Speichern des mindestens einen ersten Konfidenzwertes in dem Speicher des ersten und/oder zweiten Kommunikationssystems,
b) Zugreifen auf den Speicher des ersten und/oder zweiten Kommunikationssystems, um mindestens einen der gespeicherten ersten Konfidenzwerte aus dem Speicher auszulesen.

Für die Generierung des Klassifikationsergebnisses wird der mindestens eine erste Konfidenzwert verwendet.

Beispielsweise weist das erste Kommunikationssystem und/oder das zweite Kommunikationssystem ein Anwendungsverhaltensklassifikationsmodul auf. Das Anwendungsverhaltensklassifikationsmodul wird von dem Prozessor des ersten Kommunikationssystems und/oder des zweiten Kommunikationssystems ausgeführt. Die verhaltensbasierte Authentifizierung umfasst ferner:
a) Wiederholtes Ausführen der folgenden Schritte:
   i. Erfassen von Daten als Anwendungsdaten, wobei die Anwendungsdaten Anwendungsnutzungsverhalten des aktuellen Nutzers umfassen,
   ii. Eingabe der Anwendungsdaten in das Anwendungsverhaltensklassifikationsmodul,
   iii. Generieren mindestens eines zweiten Konfidenzwertes durch das Anwendungsverhaltensklassifikationsmodul
   iv. Speichern des mindestens einen zweiten Konfidenzwertes im Speicher des ersten Kommunikationssystems und/oder des zweiten Kommunikationssystems,
b) Zugreifen auf den Speicher des ersten Kommunikationssystems und/oder des zweiten Kommunikationssystems, um mindestens einen der gespeicherten zweiten Konfidenzwerte aus dem Speicher auszulesen.

Für die Generierung des Klassifikationsergebnisses wird der mindestens eine zweite Konfidenzwert verwendet.

Beispielsweise umfassen die Anwendungsdaten:
- Positionsdaten des ersten Kommunikationssystems, welche durch ein Verfahren zur Positionsbestimmung durch einen Sensor zur Bestimmung der Position des ersten Kommunikationssystems erfasst werden, und/oder
- Anwendungsnutzungsdaten des aktuellen Nutzers, und/oder
- biometrischen Daten des aktuellen Nutzers, welche durch einen Sensor ersten Kommunikationssystems und/oder des zweiten Kommunikationssystems zur Erfassung von biometrischen Daten erfasst werden, und/oder
- Verbindungsdaten des ersten Kommunikationssystems mit anderen Geräten und/oder
- Kalender- und/oder Uhrzeitdaten einer in dem ersten Kommunikationssystem und/oder dem zweiten Kommunikationssystem implementierten Uhr oder einer externen Uhr, deren Signal durch einen Sensor des ersten Kommunikationssystems und/oder des zweiten Kommunikationssystems empfangen wird.

Beispielsweise weist das erste Kommunikationssystem und/oder das zweite Kommunikationssystem ein Feinmotorikklassifikationsmodul auf. Das Feinmotorikklassifikationsmodul ist für eine Klassifikation von Daten konfiguriert und auf ein Erkennen einer feinmotorischen Bewegung eines registrierten Nutzers trainiert. Das Feinmotorikklassifikationsmodul wird von dem Prozessor des ersten Kommunikationssystems und/oder des zweiten Kommunikationssystems ausgeführt. Die verhaltensbasierte Authentifizierung umfasst ferner:
a) Wiederholtes Ausführen der folgenden Schritte:
   i. Erfassen der Daten als feinmotorische Daten, durch einen Sensor, wobei die feinmotorischen Daten die Bewegungsdaten der feinmotorischen Bewegung des aktuellen Nutzers sind,
   ii. Eingabe der feinmotorischen Daten in das Feinmotorikklassifikationsmodul,
   iii. Generieren mindestens eines dritten Konfidenzwert durch das Feinmotorikklassifikationsmodul,
   iv. Speichern des mindestens einen dritten Konfidenzwertes in dem Speicher ersten Kommunikationssystems und/oder des zweiten Kommunikationssystems,
b) Zugreifen auf den Speicher des ersten Kommunikationssystems und/oder des zweiten Kommunikationssystems, um mindestens einen der gespeicherten dritten Konfidenzwerte aus dem Speicher auszulesen.

Für die Generierung des Klassifikationsergebnisses wird der mindestens eine dritte Konfidenzwert verwendet.

Beispielsweise umfasst die verhaltensbasierte Authentifizierung ferner das Trainieren des Grobmotorikklassifikationsmoduls mit den grobmotorischen Daten des aktuellen Nutzers. Das Grobmotorikklassifikationsmodul wird auf das nutzerspezifische grobmotorische Bewegungsmuster des aktuellen Nutzers unter der Voraussetzung trainiert, dass gemäß dem Klassifikationsergebnis der aktuelle Nutzer der in dem ersten Kommunikationssystem und/oder in dem zweiten Kommunikationssystem registrierte Nutzer ist.

Beispielsweise umfasst die verhaltensbasierte Authentifizierung ferner das Trainieren des Anwendungsverhaltensklassifikationsmoduls mit den Anwendungsdaten des aktuellen Nutzers. Das Anwendungsverhaltensklassifikationsmodul wird auf das nutzerspezifische Anwendungsverhaltensmuster des aktuellen Nutzers unter der Voraussetzung trainiert, dass gemäß dem Klassifikationsergebnis der aktuelle Nutzer der in dem ersten Kommunikationssystem und/oder in dem zweiten Kommunikationssystem registrierte Nutzer ist.

Beispielsweise umfasst die verhaltensbasierte Authentifizierung das Trainieren des Feinmotorikklassifikationsmoduls mit den feinmotorischen Daten des aktuellen Nutzers. Das Feinmotorikklassifikationsmodul wird auf das nutzerspezifisches feinmotorisches Bewegungsmuster des aktuellen Nutzers unter der Voraussetzung trainiert, dass nach dem Klassifikationsergebnis der aktuelle Nutzer der in dem ersten Kommunikationssystem und/oder in dem zweiten Kommunikationssystem registrierte Nutzer ist.

Beispielsweise sind in dem Speicher des ersten Kommunikationssystems und/oder des zweiten Kommunikationssystems mindestens ein erstes Muster in Form einer ersten Musterfunktion und mindestens ein erster Vergleichsdatensatz gespeichert. Der erste Vergleichsdatensatz umfasst eine Mehrzahl der grobmotorischen Daten. Aus der Mehrzahl der grobmotorischen Daten des ersten Vergleichsdatensatzes wird mindestens ein erster Vergleichsparameter errechnet. Das Grobmotorikklassifikationsmodul führt auf die Eingabe der grobmotorischen Daten hin die folgenden Schritte aus:
a) Vergleich der erfassten grobmotorischen Daten mit der mindestens einen ersten Musterfunktion,
b) Zuordnen der grobmotorischen Daten zu dem der ersten Musterfunktion zugeordneten ersten Muster und erhalten von mindestens einem dem ersten Muster entsprechenden ersten Klassifikationsparameter, falls die grobmotorischen Daten dem mindestens einen, ersten Muster zugeordnet werden können.

Das Generieren des mindestens einen ersten Konfidenzwertes umfasst ein Errechnen eines Konfidenzwertes für jeden ersten Klassifikationsparameter durch einen Vergleich des mindestens einen ersten Klassifikationsparameters mit dem jeweiligen ersten Vergleichsparameter des ersten Vergleichsdatensatzes. Das Trainieren ein umfasst Hinzufügen der erfassten grobmotorischen Daten zu dem ersten Vergleichsdatensatz.

Beispielsweise sind in dem Speicher des ersten Kommunikationssystems und/oder des zweiten Kommunikationssystems mindestens ein zweites Muster in Form einer zweiten Musterfunktion und mindestens ein zweiter Vergleichsdatensatz gespeichert. Der zweite Vergleichsdatensatz umfasst eine Mehrzahl der Anwendungsdaten. Aus der Mehrzahl der Anwendungsdaten des zweiten Vergleichsdatensatzes wird mindestens ein zweiter Vergleichsparameter errechnet. Das Anwendungsverhaltensklassifikationsmodul führt auf die Eingabe der Anwendungsdaten hin die folgenden Schritte aus:
a) Vergleich der erfassten Anwendungsdaten mit der mindestens einen zweiten Musterfunktion,
b) Zuordnen der Anwendungsdaten zu dem der zweiten Musterfunktion zugeordneten zweiten Muster und erhalten von mindestens einem dem zweiten Muster entsprechenden zweiten Klassifikationsparameter, falls die Anwendungsdaten dem mindesten einen, zweiten Muster zugeordnet werden können.

Das Generieren des mindestens einen zweiten Konfidenzwertes umfasst ein Errechnen eines Konfidenzwertes für jeden zweiten Klassifikationsparameter durch einen Vergleich des mindestens einen zweiten Klassifikationsparameters mit dem jeweiligen zweiten Vergleichsparameter des zweiten Vergleichsdatensatzes Das Trainieren umfasst ein Hinzufügen der erfassten Anwendungsdaten zu dem zweiten Vergleichsdatensatz.

Beispielsweise sind in dem Speicher des ersten Kommunikationssystems und/oder des zweiten Kommunikationssystems mindestens ein drittes Muster in Form einer dritten Musterfunktion und mindestens ein dritter Vergleichsdatensatz gespeichert. Der erste Vergleichsdatensatz umfasst eine Mehrzahl der feinmotorischen Daten. Aus der Mehrzahl der feinmotorischen Daten des ersten Vergleichsdatensatzes wird mindestens ein erster Vergleichsparameter errechnet. Das Feinmotorikklassifikationsmodul führt auf die Eingabe der feinmotorischen Daten hin die folgenden Schritte aus:
a) Vergleich der erfassten feinmotorischen Daten mit der mindestens einen dritten Musterfunktion,
b) Zuordnen der feinmotorischen Daten zu dem der dritten Musterfunktion zugeordneten dritten Muster und erhalten von mindestens einem dem dritten Muster entsprechenden dritten Klassifikationsparameter, falls die feinmotorischen Daten dem mindesten einen, dritten Muster zugeordnet werden können.

Das Generieren des mindestens einen dritten Konfidenzwertes umfasst ein Errechnen eines Konfidenzwertes für jeden dritten Klassifikationsparameter durch einen Vergleich des mindestens einen dritten Klassifikationsparameters mit dem jeweiligen dritten Vergleichsparameter des dritten Vergleichsdatensatzes. Das Trainieren umfasst ein Hinzufügen der erfassten feinmotorischen Daten zu dem dritten Vergleichsdatensatz.

Beispielsweise ist das Prüfungskriterium erfüllt, falls:
- das mindestens eine Klassifikationsergebnis einen durch das Prüfungskriterium vorgegebenen Schwellenwert überschreitet und/oder
- ein durch das Prüfungskriterium vorgegebenes Höchstalter des mindestens einen Klassifikationsergebnisses nicht überschritten werden und/oder
- eine Mindestanzahl an Klassifikationsergebnissen vorliegt, welche den Schwellenwert überschreitet.

Beispielsweise werden die Daten, welche Teil des ersten Vergleichsdatensatzes und älter als eine festgelegte Zeit sind, aus dem ersten Vergleichsdatensatz entfernt und aus dem Speicher des ersten Kommunikationssystems und/oder des zweiten Kommunikationssystems gelöscht und die Daten, welche Teil des zweiten Vergleichsdatensatzes und älter als die festgelegte Zeit sind, aus dem zweiten Vergleichsdatensatz entfernt und aus dem Speicher des ersten Kommunikationssystems und/oder des zweiten Kommunikationssystems gelöscht und die Daten, welche Teil des dritten Vergleichsdatensatzes und älter als die festgelegte Zeit sind, aus dem dritten Vergleichsdatensatz entfernt und aus dem Speicher des ersten Kommunikationssystems und/oder des zweiten Kommunikationssystems gelöscht.

Beispielsweise muss sich der aktuelle Nutzer des ersten Kommunikationssystems nach einer Erstinbetriebnahme gegenüber dem zweiten Kommunikationssystem authentifizieren.

Beispielsweise sendet das erste Kommunikationssystem nach der Erstinbetriebnahme ein Signal an den aktuellen Nutzer, welches eine Aufforderung zu einer Personalisierung des ersten Kommunikationssystems durch eine Generierung des mindestens einen ersten und/oder zweiten und/oder dritten Vergleichsdatensatzes durch den aktuellen Nutzer enthält.

Beispielsweise wird bei der Generierung des Klassifikationsergebnisses der mindestens eine zweite Konfidenzwert nur dann mit einbezogen, wenn in einem der vorangegangenen Schritte das Grobmotorikklassifikationsmodul in den Daten eine grobmotorische Bewegung des aktuellen Nutzers erkannt hat.

Beispielsweise wird bei der Auswertung des Klassifikationsergebnisses der mindestens eine dritte Konfidenzwert nur dann mit einbezogen, wenn in einem der vorangegangenen Schritte das Grobmotorikklassifikationsmodul in den Daten eine grobmotorische Bewegung des aktuellen Nutzers erkannt hat.

Beispielsweise umfasst das Klassifikationsergebnis den mindestens einen ersten Konfidenzwert, den mindestens einen zweiten Konfidenzwert und/oder den mindestens einen dritten Konfidenzwert. Die Konfidenzwerte werden zu einem resultierenden Konfidenzwert durch den Prozessor des ersten Kommunikationssystems und/oder des zweiten Kommunikationssystems verarbeitet. Der resultierende Konfidenzwert gibt eine Wahrscheinlichkeit an, mit der der aktuelle Nutzer als der registrierte Nutzer identifiziert wird.

Beispielsweise sind die einzelnen Konfidenzwerte der ersten, zweiten und/oder dritten Klassifikationsparameter bei der Auswertung mit jeweils einem Gewichtungsfaktor versehen. Die Gewichtungsfaktoren werden dem jeweiligen Konfidenzwert zugeordnet.

Beispielsweise sind auf dem ersten Kommunikationssystem und/oder dem zweiten Kommunikationssystem mehrere Nutzer registriert und ein Klassifikationsergebnis wird für jeden Nutzer generiert. Das erste Kommunikationssystem und/oder das zweite Kommunikationssystem weist ein Nutzererkennungsmodul auf. Das Nutzererkennungsmodul ist dazu konfiguriert den aktuellen Nutzer als einen der registrierten Nutzer zu identifizieren. Das Nutzererkennungsmodul wird von dem Prozessor des ersten Kommunikationssystems und/oder des zweiten Kommunikationssystems ausgeführt.

Beispielsweise ist das Nutzererkennungsmodul konfiguriert einen Nutzerwechsel anhand einer grob- und/oder feinmotorischen Bewegung zu erkennen. Das Nutzererkennungsmodul ist auf ein Erkennen einer grob- und/oder feinmotorischen Bewegung des Ab- und/oder Anlegens des ersten Kommunikationssystems konfiguriert und auf ein Erkennen von nutzerspezifischen Bewegungsmustern in den Daten und/oder den Daten trainiert. Das Nutzererkennungsmodul wird von dem Prozessor ersten Kommunikationssystems und/oder des zweiten Kommunikationssystems ausgeführt. Die verhaltensbasierte Authentifizierung umfasst ferner:
a) Wiederholtes Ausführen der Schritte:
   - Eingabe der der Daten in das Nutzererkennungsmodul,
   - Generieren mindestens eines vierten Konfidenzwertes durch das Nutzererkennungsmodul,
   - Speichern des mindestens einen vierten Konfidenzwertes in dem Speicher des ersten Kommunikationssystems und/oder des zweiten Kommunikationssystems,
b) Zugreifen auf den Speicher des ersten Kommunikationssystems und/oder des zweiten Kommunikationssystems, um mindestens einen der gespeicherten vierten Konfidenzwerte aus dem Speicher auszulesen,
c) Auswerten des mindestens einen vierten Konfidenzwertes, um zu überprüfen, ob ein Nutzerwechsel stattgefunden hat,
d) Verwerfen der bisherigen Konfidenzwerte falls ein Nutzerwechsel stattgefunden hat.

Ausführungsformen umfassen ein zweites Kommunikationssystem zur Authentifizierung eines aktuellen Nutzers eines ersten Kommunikationssystems gegenüber einem zweiten Kommunikationssystem mittels einer verhaltensbasierten Authentifizierung, welche unter Verwendung des ersten Kommunikationssystems, welches der Nutzer als mobiles tragbares Kommunikationssystem mit sich führt, und des zweiten Kommunikationssystems durchgeführt wird. Das zweite Kommunikationssystem umfasst eine erste Schnittstelle und eine zweite Schnittstelle. Die erste Schnittstelle ist dazu konfiguriert mit dem ersten Kommunikationssystem zu kommunizieren. Das erste Kommunikationssystem ist über die zweite Schnittstelle mit mindestens einer ansteuerbaren Vorrichtung kommunikativ verbunden. Das zweite Kommunikationssystem umfasst einen ersten Sensor umfasst, welcher ausgebildet ist, Daten des Nutzers zu erfassen. Das zweite Kommunikationssystem führt die folgenden Schritte aus:
- Empfangen eines ersten Zwischenergebnisses der verhaltensbasierten Authentifizierung von dem ersten Kommunikationssystem über die erste Schnittstelle, wobei das erste Zwischenergebnis durch das erste Kommunikationssystem und unter Verwendung der mittels des ersten Kommunikationssystems verhaltensbasierten erfassten Daten eines individuellen intrinsischen Verhaltens des Nutzers, generiert wurde, wobei die Daten Bewegungsdaten einer grobmotorischen Bewegung des aktuellen Nutzers des ersten Kommunikationssystems umfassen, welche unter Verwendung eines Bewegungssensors zur Erfassung von Bewegungen des ersten Kommunikationssystems erfasst wurden,
- Generieren eines Klassifikationsergebnisses aus dem ersten Zwischenergebnis und einem zweiten Zwischenergebnis, welches durch das zweite Kommunikationssystem und unter Verwendung der mittels des zweiten Kommunikationssystems erfassten Daten generiert wurde,
- Prüfen des Klassifikationsergebnisses gemäß einem vorgegebenen Prüfungskriterium,
- Ansteuern der Vorrichtung mittels eines Steuersignals durch über die zweite Schnittstelle in Abhängigkeit davon, ob das Klassifikationsergebnis das Prüfungskriterium erfüllt.

Der Nutzer ist authentifiziert, falls das Klassifikationsergebnis das Prüfungskriterium erfüllt.

Ausführungsformen umfassen ein System zur Authentifizierung eines aktuellen Nutzers eines ersten Kommunikationssystems gegenüber einem zweiten Kommunikationssystem mittels einer verhaltensbasierten Authentifizierung, welche unter Verwendung des ersten Kommunikationssystems und des zweiten Kommunikationssystems durchgeführt wird. Das System umfasst das erste Kommunikationssystem, das zweite Kommunikationssystem und mindestens eine ansteuerbare Vorrichtung. Das erste Kommunikationssystem ist ein von dem Nutzer mitgeführtes mobiles, tragbares Kommunikationssystem. Ferner umfasst eine erste Schnittstelle, welche dazu konfiguriert ist mit dem zweiten Kommunikationssystem zu kommunizieren. Das erste Kommunikationssystem umfasst einen ersten Sensor, welcher dazu ausgebildet ist Daten zu erfassen. Die Daten umfassen verhaltensbasierte Daten eines individuellen intrinsischen Verhaltens des Nutzers. Der erste Sensor ist als Bewegungssensor zur Erfassung von Bewegungen des ersten Kommunikationssystems dazu konfiguriert, als Daten Bewegungsdaten einer grobmotorischen Bewegung des aktuellen Nutzers des ersten Kommunikationssystems zu erfassen. Das zweite Kommunikationssystem umfasst eine zweite Schnittstelle und eine dritte Schnittstelle. Die zweite Schnittstelle ist dazu konfiguriert über die erste Schnittstelle mit dem ersten Kommunikationssystem zu kommunizieren. Das zweite Kommunikationssystem ist über die dritte Schnittstelle mit der mindestens einen Vorrichtung kommunikativ verbunden. Das zweite Kommunikationssystem umfasst einen zweiten Sensor, welcher ausgebildet ist, Daten des Nutzers zu erfassen. Das System führt die folgenden Schritte aus:
- Empfangen eines ersten Zwischenergebnisses der verhaltensbasierten Authentifizierung von dem ersten Kommunikationssystem durch das zweite Kommunikationssystem über die erste Schnittstelle und die zweite Schnittstelle, wobei das erste Zwischenergebnis durch das erste Kommunikationssystem und unter Verwendung der mittels des ersten Kommunikationssystems erfassten Daten generiert wurde,
- Generieren eines Klassifikationsergebnisses durch das zweite Kommunikationssystem aus dem ersten Zwischenergebnis und einem zweiten Zwischenergebnis, welches durch das zweite Kommunikationssystem und unter Verwendung der mittels des zweiten Kommunikationssystems erfassten Daten generiert wurde,
- Prüfen des Klassifikationsergebnisses gemäß einem vorgegebenen Prüfungskriterium durch das zweite Kommunikationssystem,
- Ansteuern der Vorrichtung mittels eines Steuersignals durch das zweite Kommunikationssystem über die dritte Schnittstelle in Abhängigkeit davon, ob das Klassifikationsergebnis das Prüfungskriterium erfüllt.

Der Nutzer ist authentifiziert, falls das Klassifikationsergebnis das Prüfungskriterium erfüllt.

### Bezugszeichenliste

- 1:: Nutzer
- 100:: Kommunikationssystem
- 120:: Speicher
- 130:: Prozessor
- 140:: Schnittstelle
- 141:: Schnittstelle
- 142:: Schnittstelle
- 152:: Vorrichtung
- 156:: Kommunikationssystem
- 200:: Klassifikationsmodul
- 210:: Musterfunktion
- 220:: Vergleichsdatensatz
- 230:: Vergleichsparameter
- 500:: Daten
- 520:: Klassifikationsparameter
- 540:: Konfidenzwerte
- 600:: Klassifikationsergebnis
- S20:: Erfassen der Daten
- S21:: Eingabe der Daten in das Klassifikationsmodul
- S22:: Generieren des Konfidenzwertes
- S23:: Speichern des Konfidenzwertes
- S24:: Auslesen des Konfidenzwertes
- S25:: Generieren des Klassifikationsergebnisses
- S26:: Auswerten des Klassifikationsergebnisses
- S30:: Erfassen der Daten
- S31:: Eingabe der Daten in das Klassifikationsmodul
- S32:: Generieren des Konfidenzwertes
- S33:: Speichern des Konfidenzwertes
- S34:: Trainieren des Klassifikationsmoduls
- S341:: Prüfen ob der Nutzer Authentifiziert ist
- S342:: Hinzufügen der Daten zu dem Vergleichsdatensatz
- S343:: Löschen der alten Daten
- S344:: Generieren neuer Vergleichsparameter
- S40:: Vergleichen der Daten
- S41:: Zuordnen der Klassifikationsparameter
- S42:: Bestimmen der Klassifikationsparameter
- S43:: Vergleichen der Klassifikationsparameter
- S44:: Generieren des Konfidenzwerts

## Patentansprüche

1. Verfahren zur Authentifizierung eines aktuellen Nutzers (1) eines ersten Kommunikationssystems (100) gegenüber einem zweiten Kommunikationssystem (156) mittels einer verhaltensbasierten Authentifizierung, welche unter Verwendung des ersten Kommunikationssystems (100) und des zweiten Kommunikationssystems (156) durchgeführt wird,
wobei das erste Kommunikationssystem (100) ein von dem Nutzer mitgeführtes mobiles, tragbares Kommunikationssystem ist und eine erste Schnittstelle (140) umfasst, welche dazu konfiguriert ist, mit dem zweiten Kommunikationssystem (156) zu kommunizieren,
wobei das erste Kommunikationssystem (100) einen ersten Sensor (110) umfasst, welcher dazu konfiguriert ist, Daten (500) zu erfassen, wobei die Daten (500) verhaltensbasierte Daten eines individuellen intrinsischen Verhaltens des Nutzers (1) umfassen, wobei der erste Sensor als Bewegungssensor zur Erfassung von Bewegungen des ersten Kommunikationssystems (100) dazu konfiguriert ist, als Daten (500) Bewegungsdaten einer grobmotorischen Bewegung des aktuellen Nutzers (1) des ersten Kommunikationssystems (100) zu erfassen,
wobei das zweite Kommunikationssystem (156) eine zweite Schnittstelle (141) und eine dritte Schnittstelle (142) umfasst, wobei die zweite Schnittstelle (141) dazu konfiguriert ist über die erste Schnittstelle (140) mit dem ersten Kommunikationssystem (100) zu kommunizieren,
wobei die dritte Schnittstelle (142) dazu konfiguriert ist, mit mindestens einer ansteuerbaren Vorrichtung (152) zu kommunizieren,
wobei das zweite Kommunikationssystem (156) einen zweiten Sensor (110) umfasst, welcher dazu konfiguriert ist, Daten (500) des Nutzers (1) zu erfassen,
wobei das Verfahren umfasst:
- Empfangen eines ersten Zwischenergebnisses der verhaltensbasierten Authentifizierung von dem ersten Kommunikationssystem (100) durch das zweite Kommunikationssystem (156) über die erste Schnittstelle (140) und die zweite Schnittstelle (141), wobei das erste Zwischenergebnis durch das erste Kommunikationssystem (100), unter Verwendung der durch das erste Kommunikationssystem (100) erfassten verhaltensbasierten Daten (500), generiert wurde,
- Generieren eines Klassifikationsergebnisses (600) durch das zweite Kommunikationssystem (156) aus dem ersten Zwischenergebnis und einem zweiten Zwischenergebnis, welches durch das zweite Kommunikationssystem (156), unter Verwendung der durch das zweite Kommunikationssystem (156) erfassten Daten (500), generiert wurde,
- Auswerten des Klassifikationsergebnisses (600) gemäß einem vorgegebenen Prüfungskriterium (800) durch das zweite Kommunikationssystem (156),
- Ansteuern der Vorrichtung (152) mittels eines Steuersignals durch das zweite Kommunikationssystem (156) über die dritte Schnittstelle (142) in Abhängigkeit davon, ob das Klassifikationsergebnis (600) das Prüfungskriterium erfüllt,
wobei der Nutzer (1) authentifiziert ist, falls das Klassifikationsergebnis (600) das Prüfungskriterium erfüllt.

2. Verfahren nach Anspruch 1, wobei das erste Zwischenergebnis die durch das erste Kommunikationssystem (100) erfassten Daten (500) umfasst und eine Auswertung der erfassten Daten (500) für die Generierung des Klassifikationsergebnisses (600) durch das zweite Kommunikationssystem (156) erfolgt.

3. Verfahren nach Anspruch 1, wobei das erste Zwischenergebnis einen ersten Wert für eine Wahrscheinlichkeit umfasst, dass der aktuelle Nutzer (1) ein in dem ersten Kommunikationssystem (100) registrierter Nutzer ist und wobei das zweite Zwischenergebnis einen zweiten Wert für eine Wahrscheinlichkeit umfasst, dass der aktuelle Nutzer (1) ein in dem zweiten Kommunikationssystem (156) registrierter Nutzer ist.

4. Verfahren nach Anspruch 3, wobei das Generieren des Klassifikationsergebnisses (600) ein Bilden eines Mittelwertes aus dem ersten Zwischenergebnis und dem zweiten Zwischenergebnis umfasst.

5. Verfahren nach einem der vorherigen Ansprüche, wobei das erste Kommunikationssystem (100) und das zweite Kommunikationssystem (156) jeweils einen Prozessor (130) und einen internen Speicher (120) aufweisen, wobei das erste Kommunikationssystem (100) und/oder das zweite Kommunikationssystem (156) ein Grobmotorikklassifikationsmodul (200) aufweist,
wobei das Grobmotorikklassifikationsmodul (200) zur Erkennung eines generischen grobmotorischen Bewegungsmusters mit Hilfe von Trainingsdatensätzen einer Nutzerkohorte trainiert ist, wobei das Grobmotorikklassifikationsmodul (200) durch den Prozessor (130) des ersten und/oder zweiten Kommunikationssystems (100) ausgeführt wird,
wobei die verhaltensbasierte Authentifizierung die folgenden Schritte aufweist:
a) Wiederholtes Ausführen der folgenden Schritte:
i. Erfassen der Daten (500) durch den ersten und/oder zweiten Sensor (110), wobei die Daten (500) die Bewegungsdaten der grobmotorischen Bewegung des aktuellen Nutzers (1) sind,
ii. Eingabe der Daten (500) in das Grobmotorikklassifikationsmodul (200),
iii. Generieren mindestens eines ersten Konfidenzwertes (540) durch das Grobmotorikklassifikationsmodul (200),
iv. Speichern des mindestens einen ersten Konfidenzwertes (540) in dem Speicher (120) des ersten und/oder zweiten Kommunikationssystems (100, 156),
b) Zugreifen auf den Speicher (120) des ersten und/oder zweiten Kommunikationssystems (100, 156), um mindestens einen der gespeicherten ersten Konfidenzwerte (540) aus dem Speicher (120) auszulesen,
wobei für die Generierung des Klassifikationsergebnisses (600) der mindestens eine erste Konfidenzwert (540) verwendet wird.

6. Verfahren nach Anspruch 5, wobei das erste Kommunikationssystem (100) und/oder das zweite Kommunikationssystem (156) ein Anwendungsverhaltensklassifikationsmodul (200) aufweist,
wobei das Anwendungsverhaltensklassifikationsmodul (200) von dem Prozessor (130) des ersten Kommunikationssystems (100) und/oder des zweiten Kommunikationssystems (156) ausgeführt wird,
wobei die verhaltensbasierte Authentifizierung ferner umfasst:
a) Wiederholtes Ausführen der folgenden Schritte:
i. Erfassen von Daten (500) als Anwendungsdaten, wobei die Anwendungsdaten Anwendungsnutzungsverhalten des aktuellen Nutzers (1) umfassen,
ii. Eingabe der Anwendungsdaten in das Anwendungsverhaltensklassifikationsmodul (200),
iii. Generieren mindestens eines zweiten Konfidenzwertes (540) durch das Anwendungsverhaltensklassifikationsmodul (200)
iv. Speichern des mindestens einen zweiten Konfidenzwertes (540) im Speicher (120) des ersten Kommunikationssystems (100) und/oder des zweiten Kommunikationssystems (156),
b) Zugreifen auf den Speicher (120) des ersten Kommunikationssystems (100) und/oder des zweiten Kommunikationssystems (156), um mindestens einen der gespeicherten zweiten Konfidenzwerte (540) aus dem Speicher (120) auszulesen,
wobei für die Generierung des Klassifikationsergebnisses (600) der mindestens eine zweite Konfidenzwert (540) verwendet wird,
und/oder wobei das erste Kommunikationssystem (100) und/oder das zweite Kommunikationssystem (156) ein Feinmotorikklassifikationsmodul (200) aufweist,
wobei das Feinmotorikklassifikationsmodul (200) für eine Klassifikation von Daten (500) konfiguriert und auf ein Erkennen einer feinmotorischen Bewegung eines registrierten Nutzers trainiert ist, wobei das Feinmotorikklassifikationsmodul (200) von dem Prozessor (130) des ersten Kommunikationssystems (100) und/oder des zweiten Kommunikationssystems (156) ausgeführt wird,
wobei die verhaltensbasierte Authentifizierung ferner umfasst:
a) Wiederholtes Ausführen der folgenden Schritte:
i. Erfassen der Daten (500) als feinmotorische Daten, durch einen Sensor (110), wobei die feinmotorischen Daten die Bewegungsdaten der feinmotorischen Bewegung des aktuellen Nutzers (1) sind,
ii. Eingabe der feinmotorischen Daten in das Feinmotorikklassifikationsmodul (200),
iii. Generieren mindestens eines dritten Konfidenzwert (540) durch das Feinmotorikklassifikationsmodul (200),
iv. Speichern des mindestens einen dritten Konfidenzwertes (540) in dem Speicher (120) ersten Kommunikationssystems (100) und/oder des zweiten Kommunikationssystems (156),
b) Zugreifen auf den Speicher (120) des ersten Kommunikationssystems (100) und/oder des zweiten Kommunikationssystems (156), um mindestens einen der gespeicherten dritten Konfidenzwerte (540) aus dem Speicher (120) auszulesen,
wobei für die Generierung des Klassifikationsergebnisses (600) der mindestens eine dritte Konfidenzwert (540) verwendet wird.

7. Verfahren nach einem der Ansprüche 5 bis 6, wobei die verhaltensbasierte Authentifizierung ferner das Trainieren des Grobmotorikklassifikationsmoduls (200) mit den grobmotorischen Daten des aktuellen Nutzers (1) umfasst, wobei das Grobmotorikklassifikationsmodul (200) auf das nutzerspezifische grobmotorische Bewegungsmuster des aktuellen Nutzers unter der Voraussetzung trainiert wird, dass gemäß dem Klassifikationsergebnis (600) der aktuelle Nutzer (1) der in dem ersten Kommunikationssystem (100) und/oder in dem zweiten Kommunikationssystem (156) registrierte Nutzer ist, und/oder
die verhaltensbasierte Authentifizierung ferner das Trainieren des Anwendungsverhaltensklassifikationsmoduls (200) mit den Anwendungsdaten des aktuellen Nutzers (1) umfasst, wobei das Anwendungsverhaltensklassifikationsmodul (200) auf das nutzerspezifische Anwendungsverhaltensmuster des aktuellen Nutzers (1) unter der Voraussetzung trainiert wird, dass gemäß dem Klassifikationsergebnis (600) der aktuelle Nutzer (1) der in dem ersten Kommunikationssystem (100) und/oder in dem zweiten Kommunikationssystem (156) registrierte Nutzer ist, und/oder
die verhaltensbasierte Authentifizierung das Trainieren des Feinmotorikklassifikationsmoduls (200) mit den feinmotorischen Daten des aktuellen Nutzers (1) umfasst, wobei das Feinmotorikklassifikationsmodul (200) auf das nutzerspezifisches feinmotorisches Bewegungsmuster des aktuellen Nutzers (1) unter der Voraussetzung trainiert wird, dass nach dem Klassifikationsergebnis (600) der aktuelle Nutzer (1) der in dem ersten Kommunikationssystem (100) und/oder in dem zweiten Kommunikationssystem (156) registrierte Nutzer ist.

8. Verfahren nach einem der Ansprüche 5 bis 7, wobei in dem Speicher (120) des ersten Kommunikationssystems (100) und/oder des zweiten Kommunikationssystems (156) mindestens ein erstes Muster in Form einer ersten Musterfunktion (210) und mindestens ein erster Vergleichsdatensatz (220) gespeichert sind,
wobei der erste Vergleichsdatensatz (220) eine Mehrzahl der grobmotorischen Daten umfasst, wobei aus der Mehrzahl der grobmotorischen Daten des ersten Vergleichsdatensatzes (220) mindestens ein erster Vergleichsparameter (230) errechnet wird,
wobei das Grobmotorikklassifikationsmodul (200) auf die Eingabe der grobmotorischen Daten hin die folgenden Schritte ausführt:
a) Vergleich der erfassten grobmotorischen Daten mit der mindestens einen ersten Musterfunktion (210),
b) Zuordnen der grobmotorischen Daten zu dem der ersten Musterfunktion (210) zugeordneten ersten Muster und erhalten von mindestens einem dem ersten Muster entsprechenden ersten Klassifikationsparameter (230), falls die grobmotorischen Daten dem mindestens einen, ersten Muster zugeordnet werden können,
wobei das Generieren des mindestens einen ersten Konfidenzwertes (540) ein Errechnen eines Konfidenzwertes (540) für jeden ersten Klassifikationsparameter (230) durch einen Vergleich des mindestens einen ersten Klassifikationsparameters (230) mit dem jeweiligen ersten Vergleichsparameter (230) des ersten Vergleichsdatensatzes (220) umfasst,
und wobei das Trainieren ein Hinzufügen der erfassten grobmotorischen Daten zu dem ersten Vergleichsdatensatz (220) umfasst.

9. Verfahren nach Anspruch 6 bis 8, wobei in dem Speicher (120) des ersten Kommunikationssystems (100) und/oder des zweiten Kommunikationssystems (156) mindestens ein zweites Muster in Form einer zweiten Musterfunktion (210) und mindestens ein zweiter Vergleichsdatensatz (220) gespeichert sind,
wobei der zweite Vergleichsdatensatz (220) eine Mehrzahl der Anwendungsdaten umfasst, wobei aus der Mehrzahl der Anwendungsdaten des zweiten Vergleichsdatensatzes (220) mindestens ein zweiter Vergleichsparameter (230) errechnet wird,
wobei das Anwendungsverhaltensklassifikationsmodul (200) auf die Eingabe der Anwendungsdaten hin die folgenden Schritte ausführt:
a) Vergleich der erfassten Anwendungsdaten mit der mindestens einen zweiten Musterfunktion (210),
b) Zuordnen der Anwendungsdaten zu dem der zweiten Musterfunktion (210) zugeordneten zweiten Muster und erhalten von mindestens einem dem zweiten Muster entsprechenden zweiten Klassifikationsparameter (520), falls die Anwendungsdaten dem mindesten einen, zweiten Muster zugeordnet werden können,
wobei das Generieren des mindestens einen zweiten Konfidenzwertes (540) ein Errechnen eines Konfidenzwertes (540) für jeden zweiten Klassifikationsparameter (230) durch einen Vergleich des mindestens einen zweiten Klassifikationsparameters (230) mit dem jeweiligen zweiten Vergleichsparameter (230) des zweiten Vergleichsdatensatzes (220) umfasst,
und wobei das Trainieren ein Hinzufügen der erfassten Anwendungsdaten zu dem zweiten Vergleichsdatensatz (220) umfasst,
und/oder wobei in dem Speicher (120) des ersten Kommunikationssystems (100) und/oder des zweiten Kommunikationssystems (156) mindestens ein drittes Muster in Form einer dritten Musterfunktion (210) und mindestens ein dritter Vergleichsdatensatz (220) gespeichert sind,
wobei der erste Vergleichsdatensatz (220) eine Mehrzahl der feinmotorischen Daten umfasst, wobei aus der Mehrzahl der feinmotorischen Daten des ersten Vergleichsdatensatzes (220) mindestens ein erster Vergleichsparameter (230) errechnet wird,
wobei das Feinmotorikklassifikationsmodul (200) auf die Eingabe der feinmotorischen Daten hin die folgenden Schritte ausführt:
a) Vergleich der erfassten feinmotorischen Daten mit der mindestens einen dritten Musterfunktion (210),
b) Zuordnen der feinmotorischen Daten zu dem der dritten Musterfunktion (210) zugeordneten dritten Muster und erhalten von mindestens einem dem dritten Muster entsprechenden dritten Klassifikationsparameter (520), falls die feinmotorischen Daten dem mindesten einen, dritten Muster zugeordnet werden können,
wobei das Generieren des mindestens einen dritten Konfidenzwertes (540) ein Errechnen eines Konfidenzwertes (540) für jeden dritten Klassifikationsparameter (230) durch einen Vergleich des mindestens einen dritten Klassifikationsparameters (230) mit dem jeweiligen dritten Vergleichsparameter (230) des dritten Vergleichsdatensatzes (220) umfasst,
und wobei das Trainieren ein Hinzufügen der erfassten feinmotorischen Daten zu dem dritten Vergleichsdatensatz (220) umfasst.

10. Verfahren nach einem der vorherigen Ansprüche, wobei das Prüfungskriterium (800) erfüllt ist, falls:
- das mindestens eine Klassifikationsergebnis (600) einen durch das Prüfungskriterium (800) vorgegebenen Schwellenwert überschreitet und/oder
- ein durch das Prüfungskriterium (800) vorgegebenes Höchstalter des mindestens einen Klassifikationsergebnisses (600) nicht überschritten werden und/oder
- eine Mindestanzahl an Klassifikationsergebnissen (600) vorliegt, welche den Schwellenwert überschreitet.

11. Verfahren nach einem der Ansprüche 6 bis 10, wobei bei der Generierung des Klassifikationsergebnisses (600) der mindestens eine zweite Konfidenzwert (540) nur dann mit einbezogen wird, wenn in einem der vorangegangenen Schritte das Grobmotorikklassifikationsmodul (200) in den Daten (500) eine grobmotorische Bewegung des aktuellen Nutzers (1) erkannt hat, und/oder
wobei bei der Auswertung des Klassifikationsergebnisses (600) der mindestens eine dritte Konfidenzwert (540) nur dann mit einbezogen wird, wenn in einem der vorangegangenen Schritte das Grobmotorikklassifikationsmodul (200) in den Daten (500) eine grobmotorische Bewegung des aktuellen Nutzers (1) erkannt hat.

12. Verfahren nach einem der Ansprüche 6 bis 11, wobei das Klassifikationsergebnis (600) den mindestens einen ersten Konfidenzwert (540), den mindestens einen zweiten Konfidenzwert (540) und/oder den mindestens einen dritten Konfidenzwert (540) umfasst und wobei die Konfidenzwerte (540) zu einem resultierenden Konfidenzwert durch den Prozessor (130) des ersten Kommunikationssystems (100) und/oder des zweiten Kommunikationssystems (156) verarbeitet werden, wobei der resultierende Konfidenzwert eine Wahrscheinlichkeit angibt, mit der der aktuelle Nutzer (1) als der registrierte Nutzer identifiziert wird.

13. Verfahren nach einem der Ansprüche 8 bis 12, wobei die einzelnen Konfidenzwerte (540) der ersten, zweiten und/oder dritten Klassifikationsparameter (520) bei der Auswertung mit jeweils einem Gewichtungsfaktor versehen sind, wobei die Gewichtungsfaktoren dem jeweiligen Konfidenzwert (540) zugeordnet werden.

14. Verfahren nach einem der Ansprüche 5 bis 13, wobei auf dem ersten Kommunikationssystem (100) und/oder dem zweiten Kommunikationssystem (156) mehrere Nutzer (1) registriert sind und ein Klassifikationsergebnis (600) für jeden Nutzer (1) generiert wird, wobei das erste Kommunikationssystem (100) und/oder das zweite Kommunikationssystem (156) ein Nutzererkennungsmodul aufweist, wobei das Nutzererkennungsmodul dazu konfiguriert ist den aktuellen Nutzer (1) als einen der registrierten Nutzer zu identifizieren, wobei das Nutzererkennungsmodul von dem Prozessor (130) des ersten Kommunikationssystems (100) und/oder des zweiten Kommunikationssystems (156) ausgeführt wird.

15. Verfahren nach Anspruch 14, wobei das Nutzererkennungsmodul konfiguriert ist einen Nutzerwechsel anhand einer grob- und/oder feinmotorischen Bewegung zu erkennen,
wobei das Nutzererkennungsmodul auf ein Erkennen einer grob- und/oder feinmotorischen Bewegung des Ab- und/oder Anlegens des ersten Kommunikationssystems (100) konfiguriert und auf ein Erkennen von nutzerspezifischen Bewegungsmustern in den Daten (500) und/oder den Daten (510) trainiert ist, wobei das Nutzererkennungsmodul von dem Prozessor (130) ersten Kommunikationssystems (100) und/oder des zweiten Kommunikationssystems (156) ausgeführt wird,
wobei die verhaltensbasierte Authentifizierung ferner umfasst:
a) Wiederholtes Ausführen der Schritte:
- Eingabe der der Daten (500) in das Nutzererkennungsmodul,
- Generieren mindestens eines vierten Konfidenzwertes (600) durch das Nutzererkennungsmodul,
- Speichern des mindestens einen vierten Konfidenzwertes (540) in dem Speicher (120) des ersten Kommunikationssystems (100) und/oder des zweiten Kommunikationssystems (156),
b) Zugreifen auf den Speicher (120) des ersten Kommunikationssystems (100) und/oder des zweiten Kommunikationssystems (156), um mindestens einen der gespeicherten vierten Konfidenzwerte (540) aus dem Speicher (120) auszulesen,
c) Auswerten des mindestens einen vierten Konfidenzwertes (540), um zu überprüfen, ob ein Nutzerwechsel stattgefunden hat,
d) Verwerfen der bisherigen Konfidenzwerte falls ein Nutzerwechsel stattgefunden hat.

16. Zweites Kommunikationssystem (156) zur Authentifizierung eines aktuellen Nutzers (1) eines ersten Kommunikationssystems (100) gegenüber einem zweiten Kommunikationssystem (156) mittels einer verhaltensbasierten Authentifizierung, welche unter Verwendung des ersten Kommunikationssystems (100), welches der Nutzer als mobiles tragbares Kommunikationssystem mit sich führt, und des zweiten Kommunikationssystems (156) durchgeführt wird,
wobei das zweite Kommunikationssystem (156) eine erste Schnittstelle (141) und eine zweite Schnittstelle (142) umfasst, wobei die erste Schnittstelle (141) dazu konfiguriert ist mit dem ersten Kommunikationssystem (100) zu kommunizieren,
wobei das erste Kommunikationssystem (156) über die zweite Schnittstelle (142) mit mindestens einer ansteuerbaren Vorrichtung (152) kommunikativ verbunden ist,
wobei das zweite Kommunikationssystem (156) einen ersten Sensor (110) umfasst, welcher ausgebildet ist, Daten (500) des Nutzers (1) zu erfassen,
wobei das zweite Kommunikationssystem die folgenden Schritte ausführt:
- Empfangen eines ersten Zwischenergebnisses der verhaltensbasierten Authentifizierung von dem ersten Kommunikationssystem (100) über die erste Schnittstelle (141), wobei das erste Zwischenergebnis durch das erste Kommunikationssystem (100) und unter Verwendung der mittels des ersten Kommunikationssystems (100) erfassten verhaltensbasierten Daten (500) eines individuellen intrinsischen Verhaltens des Nutzers, generiert wurde, wobei die Daten (500) Bewegungsdaten einer grobmotorischen Bewegung des aktuellen Nutzers (1) des ersten Kommunikationssystems (100) umfassen, welche unter Verwendung eines Bewegungssensors zur Erfassung von Bewegungen des ersten Kommunikationssystems (100) erfasst wurden,
- Generieren eines Klassifikationsergebnisses (600) aus dem ersten Zwischenergebnis und einem zweiten Zwischenergebnis, welches durch das zweite Kommunikationssystem (156) und unter Verwendung der mittels des zweiten Kommunikationssystems (156) erfassten Daten (500) generiert wurde,
- Prüfen des Klassifikationsergebnisses (600) gemäß einem vorgegebenen Prüfungskriterium (800),
- Ansteuern der Vorrichtung (152) mittels eines Steuersignals durch über die zweite Schnittstelle (142) in Abhängigkeit davon, ob das Klassifikationsergebnis (600) das Prüfungskriterium erfüllt,
wobei der Nutzer (1) authentifiziert ist, falls das Klassifikationsergebnis (600) das Prüfungskriterium erfüllt.

17. System zur Authentifizierung eines aktuellen Nutzers (1) eines ersten Kommunikationssystems (100) gegenüber einem zweiten Kommunikationssystem (156) mittels einer verhaltensbasierten Authentifizierung, welche unter Verwendung des ersten Kommunikationssystems (100) und des zweiten Kommunikationssystems (156) durchgeführt wird,
wobei das System das erste Kommunikationssystem (100), das zweite Kommunikationssystem (156) und mindestens eine ansteuerbare Vorrichtung (152) umfasst,
wobei das erste Kommunikationssystem (100) ein von dem Nutzer mitgeführtes mobiles, tragbares Kommunikationssystem ist und eine erste Schnittstelle (140) umfasst, welche dazu konfiguriert ist mit dem zweiten Kommunikationssystem (156) zu kommunizieren,
wobei das erste Kommunikationssystem (100) einen ersten Sensor (110) umfasst, welcher dazu ausgebildet ist Daten (500) zu erfassen, wobei die Daten (500) verhaltensbasierte Daten eines individuellen intrinsischen Verhaltens des Nutzers (1) umfassen, wobei der erste Sensor als Bewegungssensor zur Erfassung von Bewegungen des ersten Kommunikationssystems (100) dazu konfiguriert ist, als Daten (500) Bewegungsdaten einer grobmotorischen Bewegung des aktuellen Nutzers (1) des ersten Kommunikationssystems (100) zu erfassen,
wobei das zweite Kommunikationssystem (156) eine zweite Schnittstelle (141) und eine dritte Schnittstelle (142) umfasst, wobei die zweite Schnittstelle (141) dazu konfiguriert ist über die erste Schnittstelle (140) mit dem ersten Kommunikationssystem (100) zu kommunizieren,
wobei das zweite Kommunikationssystem (156) über die dritte Schnittstelle (142) mit der mindestens einen Vorrichtung (152) kommunikativ verbunden ist,
wobei das zweite Kommunikationssystem (156) einen zweiten Sensor (110) umfasst, welcher ausgebildet ist, Daten (500) des Nutzers (1) zu erfassen,
wobei das System die folgenden Schritte ausführt:
- Empfangen eines ersten Zwischenergebnisses der verhaltensbasierten Authentifizierung von dem ersten Kommunikationssystem (100) durch das zweite Kommunikationssystem (156) über die erste Schnittstelle (140) und die zweite Schnittstelle (141), wobei das erste Zwischenergebnis durch das erste Kommunikationssystem (100) und unter Verwendung der mittels des ersten Kommunikationssystems (100) erfassten Daten (500) generiert wurde,
- Generieren eines Klassifikationsergebnisses (600) durch das zweite Kommunikationssystem (156) aus dem ersten Zwischenergebnis und einem zweiten Zwischenergebnis, welches durch das zweite Kommunikationssystem (156) und unter Verwendung der mittels des zweiten Kommunikationssystems (156) erfassten Daten (500) generiert wurde,
- Prüfen des Klassifikationsergebnisses (600) gemäß einem vorgegebenen Prüfungskriterium (800) durch das zweite Kommunikationssystem (156),
- Ansteuern der Vorrichtung (152) mittels eines Steuersignals durch das zweite Kommunikationssystem (156) über die dritte Schnittstelle (142) in Abhängigkeit davon, ob das Klassifikationsergebnis (600) das Prüfungskriterium erfüllt,
wobei der Nutzer (1) authentifiziert ist, falls das Klassifikationsergebnis (600) das Prüfungskriterium erfüllt.

## Claims

1. A method for authenticating a current user (1) of a first communication system (100) with respect to a second communication system (156) by means of a behavior-based authentication carried out using the first communication system (100) and the second communication system (156),
the first communication system (100) comprising a mobile, portable communication system carried by the user and a first interface (140), which is configured to communicate with the second communication system (156), the first communication system (100) comprising a first sensor (110), which is configured to detect data (500), the data (500) encompassing behavior-based data of an individual intrinsic behavior of the user (1), the first sensor, serving as a movement sensor for detecting movements of the first communication system (100), being configured to detect movement data, serving as data (500), of a gross motor-related movement of the current user (1) of the first communication system (100),
the second communication system (156) comprising a second interface (141) and a third interface (142), the second interface (141) being configured to communicate with the first communication system (100) via the first interface (140),
the third interface (142) being configured to communicate with at least one activatable device (152),
the second communication system (156) comprising a second sensor (110), which is configured to detect data (500) of the user (1),
the method comprising:
- receiving a first interim result of the behavior-based authentication from the first communication system (100) by the second communication system (156) via the first interface (140) and the second interface (141), the first interim result having been generated by the first communication system (100), using the behavior-based data (500) detected by the first communication system (100);
- generating a classification result (600) by the second communication system (156) from the first interim result and a second interim result, which was generated by the second communication system (156), using the data (500) detected by the second communication system (156);
- evaluating the classification result (600) according to a predefined examination criterion (800) by the second communication system (156); and
- activating the device (152) by means of a control signal by the second communication system (156) via the third interface (142) as a function of whether the classification result (600) meets the examination criterion,
the user (1) being authenticated if the classification result (600) meets the examination criterion.

2. The method according to claim 1, wherein the first interim result encompasses the data (500) detected by the first communication system (100), and an evaluation of the detected data (500) is carried out by the second communication system (156) for the generation of the classification result (600).

3. The method according to claim 1, wherein the first interim result encompasses a first value for a probability that the current user (1) is a user registered in the first communication system (100), and the second interim result encompasses a second value for a probability that the current user (1) is a user registered in the second communication system (156).

4. The method according to claim 3, wherein the generation of the classification result (600) comprises determining an average value of the first interim result and the second interim result.

5. A method according to any one of the preceding claims, wherein the first communication system (100) and the second communication system (156) each comprise a processor (130) and an internal memory (120), the first communication system (100) and/or the second communication system (156) comprising a gross motor skill classification module (200),
the gross motor skill classification module (200) being trained to recognize a generic gross motor-related movement pattern using training data sets of a user cohort, the gross motor skill classification module (200) being carried out by the processor (130) of the first and/or second communication systems (100);
the behavior-based authentication comprising the following steps:
a) repeatedly carrying out the following steps:
i. detecting the data (500) by the first and/or second sensors (110), the data (500) being the movement data of the gross motor-related movement of the current user (1);
ii. entering the data (500) into the gross motor skill classification module (200);
iii. generating at least one first confidence value (540) by the gross motor skill classification module (200); and
iv. storing the at least one first confidence value (540) in the memory (120) of the first and/or second communication systems (100, 156);
b) accessing the memory (120) of the first and/or second communication system (100, 156) so as to read out at least one of the stored first confidence values (540) from the memory (120),
the at least one first confidence value (540) being used to generate the classification result (600).

6. The method according to claim 5, wherein the first communication system (100) and/or the second communication system (156) comprise an application behavior classification module (200),
the application behavior classification module (200) being executed by the processor (130) of the first communication system (100) and/or of the second communication system (156),
the behavior-based authentication furthermore comprising:
a) repeatedly carrying out the following steps:
i. detecting data (500) serving as application data, the application data encompassing an application usage behavior of the current user (1);
ii. entering the application data into the application behavior classification module (200);
iii. generating at least one second confidence value (540) by the application behavior classification module (200); and
iv. storing the at least one second confidence value (540) in the memory (120) of the first communication system (100) and/or of the second communication system (156);
b) accessing the memory (120) of the first communication system (100) and/or of the second communication system (156) so as to read out at least one of the stored second confidence values (540) from the memory (120),
the at least one second confidence value (540) being used to generate the classification result (600),
and/or wherein the first communication system (100) and/or the second communication system (156) comprises a fine motor skill classification module (200),
the fine motor skill classification module (200) being configured to classify data (500) and being trained to recognize a fine motor-related movement of a registered user, the fine motor skill classification module (200) being executed by the processor (130) of the first communication system (100) and/or of the second communication system (156),
the behavior-based authentication furthermore comprising:
a) repeatedly carrying out the following steps:
i. detecting the data (500), serving as fine motor-related data, by a sensor (110), the fine motor-related data being the movement data of the fine motor-related movement of the current user (1);
ii. entering the fine motor-related data into the fine motor skill classification module (200);
iii. generating at least one third confidence value (540) by the fine motor skill classification module (200); and
iv. storing the at least one third confidence value (540) in the memory (120) of the first communication system (100) and/or of the second communication system (156);
b) accessing the memory (120) of the first communication system (100) and/or of the second communication system (156) so as to read out at least one of the stored third confidence values (540) from the memory (120),
the at least one third confidence value (540) being used to generate the classification result (600).

7. The method according to either claim 5 or 6, wherein the behavior-based authentication furthermore comprises training the gross motor skill classification module (200) using the gross motor-related data of the current user (1), the gross motor skill classification module (200) being trained for the user-specific gross motor-related movement pattern of the current user provided that, according to the classification result (600), the current user (1) is the user registered in the first communication system (100) and/or in the second communication system (156), and/or
the behavior-based authentication furthermore comprises training the application behavior classification module (200) using the application data of the current user (1), the application behavior classification module (200) being trained for the user-specific application behavior pattern of the current user (1) provided that, according to the classification result (600), the current user (1) is the user registered in the first communication system (100) and/or in the second communication system (156), and/or
the behavior-based authentication furthermore comprises training the fine motor skill classification module (200) using the fine motor-related data of the current user (1), the fine motor skill classification module (200) being trained for the user-specific fine motor-related behavior pattern of the current user (1), provided that, according to the classification result (600), the current user (1) is the user registered in the first communication system (100) and/or in the second communication system (156).

8. The method according to any one of claims 5 to 7, wherein at least one first pattern in the form of a pattern function (210) and at least one first comparison data set (220) are stored in the memory (120) of the first communication system (100) and/or of the second communication system (156),
the first comparison data set (220) including a plurality of the gross motor-related data, at least one first comparison parameter (230) being calculated from the plurality of the gross motor-related data of the first comparison data set (220);
the gross motor skill classification module (200), in response to the input of the gross motor-related data, carrying out the following steps:
a) comparing the detected gross motor-related data to the at least one first pattern function (210);
b) assigning the gross motor-related data to the first pattern assigned to the first pattern function (210), and receiving at least one first classification parameter (230) corresponding to the first pattern if the gross motor-related data can be assigned to the at least one first pattern;
the generation of the at least one first confidence value (540) comprising calculating a confidence value (540) for each first classification parameter (230) by comparing the at least one first classification parameter (230) to the respective first comparison parameter (230) of the first comparison data set (220),
and the training comprising adding the detected gross motor-related data to the first comparison data set (220).

9. The method according to any one of claims 6 to 8, wherein at least one second pattern in the form of a second pattern function (210) and at least one second comparison data set (220) are stored in the memory (120) of the first communication system (100) and/or of the second communication system (156),
the second comparison data set (220) including a plurality of application data, at least one second comparison parameter (230) being calculated from the plurality of the application data of the second comparison data set (220);
the application behavior classification module (200), in response to the input of the application data, carrying out the following steps:
a) comparing the detected application data to the at least one second pattern function (210);
b) assigning the application data to the second pattern assigned to the second pattern function (210), and receiving at least one second classification parameter (520) corresponding to the second pattern if the application data can be assigned to the at least one second pattern;
the generation of the at least one second confidence value (540) comprising calculating a confidence value (540) for each second classification parameter (230) by comparing the at least one second classification parameter (230) to the respective second comparison parameter (230) of the second comparison data set (220),
and the training comprising adding the detected application data to the second comparison data set (220),
and/or wherein at least one third pattern in the form of a third pattern function (210) and at least one third comparison data set (220) are stored in the memory (120) of the first communication system (100) and/or of the second communication system (156),
the first comparison data set (220) including a plurality of fine motor-related data, at least one first comparison parameter (230) being calculated from the plurality of the fine motor-related data of the first comparison data set (220);
the fine motor skill classification module (200), in response to the input of the fine motor-related data, carrying out the following steps:
a) comparing the detected fine motor-related data to the at least one third pattern function (210);
b) assigning the fine motor-related data to the third pattern assigned to the third pattern function (210), and receiving at least one third classification parameter (520) corresponding to the third pattern if the fine motor-related data can be assigned to the at least one third pattern;
the generation of the at least one third confidence value (540) comprising calculating a confidence value (540) for each third classification parameter (230) by comparing the at least one third classification parameter (230) to the respective third comparison parameter (230) of the third comparison data set (220),
and the training comprising adding the detected fine motor-related data to the third comparison data set (220).

10. The method according to any one of the preceding claims, wherein the examination criterion (800) is met if:
- the at least one classification result (600) exceeds a threshold value predefined by the examination criterion (800), and/or
- a maximum age of the at least one classification result (600) predefined by the examination criterion (800) is not exceeded, and/or
- a minimum number of classification results (600) is available, which exceeds the threshold value.

11. The method according to any of claims 6 to 10, wherein, during the generation of the classification result (600), the at least one second confidence value (540) is only included when, in a preceding step, the gross motor skill classification module (200) has recognized a gross motor-related movement of the current user (1) in the data (500), and/or
wherein, during the evaluation of the classification result (600), the at least one third confidence value (540) is only included when, in a preceding step, the gross motor skill classification module (200) has recognized a gross motor-related movement of the current user (1) in the data (500).

12. The method according to any one of claims 6 to 11, wherein the classification result (600) encompasses the at least one first confidence value (540), the at least one second confidence value (540) and/or the at least one third confidence value (540), and the confidence values (540) are processed to a resulting confidence value by the processor (130) of the first communication system (100) and/or of the second communication system (156), the resulting confidence value indicating a probability with which the current user (1) is identified as the registered user.

13. The method according to any one of claims 8 to 12, wherein the individual confidence values (540) of the first, second and/or third classification parameters (520) are each provided with a weighting factor during the evaluation, the weighting factors being assigned to the respective confidence value (540).

14. The method according to any one of claims 5 to 13, wherein a plurality of users (1) are registered on the first communication system (100) and/or the second communication system (156), and a classification result (600) is generated for each user (1), the first communication system (100) and/or the second communication system (156) comprising a user recognition module, the user recognition module being configured to identify the current user (1) as one of the registered users, and the user recognition module being executed by the processor (130) of the first communication system (100) and/or of the second communication system (156).

15. The method according to claim 14, wherein the user recognition module is configured to recognize a change in user based on a gross and/or fine motor-related movement,
the user recognition module being configured to recognize a gross and/or fine motor-related movement of taking off and/or putting on the first communication system (100), and being trained to recognize user-specific movement patterns in the data (500) and/or the data (510), and the user recognition module being executed by the processor (130) of the first communication system (100) and/or of the second communication system (156),
the behavior-based authentication furthermore comprising:
a) repeatedly carrying out the following steps:
- entering the data (500) into the user recognition module;
- generating at least one fourth confidence value (600) by the user recognition module;
- storing the at least one fourth confidence value (540) in the memory (120) of the first communication system (100) and/or of the second communication system (156);
b) accessing the memory (120) of the first communication system (100) and/or of the second communication system (156) so as to read out at least one of the stored fourth confidence values (540) from the memory (120);
c) evaluating the at least one fourth confidence value (540) to check whether a change in user has taken place; and
d) discarding the existing confidence values if a change in user has taken place.

16. A second communication system (156) for authenticating a current user (1) of a first communication system (100) with respect to a second communication system (156) by means of a behavior-based authentication carried out using the first communication system (100), which the user carries as a mobile, portable communication system, and the second communication system (156),
the second communication system (156) comprising a first interface (141) and a second interface (142), the first interface (141) being configured to communicate with the first communication system (100),
the first communication system (156) being communicatively connected to at least one activatable device (152) via the second interface (142),
the second communication system (156) comprising a first sensor (110), which is designed to detect data (500) of the user (1),
the second communication system carrying out the following steps:
- receiving a first interim result of the behavior-based authentication from the first communication system (100) via the first interface (141), the first interim result having been generated by the first communication system (100), using the behavior-based data (500) of an individual intrinsic behavior of the user detected by means of the first communication system (100), the data (500) encompassing movement data of a gross motor-related movement of the current user (1) of the first communication system (100), which was detected using a movement sensor for detecting movements of the first communication system (100);
- generating a classification result (600) from the first interim result and a second interim result, which was generated by the second communication system (156), using the data (500) detected by means of the second communication system (156);
- checking the classification result (600) according to a predefined examination criterion (800); and
- activating the device (152) by means of a control signal via the second interface (142) as a function of whether the classification result (600) meets the examination criterion,
the user (1) being authenticated if the classification result (600) meets the examination criterion.

17. A system for authenticating a current user (1) of a first communication system (100) with respect to a second communication system (156) by means of a behavior-based authentication carried out using the first communication system (100) and the second communication system (156),
the system comprising the first communication system (100), the second communication system (156), and at least one activatable device (152),
the first communication system (100) being a mobile, portable communication system carried by the user and comprising a first interface (140), which is configured to communicate with the second communication system (156),
the first communication system (100) comprising a first sensor (110), which is designed to detect data (500), the data (500) encompassing behavior-based data of an individual intrinsic behavior of the user (1), the first sensor, serving as a movement sensor for detecting movements of the first communication system (100), being configured to detect movement data, serving as data (500), of a gross motor-related movement of the current user (1) of the first communication system (100),
the second communication system (156) comprising a second interface (141) and a third interface (142), the second interface (141) being configured to communicate with the first communication system (100) via the first interface (140),
the second communication system (156) being communicatively connected to the at least one device (152) via the third interface (142),
the second communication system (156) comprising a second sensor (110), which is designed to detect data (500) of the user (1),
the system carrying out the following steps:
- receiving a first interim result of the behavior-based authentication from the first communication system (100) by the second communication system (156) via the first interface (140) and the second interface (141), the first interim result having been generated by the first communication system (100), using the data (500) detected by means of the first communication system (100);
- generating a classification result (600) by the second communication system (156) from the first interim result and a second interim result, which was generated by the second communication system (156), using the data (500) generated by means of the second communication system (156);
- checking the classification result (600) according to a predefined examination criterion (800) by the second communication system (156); and
- activating the device (152) by means of a control signal by the second communication system (156) via the third interface (142) as a function of whether the classification result (600) meets the examination criterion,
the user (1) being authenticated if the classification result (600) meets the examination criterion.

## Revendications

1. Procédé d'authentification d'un utilisateur (1) actuel d'un premier système de communication (100) vis-à-vis d'un deuxième système de communication (156) au moyen d'une authentification basée sur le comportement, laquelle est exécutée moyennant l'emploi du premier système de communication (100) et du deuxième système de communication (156),
dans lequel le premier système de communication (100) est un système de communication portable mobile emporté par l'utilisateur et comprend une première interface (140), laquelle est conçue pour communiquer avec le deuxième système de communication (156),
dans lequel le premier système de communication (100) comprend un premier capteur (110), lequel est conçu pour saisir des données (500), où les données (500) comprennent des données basées sur le comportement d'un comportement intrinsèque individuel de l'utilisateur (1), où le premier capteur est conçu comme un capteur de mouvements permettant la détection de mouvements du premier système de communication (100) sous forme de données (500) de données de mouvement d'un mouvement de motricité grossière de l'utilisateur (1) actuel du premier système de communication (100),
dans lequel le deuxième système de communication (156) comprend une deuxième interface (141) et une troisième interface (142), où la deuxième interface (141) est conçue pour communiquer avec le premier système de communication (100) par le biais de la première interface (140),
dans lequel la troisième interface (142) est conçue pour communiquer avec au moins un dispositif (152) pouvant être commandé,
dans lequel le deuxième système de communication (156) comprend un deuxième capteur (110), lequel est conçu pour détecter des données (500) de l'utilisateur (1),
le procédé comprenant en outre :
- la réception d'un premier résultat intermédiaire de l'authentification basée sur le comportement à partir du premier système de communication (100) par le deuxième système de communication (156) par le biais de la première interface (140) et de la deuxième interface (141), où le premier résultat intermédiaire a été généré par le premier système de communication (100) moyennant l'emploi des données (500) basées sur le comportement saisies par le premier système de communication (100),
- la génération d'un résultat de classification (600) par le deuxième système de communication (156) à partir du premier résultat intermédiaire et d'un deuxième résultat intermédiaire, lequel a été généré par le deuxième système de communication (156) moyennant l'emploi des données (500) saisies par le deuxième système de communication (156),
- l'évaluation du résultat de classification (600) selon un critère de vérification (800) prédéfini par le deuxième système de communication (156),
- le démarrage du dispositif (152) au moyen d'un signal de commande par le deuxième système de communication (156) par le biais de la troisième interface (142) dépendant du fait que le résultat de classification (600) ait satisfait au critère de vérification,
dans lequel l'utilisateur (1) est authentifié dans le cas où le résultat de classification (600) satisfait au critère de vérification.

2. Procédé selon la revendication 1, dans lequel le premier résultat intermédiaire comprend les données (500) détectées par le premier système de communication (100) et qu'il y a une évaluation des données (500) saisies pour la génération du résultat de classification (600) par le deuxième système de communication (156).

3. Procédé selon la revendication 1, dans lequel le premier résultat intermédiaire comprend une première valeur pour une probabilité que l'utilisateur (1) actuel est un utilisateur enregistré dans le premier système de communication (100) et dans lequel le deuxième résultat intermédiaire comprend une deuxième valeur pour une probabilité que l'utilisateur (1) actuel est un utilisateur enregistré dans le deuxième système de communication (156).

4. Procédé selon la revendication 3, dans lequel la génération du résultat de classification (600) comprend la formation d'une valeur moyenne à partir du premier résultat intermédiaire et du deuxième résultat intermédiaire.

5. Procédé selon l'une des revendications précédentes, dans lequel le premier système de communication (100) et le deuxième système de communication (156) présentent respectivement un processeur (130) et une mémoire interne (120), où le premier système de communication (100) et/ou le deuxième système de communication(156) présentent un module de classification de motricité grossière (200),
dans lequel le module de classification de motricité grossière (200) est entraîné pour la reconnaissance d'un modèle de mouvement de motricité grossière générique à l'aide d'ensembles de données d'entraînement d'une cohorte d'utilisateurs, où le module de classification de motricité grossière (200) est exécuté par le processeur (130) du premier et/ou du deuxième système de communication (100),
dans lequel l'authentification basée sur le comportement présente les étapes suivantes :
a) l'exécution répétée des étapes suivantes :
i. la saisie des données (500) par le premier et/ou le deuxième capteur (110), où les données (500) sont des données de mouvement du mouvement de motricité grossière de l'utilisateur (1) actuel,
ii. l'entrée des données (500) dans le module de classification de motricité grossière (200),
iii. la génération d'au moins une première valeur de confiance (540) par le module de classification de motricité grossière (200),
iv. le stockage de l'au moins une première valeur de confiance (540) dans la mémoire (120) du premier et/ou du deuxième système de communication (100, 156),
b) l'accès à la mémoire (120) du premier et/ou du deuxième système de communication (100, 156) afin de lire au moins une des premières valeurs de confiance (540) stockées à partir de la mémoire (120),
dans lequel l'au moins une première valeur de confiance (540) est employée pour la génération du résultat de classification (600).

6. Procédé selon la revendication 5, dans lequel le premier système de communication (100) et/ou le deuxième système de communication (156) présentent un module de classification de comportement d'application (200),
dans lequel le module de classification de comportement d'application (200) est exécuté par le processeur (130) du premier système de communication (100) et/ou du deuxième système de communication (156),
dans lequel l'authentification basée sur le comportement comprend en outre :
a) l'exécution répétée des étapes suivantes :
i. la saisie de données (500) sous forme de données d'application, où les données d'application comprennent un comportement d'utilisation d'application de l'utilisateur (1) actuel,
ii. la saisie des données d'application dans le module de classification de comportement d'application (200),
iii. la génération d'au moins une deuxième valeur de confiance (540) par le module de classification de comportement d'application (200),
iv. le stockage de l'au moins une deuxième valeur de confiance (540) dans la mémoire (120) du premier système de communication (100) et/ou du deuxième système de communication (156),
b) l'accès à la mémoire (120) du premier système de communication (100) et/ou du deuxième système de communication (156) afin de lire au moins une des deuxièmes valeurs de confiance (540) stockées à partir de la mémoire (120),
dans lequel l'au moins une deuxième valeur de confiance (540) est employée pour la génération du résultat de classification (600),
et/ou dans lequel le premier système de communication (100) et/ou le deuxième système de communication (156) présente un module de classification de motricité fine (200),
dans lequel le module de classification de motricité fine (200) est conçu pour une classification de données (500) et est entraîné pour la reconnaissance d'un mouvement de motricité fine d'un utilisateur enregistré, où le module de classification de motricité fine (200) est exécuté par le processeur (130) du premier système de communication (100) et/ou du deuxième système de communication (156),
dans lequel l'authentification basée sur le comportement comprend en outre :
a) l'exécution répétée des étapes suivantes :
i. la saisie des données (500) sous forme de données de motricité fine, par un capteur (110), où les données de motricité fine sont des données de mouvement du mouvement de motricité fine de l'utilisateur (1) actuel,
ii. l'entrée des données de motricité fine dans le module de classification de motricité fine (200),
iii. la génération d'au moins une troisième valeur de confiance (540) par le module de classification de motricité fine (200),
iv. le stockage de l'au moins une troisième valeur de confiance (540) dans la mémoire (120) du premier système de communication (100) et/ou du deuxième système de communication (156),
b) l'accès à la mémoire (120) du premier système de communication (100) et/ou du deuxième système de communication (156) afin de lire au moins une des troisièmes valeurs de confiance (540) stockées à partir de la mémoire (120),
dans lequel l'au moins une troisième valeur de confiance (540) est employée pour la génération du résultat de classification (600).

7. Procédé selon l'une des revendications 5 à 6, dans lequel l'authentification basée sur le comportement comprend en outre l'entraînement du module de classification de motricité grossière (200) avec les donnés de motricité grossière de l'utilisateur (1) actuel, où le module de classification de motricité grossière (200) est entraîné par rapport au modèle de mouvement de motricité grossière spécifique à l'utilisateur de l'utilisateur actuel à la condition, qu'en fonction du résultat de classification (600), l'utilisateur (1) actuel est l'utilisateur enregistré dans le premier système de communication (100) et/ou dans le deuxième système de communication (156), et/ou
l'authentification basée sur le comportement comprend en outre l'entraînement du module de classification de comportement d'application (200) avec les donnés d'application de l'utilisateur (1) actuel, où le module de classification de comportement d'application (200) est entraîné par rapport au modèle de comportement d'application spécifique à l'utilisateur de l'utilisateur (1) actuel à la condition, qu'en fonction du résultat de classification (600), l'utilisateur (1) actuel est l'utilisateur enregistré dans le premier système de communication (100) et/ou dans le deuxième système de communication (156), et/ou
l'authentification basée sur le comportement comprend en outre l'entraînement du module de classification de motricité fine (200) avec les donnés de motricité fine de l'utilisateur (1) actuel, où le module de classification de motricité fine (200) est entraîné par rapport au modèle de mouvement de motricité fine spécifique à l'utilisateur de l'utilisateur (1) actuel à la condition, qu'en fonction du résultat de classification (600), l'utilisateur (1) actuel est l'utilisateur enregistré dans le premier système de communication (100) et/ou dans le deuxième système de communication (156).

8. Procédé selon l'une des revendications 5 à 7, dans lequel au moins un premier modèle sous la forme d'une première fonction modèle (210) et au moins un premier ensemble de données de comparaison (220) sont stockés dans la mémoire (120) du premier système de communication (100) et/ou du deuxième système de communication (156),
dans lequel le premier ensemble de données de comparaison (220) comprend une multiplicité de données de motricité grossière, où, à partir de la multiplicité des données de motricité grossière du premier ensemble de données de comparaison (220), au moins un premier paramètre de comparaison (230) est calculé,
dans lequel le module de classification de motricité grossière (200), suite à l'entrée des données de motricité grossière, exécute les étapes suivantes :
a) la comparaison des données de motricité grossière saisies avec l'au moins une première fonction modèle (210),
b) l'association des données de motricité grossière au premier modèle associé à la première fonction modèle (210) et l'obtention d'au moins un premier paramètre de classification (230) correspondant au premier modèle dans le cas où les données de motricité grossière peuvent être associées au premier modèle,
dans lequel la génération de l'au moins une première valeur de confiance (540) comprend un calcul d'une valeur de confiance (540) pour chaque premier paramètre de classification (230) par une comparaison de l'au moins un premier paramètre de classification (230) avec le premier paramètre de comparaison (230) respectif du premier ensemble de données de comparaison (220),
et dans lequel l'entraînement comprend un ajout des données de motricité grossière saisies au premier ensemble de données de comparaison (220).

9. Procédé selon la revendication 6 à la revendication 8, dans lequel au moins un deuxième modèle sous la forme d'une deuxième fonction modèle (210) et au moins un deuxième ensemble de données de comparaison (220) sont stockés dans la mémoire (120) du premier système de communication (100) et/ou du deuxième système de communication (156),
dans lequel le deuxième ensemble de données de comparaison (220) comprend une multiplicité de données d'application, où, à partir de la multiplicité des données d'application du deuxième ensemble de données de comparaison (220), au moins un deuxième paramètre de comparaison (230) est calculé,
dans lequel le module de classification de comportement d'application (200), suite à l'entrée des données d'application, exécute les étapes suivantes :
a) la comparaison des données d'application saisies avec l'au moins une deuxième fonction modèle (210),
b) l'association des données d'application au deuxième modèle associé à la deuxième fonction modèle (210) et l'obtention d'au moins un deuxième paramètre de classification (520) correspondant au deuxième modèle dans le cas où les données d'application peuvent être associées à l'au moins un deuxième modèle,
dans lequel la génération de l'au moins une deuxième valeur de confiance (540) comprend un calcul d'une valeur de confiance (540) pour chaque deuxième paramètre de classification (230) par une comparaison de l'au moins un deuxième paramètre de classification (230) avec le deuxième paramètre de comparaison (230) respectif du deuxième ensemble de données de comparaison (220),
et dans lequel l'entraînement comprend un ajout des données d'application saisies au deuxième ensemble de données de comparaison (220),
et/ou dans lequel au moins un troisième modèle sous la forme d'une troisième fonction modèle (210) et au moins un troisième ensemble de données de comparaison (220) sont stockés dans la mémoire (120) du premier système de communication (100) et/ou du deuxième système de communication (156),
dans lequel le premier ensemble de données de comparaison (220) comprend une multiplicité de données de motricité fine, où, à partir de la multiplicité des données de motricité fine du premier ensemble de données de comparaison (220), au moins un premier paramètre de comparaison (230) est calculé,
dans lequel le module de classification de comportement de motricité fine (200), suite à l'entrée des données de motricité fine, exécute les étapes suivantes :
a) la comparaison des données de motricité fine saisies avec l'au moins une troisième fonction modèle (210),
b) l'association des données de motricité fine au troisième modèle associé à la troisième fonction modèle (210) et l'obtention d'au moins un troisième paramètre de classification (520) correspondant au troisième modèle dans le cas où les données de motricité fine peuvent être associées à l'au moins un troisième modèle,
dans lequel la génération de l'au moins une troisième valeur de confiance (540) comprend un calcul d'une valeur de confiance (540) pour chaque troisième paramètre de classification (230) par une comparaison de l'au moins un troisième paramètre de classification (230) avec le troisième paramètre de comparaison (230) respectif du troisième ensemble de données de comparaison (220),
et dans lequel l'entraînement comprend un ajout des données de motricité fine au troisième ensemble de données de comparaison (220).

10. Procédé selon l'une des revendications précédentes, dans lequel le critère de vérification (800) est satisfait dans le cas où :
- l'au moins un résultat de classification (600) dépasse une valeur limite prédéfinie par le critère de vérification (800), et/ou
- une ancienneté maximale de l'au moins un résultat de classification (600) prédéfini par le critère de vérification (800) n'est pas dépassée, et/ou
- il y a un nombre minimal de résultats de classification (600), lequel dépasse la valeur limite.

11. Procédé selon l'une des revendications 6 à 10, dans lequel, lors de la génération du résultat de classification (600), l'au moins une deuxième valeur de confiance (540) n'est prise en compte que si le module de classification de motricité grossière (200) a reconnu un mouvement de motricité de l'utilisateur (1) actuel dans les données (500) dans une des étapes précédentes,
dans lequel, lors d'évaluation du résultat de classification (600), l'au moins une troisième valeur de confiance (540), n'est prise en compte que si un mouvement de motricité grossière de l'utilisateur (1) actuel a été reconnu dans les données (500) dans une des étapes précédentes.

12. Procédé selon l'une des revendications 6 à 11, dans lequel le résultat de classification (600) comprend l'au moins une première valeur de confiance (540), l'au moins une deuxième valeur de confiance (540) et/ou l'au moins une troisième valeur de confiance (540), et où les valeurs de confiance (540) sont exploitées pour donner une valeur de confiance résultante par le processeur (130) du premier système de communication (100) et/ou du deuxième système de communication (156), où la valeur de confiance résultante indique une probabilité avec laquelle l'utilisateur (1) actuel est identifié en tant qu'utilisateur enregistré.

13. Procédé selon l'une des revendications 8 à 12, dans lequel les valeurs de confiance (540) individuelles des premier, deuxième et/ou troisième paramètres de classification (520) sont pourvus respectivement d'un facteur de pondération lors de l'évaluation, où les facteurs de pondération sont associés à la valeur de confiance (540) respective.

14. Procédé selon l'une des revendications 5 à 13, dans lequel plusieurs utilisateurs (1) sont enregistrés sur le premier système de communication (100) et/ou le deuxième système de communication (156) et un résultat de classification (600) est généré pour chaque utilisateur (1), où le premier système de communication (100) et/ou le deuxième système de communication (156) présentent un module de reconnaissance d'utilisateur, où le module de reconnaissance d'utilisateur est conçu pour identifier l'utilisateur (1) actuel comme étant un des utilisateurs enregistrés, où le module de reconnaissance d'utilisateur est exécuté par le processeur (130) du premier système de communication (100) et/ou le deuxième système de communication (156).

15. Procédé selon la revendication 14, dans lequel le module de reconnaissance d'utilisateur est conçu pour reconnaitre un changement d'utilisateur à l'aide du mouvement de motricité grossière et/ou fine,
dans lequel le module de reconnaissance d'utilisateur est conçu pour reconnaitre un mouvement de motricité grossière et/ou fine de la désactivation et/ou de l'activation du premier système de communication (100) et est entraîné pour une reconnaissance de modèles de mouvements spécifiques à un utilisateur dans les données (500), et/ou des données (510), où le module de reconnaissance d'utilisateur est exécuté par le processeur (130) du premier système de communication (100) et/ou du deuxième système de communication (156),
dans lequel l'authentification basée sur le comportement comprend en outre :
a) l'exécution répétée des étapes :
- d'entrée des données (500) dans le module de reconnaissance d'utilisateur,
- de génération d'au moins une quatrième valeur de confiance (600) par le module de reconnaissance d'utilisateur,
- de stockage de l'au moins une quatrième valeur de confiance (600) dans la mémoire (120) du premier système de communication (100) et/ou du deuxième système de communication (156),
b) l'accès à la mémoire (120) du premier système de communication (100) et/ou du deuxième système de communication (156) afin de lire au moins une des quatrièmes valeurs de confiance (540) stockées à partir de la mémoire (120),
c) l'évaluation de l'au moins une quatrième valeur de confiance (540) afin de vérifier si un changement d'utilisateur a eu lieu,
d) le rejet des valeurs de confiance antérieures dans le cas où un changement d'utilisateur a eu lieu.

16. Deuxième système de communication (156) pour l'authentification d'un utilisateur (1) actuel d'un premier système de communication (100) vis-à-vis d'un deuxième système de communication (156) au moyen d'une authentification basée sur le comportement, laquelle est exécutée moyennant l'emploi du premier système de communication (100), lequel est emporté par l'utilisateur sous forme d'un système de communication portable mobile, et du deuxième système de communication (156),
dans lequel le deuxième système de communication (156) comprend une première interface (141) et une deuxième interface (142), où la première interface (141) est conçue pour communiquer avec le premier système de communication (100),
dans lequel le premier système de communication (156) est relié en communication avec au moins un dispositif (152) pouvant être commandé, par le biais de la deuxième interface (142),
dans lequel le deuxième système de communication (156) comprend un premier capteur (110), lequel est conçu pour saisir des données (500) de l'utilisateur (1),
dans lequel le deuxième système de communication exécute les étapes suivantes :
- la réception d'un premier résultat intermédiaire de l'authentification basée le comportement par le premier système de communication (100), par le biais de la première interface (141), où le premier résultat intermédiaire a été généré par le premier système de communication (100) moyennant l'emploi des données (500) basées sur le comportement saisies au moyen du premier système de communication (100) d'un comportement intrinsèque individuel de l'utilisateur, où les données (500) comprennent des données de mouvement d'un mouvement de motricité grossière de l'utilisateur (1) actuel du premier système de communication (100), lesquelles ont été détectées pour la détection de mouvements du premier système de communication (100) moyennant l'emploi d'un capteur de mouvement,
- la génération d'un résultat de classification (600) à partir du premier résultat intermédiaire et d'un deuxième résultat intermédiaire, lequel a été généré par le deuxième système de communication (156) et moyennant l'emploi des données (500) saisies au moyen du deuxième système de communication (156),
- la vérification du résultat de classification (600) selon un critère de vérification (800) prédéfini,
- le démarrage du dispositif (152) au moyen d'un signal de commande par le biais de la deuxième interface (142), dépendant du fait que le résultat de classification (600) ait satisfait au critère de vérification,
dans lequel l'utilisateur (1) est authentifié dans le cas où le résultat de classification (600) satisfait au critère de vérification.

17. Système d'authentification d'un utilisateur (1) actuel d'un premier système de communication (100) vis-à-vis d'un deuxième système de communication (156) au moyen d'une authentification basée sur le comportement, laquelle est exécutée moyennant l'emploi du premier système de communication (100) et du deuxième système de communication (156),
où le système comprend le premier système de communication (100), le deuxième système de communication (156) et au moins un dispositif (152) pouvant être commandé,
dans lequel le premier système de communication (100) est un système de communication portable mobile transporté par l'utilisateur et comprend une première interface (140), laquelle est conçue pour communiquer avec le deuxième système de communication (156),
dans lequel le premier système de communication (100) comprend un premier capteur (110), lequel est conçu pour saisir des données (500), où les données (500) comprennent des données basées sur le comportement d'un comportement intrinsèque individuel de l'utilisateur (1), où le premier capteur est conçue comme un capteur de mouvements permettant la détection de mouvements du premier système de communication (100),sous forme de données (500) de données de mouvement d'un mouvement de motricité grossière de l'utilisateur (1) actuel du premier système de communication (100),
dans lequel le deuxième système de communication (156) comprend une deuxième interface (141) et une troisième interface (142), où la deuxième interface (141) est conçue pour communiquer avec le premier système de communication (100) par le biais de la première interface (140),
dans lequel le deuxième système de communication (156) est relié en communication avec l'au moins un dispositif (152) par le biais de la troisième interface (142),
dans lequel le deuxième système de communication (156) comprend un deuxième capteur (110), lequel est conçu pour détecter des données (500) de l'utilisateur (1),
le système exécutant les étapes suivantes :
- la réception d'un premier résultat intermédiaire de l'authentification basée sur le comportement à partir du premier système de communication (100) par le deuxième système de communication (156), par le biais de la première interface (140) et de la deuxième interface (141), où le premier résultat intermédiaire a été généré par le premier système de communication (100) et moyennant l'emploi des données (500) basées sur le comportement saisies par le premier système de communication (100),
- la génération d'un résultat de classification (600) par le deuxième système de communication (156) à partir du premier résultat intermédiaire et d'un deuxième résultat intermédiaire, lequel a été généré par le deuxième système de communication (156) et moyennant l'emploi des données (500) saisies au moyen du deuxième système de communication (156),
- la vérification du résultat de classification (600) selon un critère de vérification (800) prédéfini par le deuxième système de communication (156),
- le démarrage du dispositif (152) au moyen d'un signal de commande par le deuxième système de communication (156), par le biais de la troisième interface (142) dépendant du fait que le résultat de classification (600) ait satisfait au critère de vérification,
dans lequel l'utilisateur (1) est authentifié dans le cas où le résultat de classification (600) satisfait au critère de vérification.
